# EUROPÄISCHE PATENTANMELDUNG

(11) **EP 0 872 523 A2**
(43) Veröffentlichungstag der Anmeldung: **21.10.1998**
(21) Anmeldenummer: 98106359.7
(22) Anmeldetag: 07.04.1998
(51) Int. Cl.: C09B 62/01, C09B 62/03, C09B 62/09, C09B 62/25, C09B 62/41, C09B 62/513

(54) **Faseraktive Azofarbstoffe, Verfahren zu ihrer Herstellung und ihre Verwendung**

(30) Priorität: 15.04.1997 DE 19715603
(71) Anmelder: DyStar Textilfarben GmbH & Co. Deutschland KG, 60318 Frankfurt am Main (DE)
(72) Erfinder: Schumacher, Christian, Dr., 65779 Kelkheim (DE)

(57) **Zusammenfassung**

Es werden Azofarbstoffe beschrieben, die zwei Azochromophore enthalten und über harnstoffgruppenhaltige Brückenglieder miteinander verbunden sind und bevorzugt faserreaktive Gruppen enthalten können. Sie dienen zum Färben von hydroxy- und/oder carbonamidgruppenhaltigen Materialien, insbesondere Fasermaterialien, wie Cellulosefasermaterialien, beispielsweise Baumwolle, und Wolle, Seide und synthetischen Polyamidfasermaterialien, und liefern farbstarke, echte Färbungen.

## Beschreibung

Die Technik des Färbens führt zu immer höheren Anforderungen. In neuerer Zeit sind Farbstoffe gesucht, die auch unter salzarmen Färbebedingungen Färbungen mit hohen Fixierquoten und guten Echtheiten bei gleichzeitig guten Waschechtheiten ergeben. Gleichzeitig müssen weitere Eigenschaften, wie eine gute Ätzbarkeit, beispielsweise im Küpen-Ätzdruck, gegeben sein.

Mit der vorliegenden Erfindung wurden nunmehr solche Azofarbstoffe gefunden, die zwei Azochromophore enthalten und über harnstoffgruppenhaltige Brückenglieder miteinander verbunden sind und bevorzugt eine oder mehrere faserreaktive Gruppen haben können. Diese Farbstoffe entsprechen der allgemeinen Formel (1) 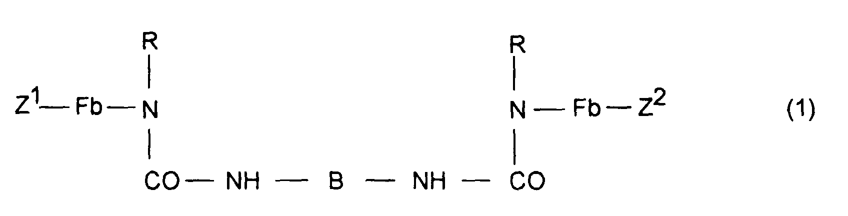 in welcher bedeuten:
- Fb: ist jedes, zueinander gleich oder voneinander verschieden, bevorzugt zueinander gleich, der Rest eines sulfogruppenhaltigen Monoazo-, Disazo- oder Trisazofarbstoffes oder der Rest eines sulfogruppenhaltigen Metallkomplex-Monoazo- oder -Disazofarbstoffes, wie eines sulfogruppenhaltigen 1:1-Kupferkomplex-Monoazo- oder -Disazofarbstoffes;
- R: ist jedes, zueinander gleich oder voneinander verschieden, Wasserstoff, Methyl oder Ethyl, bevorzugt Wasserstoff;
- B: ist ein aus einem gegebenenfalls eine oder zwei olefinische Bindungen enthaltenden aliphatischen und/oder aromatischen Kohlenwasserstoff bestehendes Brückenglied, das 1 oder 2 Heterogruppen enthalten kann, und ist beispielsweise Alkylen von 1 bis 8 C-Atomen, wie Methylen, Ethylen, n-Propylen, iso-Propylen und n-Hexylen, oder Alkylen von 2 bis 8 C-Atomen, das durch 1 oder 2 Heterogruppen, wie beispielsweise Gruppen der Formeln -O- und/oder -NH- , unterbrochen ist, oder ist beispielsweise ein Rest der allgemeinen Formel (2a), (2b), (2c), (2d) oder (2e) 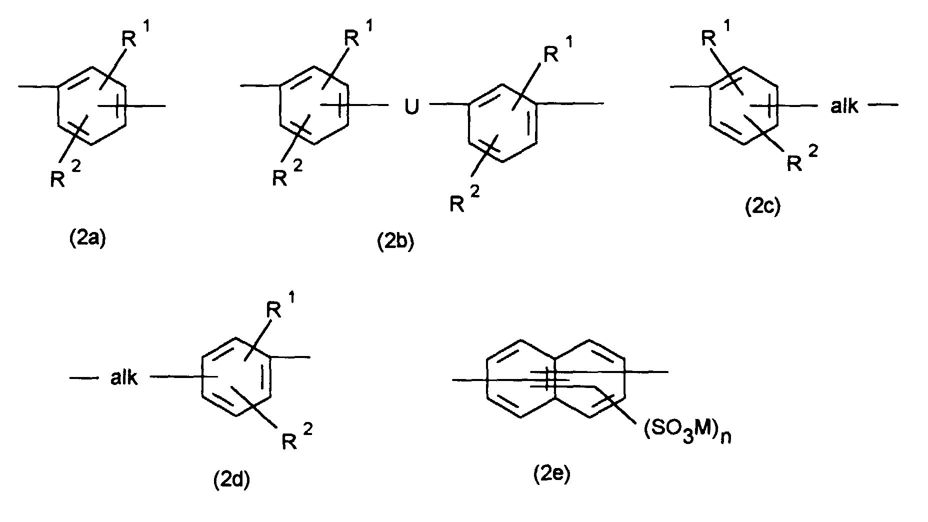 in welchen
- R¹: Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Hydroxy, Sulfo, Carboxy, Cyano, Nitro, Aminocarbonyl, Alkanoylamino von 2 bis 5 C-Atomen, wie Acetylamino und Propionylamino, Benzoylamino, Ureido, Alkylcarbonyl von 2 bis 5 C-Atomen, wie Acetyl und Propionyl, oder Halogen, wie Chlor, Brom oder Fluor, ist,
- R²: Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Sulfo, Carboxy, Aminocarbonyl oder Halogen, wie Chlor, Brom oder Fluor, ist,
- U: eine direkte kovalente Bindung ist oder Methylen, Ethylen, Vinyliden oder eine Gruppe der Formel -NH- , -NH-CH₂-, -CO-, -CH₂-NH-, -NH-CH₂-CH₂-, -CH₂-CH₂-NH-, -O-, -O-CH₂-, -O-CH₂-CH₂-, -CH₂-O-, -CH₂-CH₂-O-, -NH-CO-NH-, -NH-CO-, -NH-CO-O-, -CO-NH- oder -O-CO-NH- ist,
- alk: Alkylen von t bis 8 C-Atomen oder Alkylen von 2 bis 8 C-Atomen ist, das durch 1 oder 2 Heterogruppen, wie -O- und/oder -NH-, unterbrochen ist,
- M: Wasserstoff oder ein Alkalimetall, wie Natrium, Kalium oder Lithium, oder das Moläquivalent eines Erdalkalimetalls, wie des Calciums, und bevorzugt Wasserstoff oder ein Alkalimetall ist und
- n: die Zahl Null, 1 oder 2 ist (wobei im Falle von n gleich Null diese Gruppe für Wasserstoff steht);
- Z¹: ist eine über eine Aminogruppe von Fb an Fb gebundene faserreaktive Gruppe aus der heterocyclischen Reihe, wie insbesondere der Halogen-triazin-, Halogen-pyrimidin- oder Dichlorchinoxazin-Reihe, oder eine faserreaktive Gruppe aus der Vinylsulfonreihe oder der Dihalogenacryloylamino-Reihe oder eine faserreaktive Gruppierung, die aus einer Kombination einer faserreaktiven Gruppe aus der heterocyclischen Reihe und der Vinylsulfonreihe oder aus einem substituierten Triazinrest mit einer faserreaktiven Gruppe der Vinylsulfonreihe besteht, oder ist eine Gruppierung mit einem β-Hydroxyethylsulfonyl-Rest und/oder einem hydroxy- oder cyanoaminogruppenhaltigen Triazin- oder einem hydroxygruppenhaltigen Pyrimidinrest, wobei der heterocyclische Rest jeweils über eine Aminogruppe von Fb an Fb gebunden ist;
- Z²: ist eine über eine Aminogruppe von Fb an Fb gebundene faserreaktive Gruppe aus der heterocyclischen Reihe, wie insbesondere der Halogen-triazin-, Cyanoamino-triazin, Halogen-pyrimidin- oder Dichlorchinoxazin-Reihe, oder eine faserreaktive Gruppe aus der Vinylsulfonreihe oder der Dihalogenacryloylamino-Reihe oder eine faserreaktive Gruppierung, die aus einer Kombination von faserreaktiven Gruppen aus der heterocyclischen Reihe und der Vinylsulfonreihe oder einem substituierten Triazinrest mit einer faserreaktiven Gruppe der Vinylsulfonreihe besteht, wobei der heterocyclische Rest jeweils über eine Aminogruppe von Fb an Fb gebunden ist.

Die Bedeutung 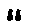 Alkylen 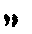 schließt geradkettige und verzweigte Alkylengruppen ein.

Sowohl in den oben angegebenen allgemeinen Formeln als auch in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder zueinander verschiedene Bedeutungen haben.

Die vorstehend oder nachstehend genannten Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M ,
in welchen M die obengenannte Bedeutung hat.

Die Farbstoffreste Fb besitzen eine oder mehrere, wie 2 bis 6, Sulfogruppen. Sie können weitere bei organischen Farbstoffen übliche Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Alkanoylaminogruppen von 2 bis 5 C-Atomen, wie die Acetylamino- und Propionylaminogruppe; gegebenenfalls durch Sulfo, Carboxy, Methyl, Ethyl, Methoxy, Ethoxy und/oder Chlor substituierte Benzoylaminogruppen; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-(C₁-C₄-Alkyl)-N-phenylamino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenylsulfamoyl-, Ureido-, Hydroxy-, Carboxy-, Sulfomethyl- und Sulfogruppen.

Wichtige Reste Fb sind solche eines sulfogruppenhaltigen Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe und eines sulfogruppenhaltigen 1:1-Kupferkomplex-Azofarbstoffes der Benzol- und Naphthalinreihe.

Reste Fb sind beispielsweise solche der allgemeinen Formeln (3a), (3b) und (3c)

- D¹ - N = N - (E - N = N)ᵥ - K² - N(R) - (3a)

- D² - N = N - (E - N = N)ᵥ - K¹ - (3b)

- N(R) - D² - N = N - (E - N = N)ᵥ - K² - N(R) - (3c)

und der davon abgeleiteten Schwermetallkomplex-Verbindungen, wie
1:1-Kupferkomplex-Verbindungen,
in welchen
- R: eine der obengenannten Bedeutungen hat,
- D¹: der Rest einer Diazokomponente der Benzol- oder Naphthalinreihe ist,
- D²: der Rest einer Diazokomponente der Diaminobenzol- oder Diaminonaphthalin-Reihe ist,
- E: der Rest einer diazotierbaren und kupplungsfähigen Mittelkomponente der Benzol- oder Naphthalinreihe bedeutet,
- K¹: der Rest einer Kupplungskomponente der Benzol- oder Naphthalin-Reihe oder aus der heterocyclischen Reihe, wie der Pyrazolon-, 6-Hydroxypyridon(2)- oder Acetessigsäurearylamid-Reihe, ist,
- K²: der Rest einer Kupplungskomponente der Anilin-, Aminonaphthalin-, Diaminobenzol-, Acetessigsäure-(aminoaryl)-amid-, 1-(Aminophenyl)-pyrazolon- oder 1-(Aminonaphthyl)-pyrazolon-Reihe ist,
- wobei: D¹, D², E, K¹ und K² einen oder mehrere der für Fb genannten Substituenten enthalten kann und zusammen mindestens eine, bevorzugt mindestens zwei, Sulfogruppen besitzen, und wobei die (eine) an D² bzw. K² stehende Aminogruppe Bestandteil der mit dem Rest B verbundenen Harnstoffgruppe ist oder, falls Z¹ oder Z² ein heterocyclischer faserreaktiver Rest ist, dieser an diese Aminogruppe von D² oder K² gebunden ist, und
- v: die Zahl Null oder 1 ist.

Bevorzugt sind weiterhin als Reste Fb solche der allgemeinen Formeln (3d) und (3e)

- D¹ - N = N - K^{o} - N = N - D² - N(R) - (3d)

- N(R) - D² - N = N - K^{o} - N = N - D² - N(R) - (3e)

in welchen
- R, D¹ und D²: die obengenannten Bedeutungen haben und
- K^{o}: den Rest einer bivalenten Kupplungskomponente der Naphthalinreihe darstellt,
- wobei: D¹, D² und K^{o} zusammen mindestens eine Sulfogruppe enthalten.

Reste Fb der allgemeinen Formeln (3d) und (3e) sind insbesondere solche der allgemeinen Formel (3f) 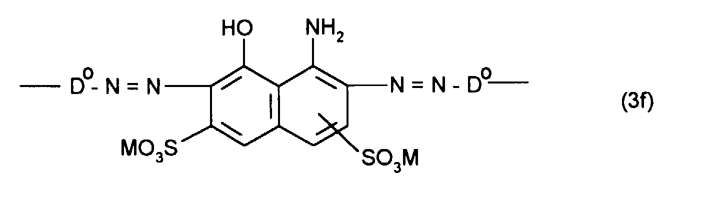 in welcher M die obengenannte Bedeutung besitzt und das eine D^{o} die Bedeutung von D¹ und das andere D^{o} die Bedeutung von D² hat oder beide D^{o} die Bedeutung von D² haben, wobei im Falle von D^{o} gleich D² das D^{o} noch eine Gruppe -N(R)- mit R der obengenannten Bedeutung enthält.

Reste Fb von 1:1-Kupferkomplex-Azofarbstoffen sind beispielsweise solche der allgemeinen Formeln (3g) bis (3j) 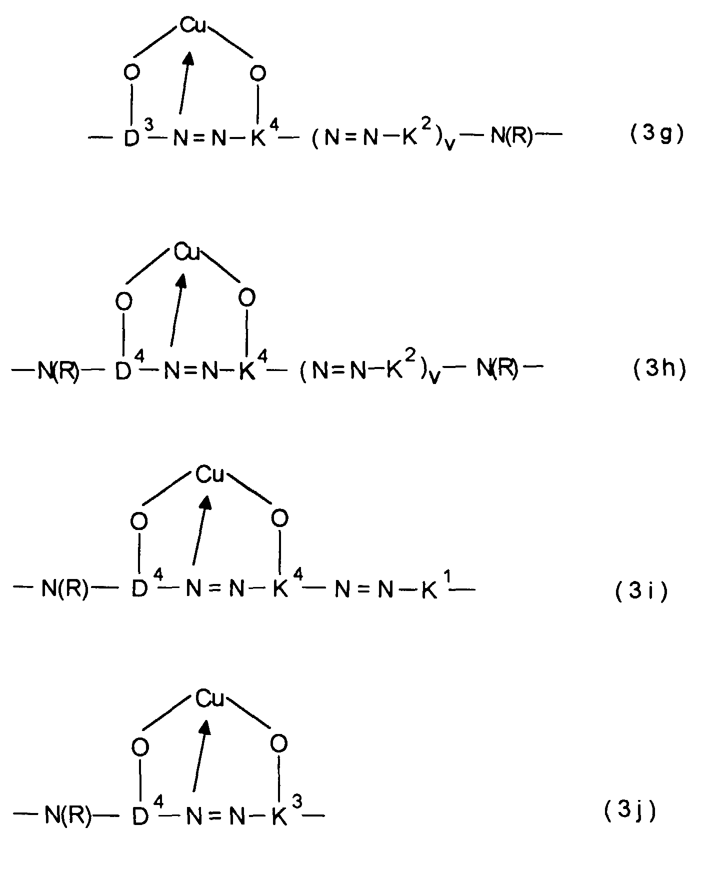 in welchen
- R, K² und v: die obengenannten Bedeutungen haben,
- D³: für den Rest einer dem Rest D¹ entsprechenden Diazokomponente steht, die in ortho-Stellung zur Azogruppe die kupferkomplexbindende Oxigruppe enthält,
- D⁴: für den Rest einer dem Rest D² entsprechenden Diazokomponente steht, die in ortho-Stellung zur Azogruppe die kupferkomplexbindende Oxigruppe enthält,
- K³: für den Rest einer dem Rest K¹ entsprechenden Kupplungskomponente steht, die in ortho-Stellung oder vicinaler Stellung zur Azogruppe die kupferkomplexbindende Oxigruppe besitzt, und
- K⁴: für den Rest einer dem Rest K² entsprechenden Kupplungskomponente steht, die in ortho-Stellung oder vicinaler Stellung zur Azogruppe die kupferkomplexbindende Oxigruppe besitzt, wobei im Falle von v gleich Null K⁴ mit einem N-Atom einer der Harnstoffgruppen verbunden ist.

Die Reste Z¹ und Z² werden nachfolgend summarisch als Z bezeichnet.

Von den Azofarbstoffen der allgemeinen Formel (1) sind solche bevorzugt, die den allgemeinen Formeln (1A) bis (1G) entsprechen: 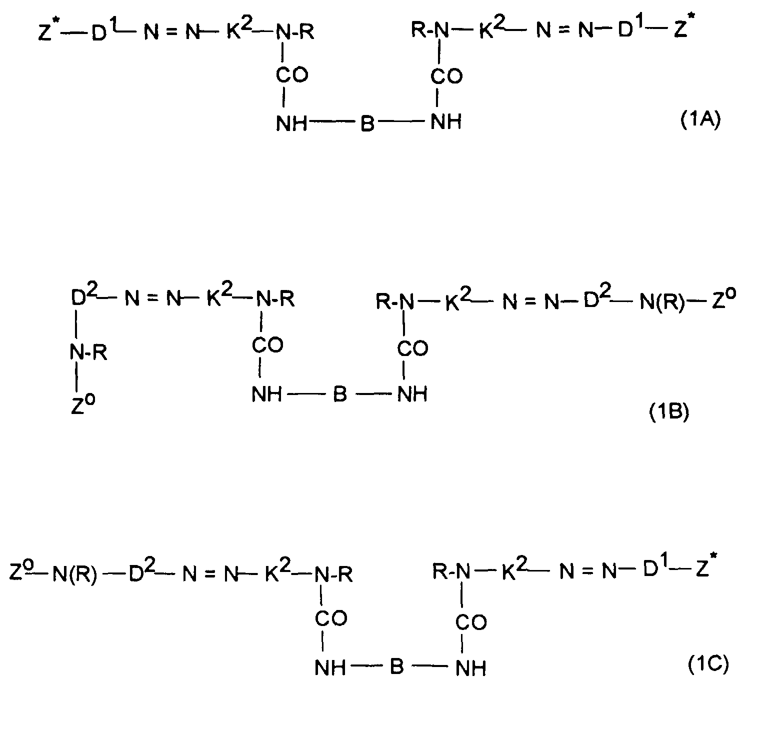 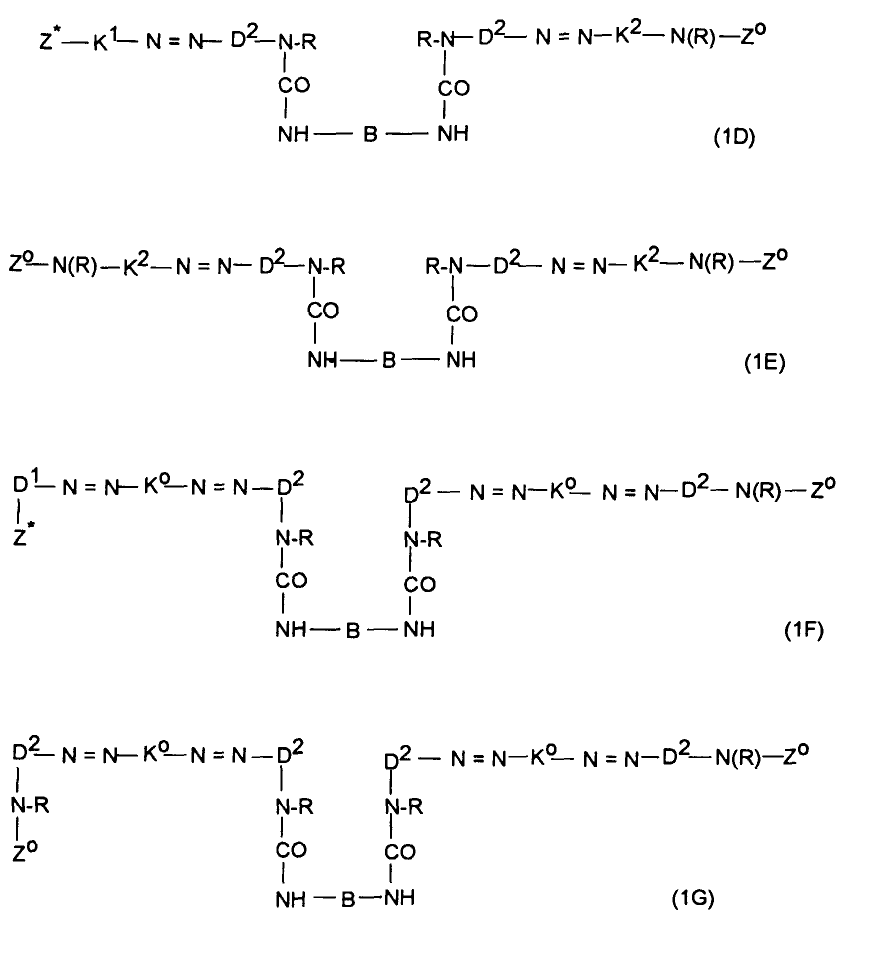 in welchen
- B, R, D¹, D², K¹ und K²: die obengenannten Bedeutungen haben,
- Z∗: eine nicht-heterocyclische faserreaktive Gruppe gemäß Z¹ oder Z² ist und
- Z^{o}: eine heterocyclische faserreaktive Gruppe oder eine andere heterocyclische Gruppierung gemäß Z¹ ist.

Reste Z-D¹- bzw. Z―D³〈 , bei denen die faserreaktive Gruppe Z eine nichtheterocyclische Gruppe ist, sind beispielsweise solche der allgemeinen Formeln (4a), (4b), (5a) und (5b) 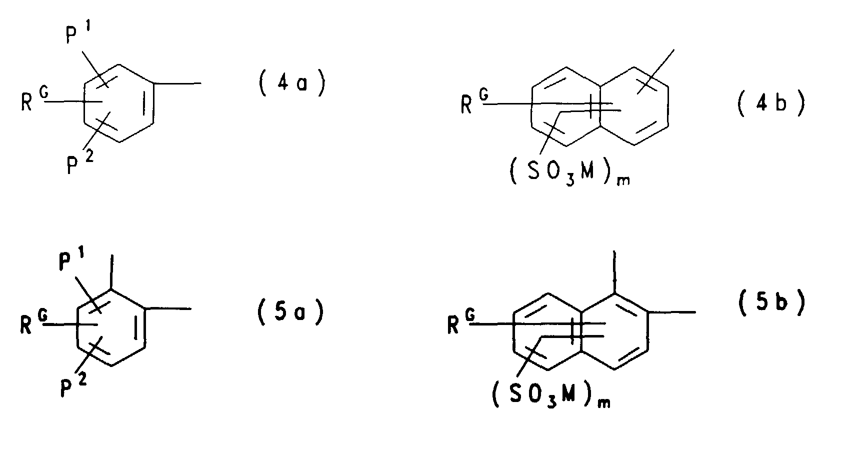 in welchen
- R^{G}: eine faserreaktive Gruppe der allgemeinen Formel (a)

Y - SO₂ - W - (a)

ist, in welcher
- Y: Vinyl ist oder Ethyl ist, das in β-Stellung durch einen alkalisch eliminierbaren Substituenten substituiert ist, wie durch Chlor, Sulfato, Thiosulfato, Phosphato, Acetyloxy und Sulfophenylsulfonyloxy, und bevorzugt Vinyl oder β-Sulfatoethyl ist, und
- W: eine direkte kovalente Bindung ist oder Alkylen von 1 bis 4 C-Atomen, wie n-Ethylen und n-Propylen, ist oder eine Aminogruppe der allgemeinen Formel (b) 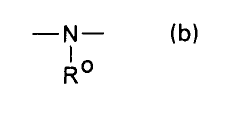 ist, in welcher
- R^{o}: Wasserstoff, Alkyl von 1 bis 4 C-Atomen, wie Methyl und Ethyl, oder Phenyl oder durch 1 oder 2 Substituenten aus der Gruppe Sulfo, Methyl, Methoxy, Ethyl, Ethoxy, Carboxy und Chlor substituiertes Phenyl ist,
- P¹: Wasserstoff, Methyl, Ethyl, Methoxy, Ethoxy, Alkanoyl von 2 bis 5 C-Atomen, wie Acetyl und Propionyl, Cyano, Sulfo, Carboxy, Alkoxycarbonyl von 2 bis 5 C-Atomen, wie Methoxycarbonyl und Ethoxycarbonyl, Carbamoyl, N-(C₁-C₄-Alkyl)-carbamoyl, Fluor, Chlor, Brom oder Trifluormethyl ist,
- P²: Wasserstoff, Methyl, Ethyl, Methoxy, Ethoxy, Cyano, Nitro, Carboxy, Sulfo, Chlor, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,
- wobei: der Benzolkern in Formeln (4a) und (4b) zusätzlich in ortho-Stellung zur freien Bindung, die an die Azogruppe führt, eine Hydroxygruppe enthalten kann,
- m: die Zahl Null, 1 oder 2 bedeutet (wobei diese Gruppe im Falle von m gleich Null ein Wasserstoffatom bedeutet) und
- M: die obengenannte Bedeutung hat.

Bevorzugt ist hiervon P¹ gleich Wasserstoff, Methyl, Methoxy, Brom, Chlor, Sulfo und Carboxy sowie P² gleich Wasserstoff, Methyl, Methoxy, Chlor, Carboxy, Sulfo und Acetylamino.

Gruppen der allgemeinen Formeln (4a) und (4b) sind beispielsweise:
2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4- oder -5-(β-sulfatoethylsulfonyl)-phenyl, 2-Chlor-4- oder -5-(β-chlorethylsulfonyl)-phenyl, 2-Hydroxy-5-(β-sulfatoethylsulfonyl)-phenyl, 2-Hydroxy-3-sulfo-5-(β-sulfatoethylsulfonyl)-phenyl, 3- oder 4-(β-Acetoxyethylsulfonyl)-phenyl, 6-Carboxy-1-sulfo-naphth-2-yl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, 4-[N-Methyl-N-(β-sulfatoethylsulfonyl)]-amino-phenyl, 3-[N-Methyl-N-(β-sulfatoethylsulfonyl)]-amino-phenyl, 4-[β-(β'-Sulfatoethylsulfonyl)-ethyl]-phenyl, 3- oder 4-[β-(β'-Chlorethylsulfonyl)-ethylamino]-phenyl, 3- oder 4-[β-(β'-Sulfatoethylsulfonyl)-ethylamino]-phenyl, 3- oder 4-[γ-(β'-Chlorethylsulfonyl)-propylamino]-phenyl, 3- oder 4-[γ-(β'-Sulfatoethylsulfonyl)-propylamino]-phenyl, 3- oder 4-[γ-(Vinylsulfonyl)-propylamino]-phenyl, 4-[β-(β'-Sulfatoethylsulfonyl)-ethylamino]-2- oder -3-sulfo-phenyl, 4-[β-(β'-Chlorethylsulfonyl)-ethylamino]-2- oder -3-sulfo-phenyl, 4-[γ-(β'-Sulfatoethylsulfonyl)-propylamino]-2- oder -3-sulfo-phenyl, 4-[γ-(β'-Chlorethylsulfonyl)-propylamino]-2- oder -3-sulfo-phenyl, 4-[β-(β'-Chlorethylsulfonyl)-ethylamino]-2-carboxy-phenyl, 4-[β-(β'-Sulfatoethylsulfonyl)-ethylamino]-2-carboxy-phenyl, 4-[γ-(β'-Chlorethylsulfonyl)-propylamino]-2-carboxy-phenyl, 4-[γ-(β'-Sulfatoethylsulfonyl)-propylamino]-2-carboxy-phenyl, 4-{N-Phenyl-N-[β-(β*'*-chlorethylsulfonyl)-ethyl]}-amino-phenyl, 4-{N-Phenyl-N-[β-(β*'*-sulfatoethylsulfonyl)-ethyl]}-amino-phenyl, 3-{N-Phenyl-N-[β-(β*'*-chlorethylsulfonyl)-ethyl]}-amino-phenyl, 3-{N-Phenyl-N-[β-(β*'*-sulfatoethylsulfonyl)-ethyl]}-amino-phenyl, 4-{N-3''-Sulfo-phenyl-N-[β-(β*'*-chlorethylsulfonyl)-ethyl]}-amino-phenyl, 4-{N-3''-Sulfo-phenyl-N-[β-(β*'*-sulfatoethylsulfonyl)-ethyl]}-amino-phenyl, 4-{N-Phenyl-N-[γ-(β*'*-chlorethylsulfonyl)-propyl]}-amino-phenyl, 4-{N-Phenyl-N-[γ-(β*'*-sulfatoethylsulfonyl)-propyl]}-amino-phenyl, 3-{N-Phenyl-N-[γ-(β*'*-chlorethylsulfonyl)-propyl]}-amino-phenyl, 3-{N-Phenyl-N-[γ-(β*'*-sulfatoethylsulfonyl)-propyl]}-amino-phenyl, 4-{N-3''-Sulfo-phenyl-N-[γ-(β*'*-chlorethylsulfonyl)-propyl]}-amino-phenyl und 4-{N-3''-Sulfo-phenyl-N-[γ-(β*'*-sulfatoethylsulfonyl)-propyl]}-amino-phenyl.

Gruppen entsprechend den allgemeinen Formelresten -D¹-N = N-E- sind beispielsweise 4-(4'-Sulfo-phenyl)-azo-6-sulfo-naphth-1-yl, 4-[4'-(β-Sulfatoethylsulfonyl)-phenyl]-azo-2-methyl-5-methoxy-phenyl, 4-[3'-(β'-Sulfatoethylsulfonyl)-phenyl]-azo-3-methyl-phenyl, 4-[4'-(β-Sulfatoethylsulfonyl)-phenyl]-azo-3-ureido-phenyl, 4-[6'-(β-Sulfatoethyl-sulfonyl)-naphth-2'-yl]-azo-3-ureido-phenyl und 7-[2'-Methoxy-5'-(β-sulfatoethyl-sulfonyl)-phenyl]-azo-8-hydroxy-6-sulfo-naphth-3-yl.

Reste Z-N(R)-D²- mit Z gleich einer heterocyclischen faserreaktiven Gruppe Z^{o} von als Diazokomponenten dienenden Verbindungen der allgemeinen Formeln Z-N(R)-D²-NH₂ oder von deren Diaminobenzol- und Diaminonaphthalin-Verbindungen entsprechend den allgemeinen Formeln HRN-D²-NH₂ sind bevorzugt Reste der allgemeinen Formeln (6a) und (6b) 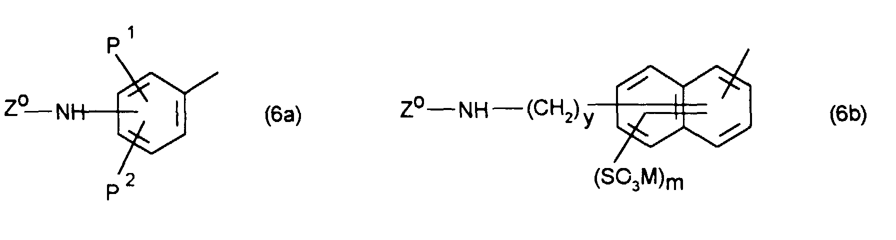 in welchen Z^{o}, M, m, P¹ und P² die oben angegebenen, insbesondere bevorzugten Bedeutungen haben und y für die Zahl Null, 1 oder 2 steht, wobei der jeweilige Benzolkern in ortho-Stellung zur freien Bindung, die zur Azogruppe führt, zusätzlich eine Hydroxygruppe enthalten kann.

Reste D² sind somit bevorzugt Reste der allgemeinen Formeln (6y) und (6z) 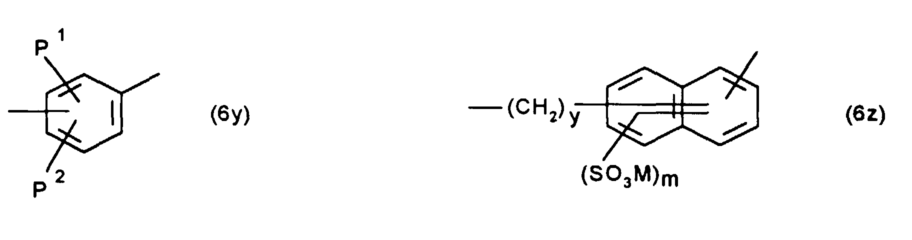 in welchen P¹, P², y, M und m die obengenannten Bedeutungen haben, und sind insbesondere bevorzugt 1,3-Phenylen, 1,4-Phenylen, 4-Sulfo-1,3-phenylen, 3-Sulfo-1,4-phenylen, 2,5-Disulfo-1,4-phenylen, 2,5-Disulfo-1,3-phenylen, 4,6-Disulfo-1,3-phenylen, 2-Methyl-1,3-phenylen und 2-Methoxy-1,3-phenylen.

Aromatische Reste E einer kupplungsfähigen und diazotierbaren Verbindung der allgemeinen Formel H-E-NH₂ sind beispielsweise solche der allgemeinen Formeln (7a), (7b) und (7c) 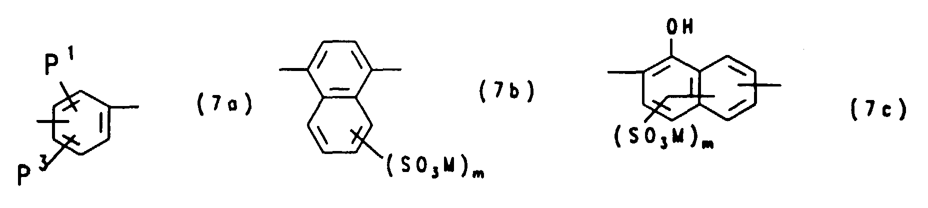 in welchen
- P¹, M und m: die oben angegebenen Bedeutungen haben und
- P³: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

Reste -K¹-Z von Kupplungskomponenten der allgemeinen Formel H-K¹-Z , in denen Z eine nicht-heterocyclische faserreaktive Gruppe ist, sind beispielsweise solche der allgemeinen Formeln (8a) bis (8h) 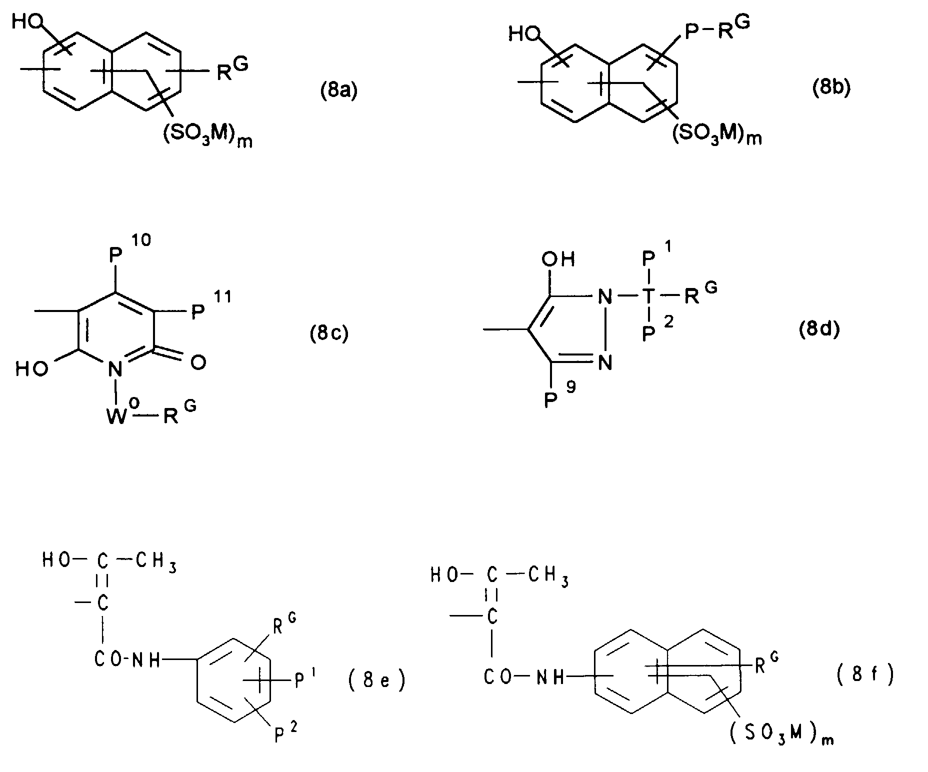 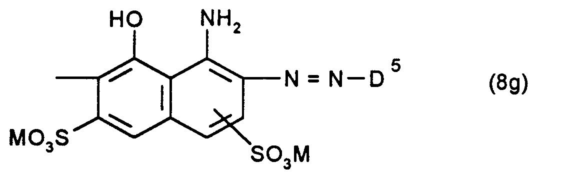 in welchen
- R^{G}, P¹, P², m und M: die obengenannten Bedeutungen haben,
- P: Alkylencarbonylamino von 2 bis 5 C-Atomen, wie Propylencarbonylamino und Ethylencarbonylamino, oder Phenylen-aminocarbonylamino ist, das im Phenylenrest durch Substituenten aus der Gruppe Chlor, Methyl, Methoxy, Sulfo und Carboxy substituiert sein kann, oder Phenylencarbonylamino ist, das im Phenylrest durch Substituenten aus der Gruppe Chlor, Methyl, Methoxy, Nitro, Sulfo und Carboxy substituiert sein kann, wobei der faserreaktive Rest R^{G} an ein Alkylen-C-Atom oder ein Phenylen-C-Atom von P gebunden ist,
- P⁹: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist,
- T: für einen Benzol- oder Naphthalinring, bevorzugt Benzolring, steht,
- P¹⁰: Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen oder Phenyl ist, bevorzugt Alkyl von 1 bis 4 C-Atomen oder Phenyl ist,
- P¹¹: Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,
- W^{o}: Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und
- D⁵: ein Rest der allgemeinen Formel (4a) oder (4b) ist.

Reste 〉K³―Z mit Z einer nicht-heterocyclischen faserreaktiven Gruppe von Kupplungskomponenten der allgemeinen Formeln H-K¹-R^{G} oder H-K³(OH)-R^{G} sind beispielsweise Reste der allgemeinen Formeln 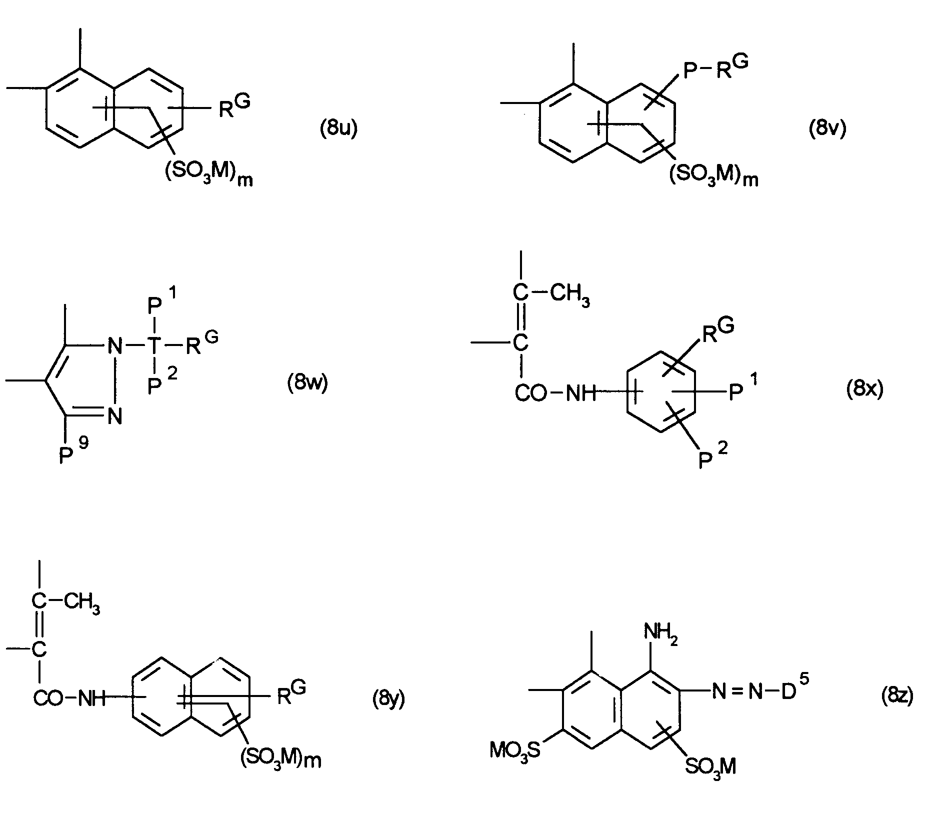 in welchen die einzelnen Formelreste die obengenannte Bedeutung haben.

Reste -K²-N(R)-Z und 〉K⁴―N(R)―Z von Kupplungskomponenten der allgemeinen Formel H-K²-N(R)-Z und H(HO)K⁴-N(R)-Z mit Z gleich einer heterocyclischen faserreaktiven Gruppe Z^{o} bzw. von Kupplungskomponenten der allgemeinen Formeln H-K²-NRH und H(HO)K⁴-NRH , in deren Aminogruppe der heterocyclische faserreaktive Rest nachträglich eingeführt werden muß, sind beispielsweise Reste der allgemeinen Formeln (9a) bis (9i) bzw. (9v) bis (9z) 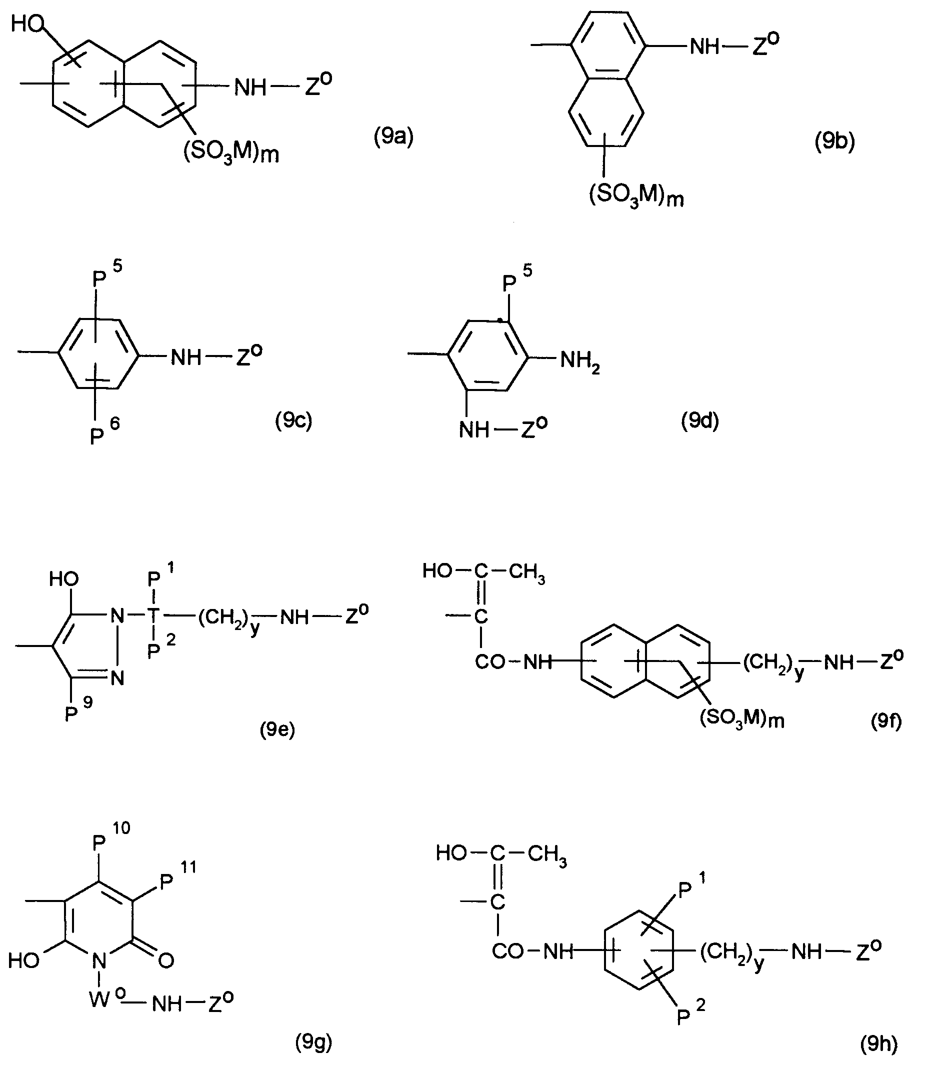 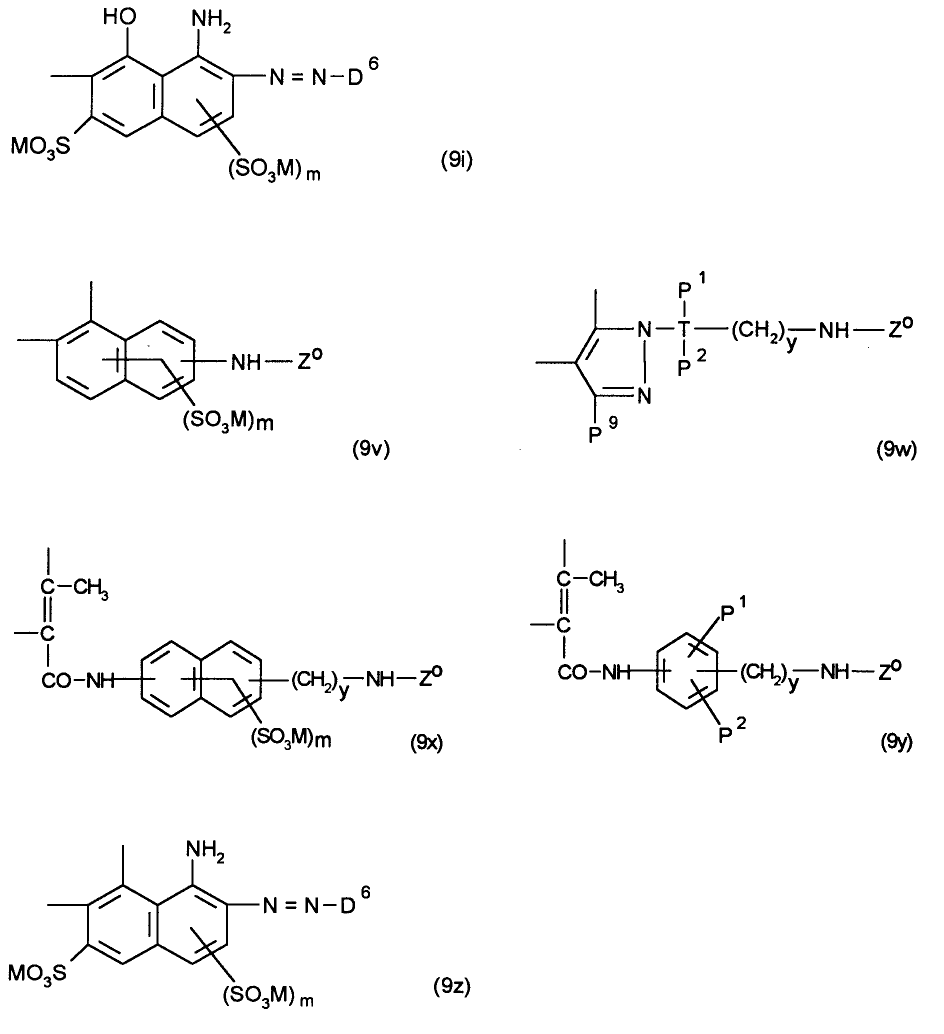 in welchen
- P¹, P², P⁹, P¹⁰, P¹¹, W^{o}, T, M, m und Z^{o}: die oben angegebenen, insbesondere bevorzugten, Bedeutungen haben,
- y: die Zahl Null, 1 oder 2 ist,
- P⁵: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Sulfo ist,
- P⁶: Wasserstoff, Alkyl von 1 bis 4 C-Atomen, wie Methyl und Ethyl, Alkoxy von 1 bis 4 C-Atomen, wie Methoxy und Ethoxy, Chlor, Alkanoylamino von 2 bis 7 C-Atomen, wie Acetylamino und Propionylamino, Ureido oder Phenylureido ist und
- D⁶: als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppe an den aromatischen Kern gebunden.

Reste K² sind insbesondere die von der Gruppe -NH-Z^{o} freien Reste der allgemeinen Formeln (9a) bis (9f) und (9g), bevorzugt von Formel (9a) mit der Hydroxygruppe bevorzugt in α-Stellung des Naphthalinringes.

Reste 〉K³― und 〉K⁴― sind insbesondere solche der Formeln (10a) bis (10e) 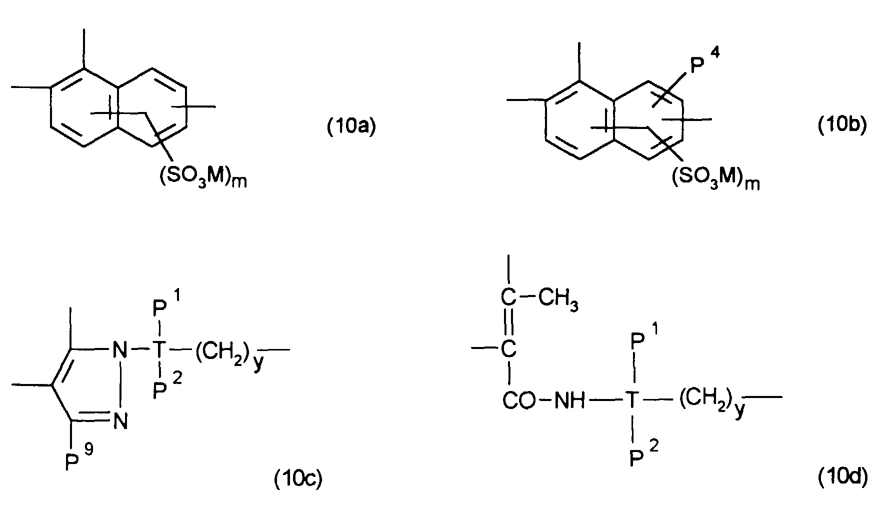 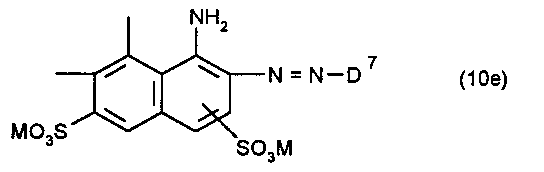 in welchen die einzelnen Formelglieder eine der obengenannten Bedeutungen haben und D⁷ die Bedeutung von D⁵ und D⁶ hat.

Faserreaktive Reste Z sind beispielsweise die Reste α,β-Dibrom-acryloylamino, 2,3-Dichlor-chinoxazin-6-carbonyl, 2,4-Dichlor-1,3,5-triazin-6-yl und insbesondere faserreaktive Reste entsprechend dem obengenannten und definierten Formelrest R^{G} und der nachstehenden allgemeinen Formeln (11a) bis (11h) 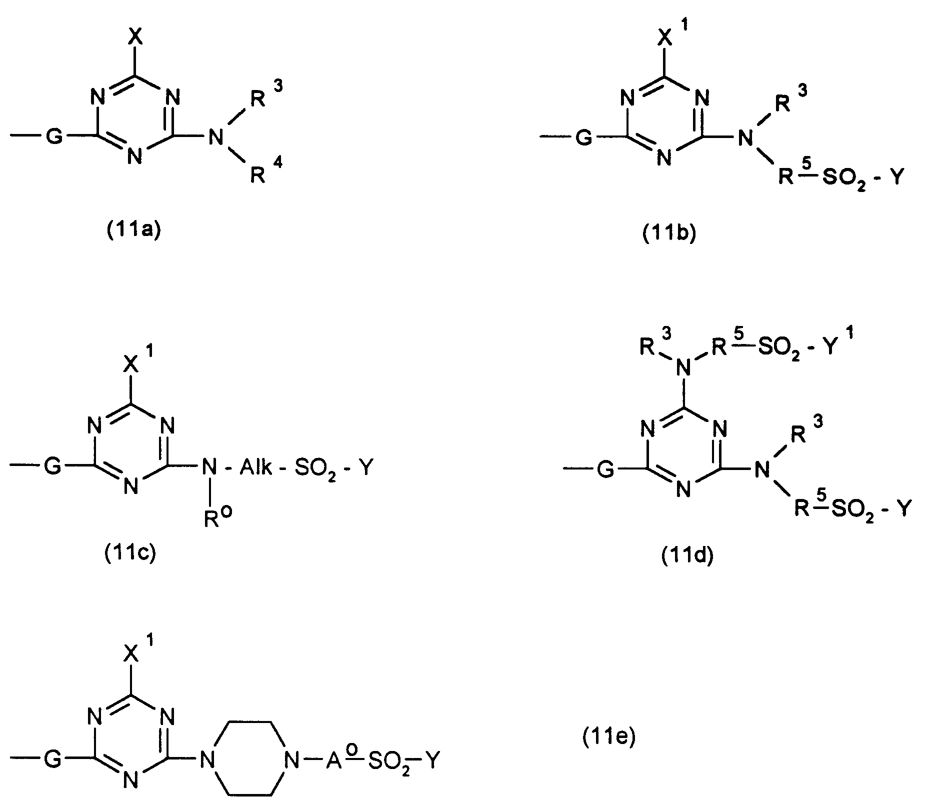 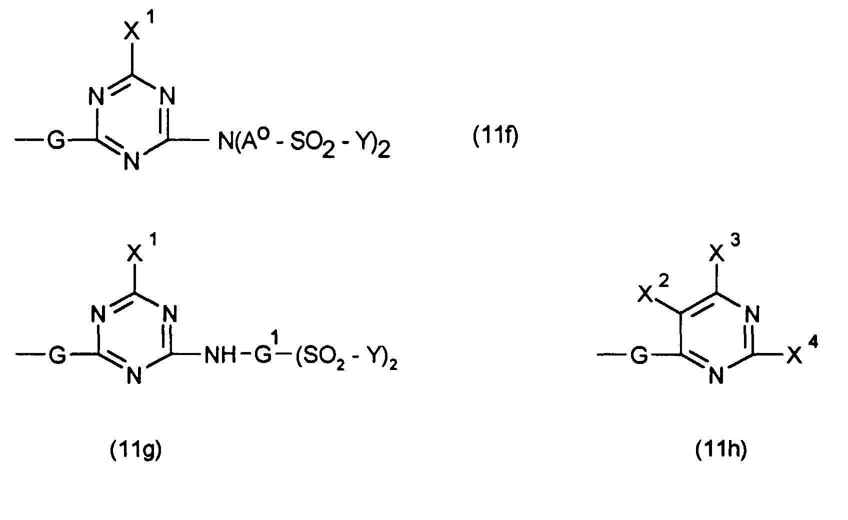 in welchen bedeuten:
- R^{o}: hat die obengenannte Bedeutung;
- Alk: ist Alkylen von 2 bis 4 C-Atomen;
- A^{o}: ist Alkylen von 1 bis 3 C-Atomen, wie Ethylen und Propylen;
- X: ist Chlor oder Fluor;
- X¹: ist Chlor, Fluor, Cyanoamino oder Methoxy, bevorzugt Chlor oder Fluor;
- X²: ist Wasserstoff, Halogen, wie Fluor oder insbesondere Chlor, oder Cyano;
- X³: ist Wasserstoff, Halogen, wie Chlor und Fluor, Methylsulfonyl oder Hydroxy und
- X⁴: ist Wasserstoff, Halogen, wie Chlor und Fluor, Methyl, Methylsulfonyl oder Hydroxy,
- wobei: mindestens X³ oder X⁴ Halogen oder Methylsulfonyl ist oder bevorzugt X³ und X⁴ beide Halogen sind;
- R³: ist Wasserstoff, Alkyl von 1 bis 4 C-Atomen, wie Methyl und Ethyl, das durch Chlor, Sulfo, Carboxy, Sulfato, Phosphato, Hydroxy, Alkanoyloxy von 2 bis 5 C-Atomen, wie Propionyloxy und Acetyloxy, Cyano und Alkoxy von 1 bis 4 C-Atomen, wie Methoxy und Ethoxy, substituiert sein kann, oder ist Cycloalkyl mit 5 bis 8 C-Atomen, wie Cyclohexyl und Methylcyclohexyl;
- R⁴: ist Wasserstoff, Alkyl von 1 bis 4 C-Atomen, wie Methyl und Ethyl, das durch Chlor, Sulfo, Carboxy, Sulfato, Phosphato, Hydroxy, Alkanoyloxy von 2 bis 5 C-Atomen, wie Propionyloxy und Acetyloxy, Cyano und Alkoxy von 1 bis 4 C-Atomen, wie Methoxy und Ethoxy, substituiert sein kann, oder ist Cycloalkyl mit 5 bis 8 C-Atomen, wie Cyclohexyl und Methylcyclohexyl, oder ist Cyano oder ist Phenyl, das durch 1 oder 2 Substituenten aus der Gruppe Sulfo, Carboxy, Methyl, Ethyl, Methoxy, Ethoxy, Chlor, Carbamoyl, Sulfamoyl und Cyano substituiert sein kann, oder ist durch 1, 2 oder 3 Sulfogruppen, bevorzugt durch 1 oder 2 Sulfogruppen, substituiertes Naphthyl, wie Naphth-2-yl;
- R⁵: ist Phenylen, das durch 1 oder 2 Substituenten aus der Gruppe Chlor, Sulfo, Methyl, Ethyl, Methoxy, Ethoxy, und Carboxy substituiert sein kann, oder ist Alkylen von 2 bis 6 C-Atomen, bevorzugt von 2 bis 4 C-Atomen, wie Ethylen und Propylen, oder ist eine Gruppe der allgemeinen Formel ALK-O-ALK, ALK-NH-ALK, Phen-O-ALK, ALK-O-Phen , Phen-NH-ALK - ALK-NH-Phen, Phen-ALK und ALK-Phen, worin ALK einen Alkylenrest von 1 bis 4 C-Atomen, wie Methylen, Ethylen und Propylen, bedeutet und gegebenenfalls durch Sulfo, Hydroxy, Sulfato oder Acetyloxy substituiert ist, und Phen Phenylen bedeutet, das durch 1 oder 2 Substituenten aus der Gruppe Methyl, Methoxy, Chlor und Sulfo substituiert sein kann;
- Y: hat eine der obengenannten Bedeutungen und ist bevorzugt Vinyl, β-Chlorethyl und insbesondere β-Sulfatoethyl;
- Y¹: hat eine der Bedeutungen von Y oder ist β-Hydroxyethyl;
- G¹: ist ein Benzolring, der neben den beiden Gruppen -SO₂-Y mit Y der obengenannten Bedeutung durch 1 oder 2 Substituenten der Gruppe Methyl, Methoxv, Chlor und Sulfo substituiert sein kann, oder ist ein Alkanrest von 2 bis 6 C-Atomen oder ein Benzolrest, der 1 oder 2 Methylengruppen besitzt, an die eine bzw. zwei der Gruppen -SO₂-Y gebunden sind;
- G: ist eine kovalente Bindung oder eine Gruppe der allgemeinen Formel (12) 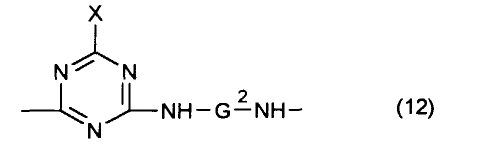 in welcher
- X: die obengenannte Bedeutung besitzt und
- G²: Alkylen von 1 bis 6 C-Atomen, wie Ethylen, n-Propylen, Isobutylen, Isopentylen, Hexylen oder Isohexylen, ist oder Phenylen ist, das durch 1 oder 2 Sulfo-Gruppen substituiert sein kann.

Faserreaktive Gruppen Z sind beispielsweise insbesondere Vinylsulfonyl, β-Sulfatoethylsulfonyl, β-Chlorethylsulfonyl, β-Acetyloxyethylsulfonyl, β-Thiosulfatoethylsulfonyl, β-(β*'*-Sulfatoethylsulfonyl)-ethyl, γ-(β*'*-Sulfatoethylsulfonyl)-propyl, β-(β*'*-Thiosulfatoethylsulfonyl)-ethyl, γ-(β*'*-Thiosulfatoethylsulfonyl)-propyl, β-(β*'*-Chlorethylsulfonyl)-ethyl, γ-(β*'*-Chlorethylsulfonyl)-propyl, β-(Vinylsulfonyl)-ethyl, γ-(Vinylsulfonyl)-propyl, N-Methyl-N-(β-sulfatoethylsulfonyl)-amino, N-Ethyl-N-(β-sulfatoethyl-sulfonyl)-amino, β-(β*'*-Sulfatoethylsulfonyl)-ethylamino, γ-(β*'*-Chlorethylsulfonyl)-propylamino, N-Phenyl-N-[β-(β*'*-chlorethylsulfonyl)-ethyl]-amino, N-Phenyl-N-[β-(β*'*-sulfatoethylsulfonyl)-ethyl]-amino, N-Phenyl-N-[β-(β*'*-chlorethylsulfonyl)-ethyl]-amino, N-Phenyl-N-[β-(β*'*-sulfatoethylsulfonyl)-ethyl]-amino, N-3''-Sulfophenyl-N-[β-(β*'*-chlorethylsulfonyl)-ethyl]-amino, N-3''-Sulfo-phenyl-N-[β-(β*'*-sulfatoethylsulfonyl)-ethyl]-amino, N-Phenyl-N-[γ-(β*'*-chlorethylsulfonyl)-propyl]-amino, N-Phenyl-N-[γ-(β*'*-sulfatoethylsulfonyl)-propyl]-amino, N-Phenyl-N-[γ-(β*'*-chlorethylsulfonyl)-propyl]-amino, N-Phenyl-N-[γ-(β*'*-sulfatoethylsulfonyl)-propyl]-amino, N-(3''-Sulfophenyl)-N-[γ-(β*'*-chlorethylsulfonyl)-propyl]-amino, N-(3''-Sulfophenyl)-N-[γ-(β*'*-sulfatoethylsulfonyl)-propyl]-amino, β-(β*'*-Sulfatoethylsulfonyl)-ethoxyethylamino, 2,4-Difluor-pyrimidin-6-yl, 5-Chlor-2,4-difluor-pyrimidin-6-yl, 2,4,5-Trichlorpyrimidin-6-yl, 5-Cyano-2,4-dichlor-pyrimidin-6-yl, 2-Methylsulfonyl-5-chlor-4-methyl-pyrimidin-6-yl, 2-Chlor-4-(3'-sulfophenylamino)-s-triazin-6-yl, 2-Chlor-4-(2',5'-disulfo-phenylamino)-s-triazin-6-yl, 2-Fluor-4-phenylamino-s-triazin-6-yl, 2-Fluor-4-(N-ethyl-N-phenyl)-amino-s-triazin-6-yl, 2-Fluor-4-(2'-sulfophenylamino)-s-triazin-6-yl, 2-Fluor-4-(2'-carboxyphenylamino)-s-triazin-6-yl, 2-Fluor-4-(1'-sulfo-naphth-2'-yl)-amino-s-triazin-6-yl, 2-Fluor-4-(6'-carboxy-naphth-2'-yl)-amino-s-triazin-6-yl, 2-Fluor-4-morpholino-s-triazin-6-yl, 2-Fluor-4-(β-sulfoethyl)-amino-s-triazin-6-yl, 2-Fluor-4-[N-methyl-N-(β-sulfoethyl)]-amino-s-triazin-6-yl, 2-Fluor-4-[N-phenyl-N-β-(β*'*-sulfatoethylsulfonyl)-ethyl]-amino-s-triazin-6-yl, 2-Chlor-4-[N-phenyl-N-γ-(β*'*-sulfatoethylsulfonyl)-propyl]-amino-s-triazin-6-yl, 2-Fluor-4-[N-ethyl-N-β-(β*'*-sulfatoethylsulfonyl)-ethyl]-amino-s-triazin-6-yl, 2-Fluor-4-[γ-(β*'*-sulfatoethylsulfonyl)-propyl]-amino-s-triazin-6-yl, 2-Fluor-4-(γ-vinylsulfonyl-propyl)-amino-s-triazin-6-yl, 2-Fluor-4-[β-(β*'*-vinylsulfonyl-ethoxy)-ethyl]-amino-s-triazin-6-yl, 2-Fluor-4-bis-N,N-[γ-(β*'*-chlorethylsulfonyl)-propyl]-amino-s-triazin-6-yl, 2-Chlor-4-bis-N,N-[β-(β*'*-chlorethylsulfonyl)-ethyl]-amino-s-triazin-6-yl, 2-Fluor-4-[4'-(β-sulfatoethylsulfonyl)-phenyl]-amino-s-triazin-6-yl, 2-Fluor-4-[2'-methoxy-5'-(β-sulfatoethylsulfonyl)-phenyl]-amino-s-triazin-6-yl, 2-Chlor-4-[4'-(β-sulfatoethylsulfonyl)-phenyl]-amino-s-triazin-6-yl, 2-Chlor-4-[3'-(β-sulfatoethylsulfonyl)-phenyl]-amino-s-triazin-6-yl, 2-Cyanoamino-4-[4'-(β-sulfatoethylsulfonyl)-phenyl]-amino-s-triazin-6-yl, 2-Chlor-4-[N-ethyl-N-(3'-β-sulfatoethylsulfonyl-phenyl)]-amino-s-triazin-6-yl, 2-Chlor-4-[β-(4'-β*'*-sulfatoethylsulfonyl-phenyl)]-amino-s-triazin-6-yl, 2-Chlor-4-amino-s-triazin-6-yl, 2,3-Dichlor-chinoxazin-6-carbonyl, 2-Fluor-4-[3'-(2'',4''-difluor-5''-chlor-pyrimidin-6''-yl)-amino-sulfophenyl]-amino-s-triazin-6-yl, 2-Fluor-4-[3'-(2'',4''-difluor-pyrimidin-6''-yl)-amino-phenyl]-amino-s-triazin-6-yl, 2-Chlor-4-[3'-(2'',4''-difluor-5''-chlorpyrimidin-6''-yl)-amino-sulfophenyl]-amino-s-triazin-6-yl, 2-Fluor-4-{3'-[4''-(2*'''*-sulfophenyl)-amino-2''-fluor-s-triazin-6''-yl]-sulfophenyl}-amino-s-triazin-6-yl, 2-Chlor-4-{3'-[4''-(3*'''*-sulfophenyl)-amino-2''-chlor-s-triazin-6''-yl]-sulfophenyl}-amino-s-triazin-6-yl.

Formelreste B sind beispielsweise 1,2-Phenylen, 1,3-Phenylen und 1,4-Phenylen, die durch 1 oder 2 Substituenten aus der Gruppe Methoxy, Ethoxy, Methyl, Ethyl, Chlor, Brom, Fluor, Sulfo und Carboxy substituiert sein können, oder 1,5-Naphthylen oder Gruppen der allgemeinen Formeln (aa) bis (af) 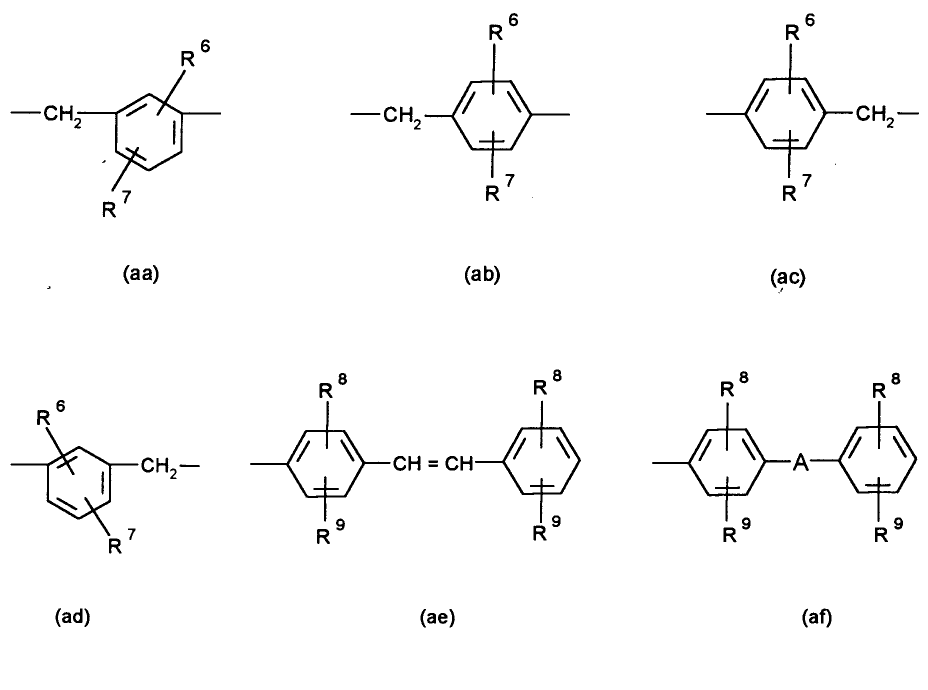 in welchen
- R⁶: Wasserstoff, Methoxy, Ethoxy, Methyl, Ethyl, Chlor, Sulfo oder Carboxy ist,
- R⁷: Wasserstoff, Methoxy, Ethoxy, Methyl, Ethyl oder Sulfo ist,
- R⁸: Wasserstoff, Chlor, Methyl oder Sulfo ist,
- R⁹: eine der Bedeutungen von R⁸ hat und bevorzugt Wasserstoff ist und
- A: eine direkte kovalente Bindung ist oder Methylen oder Ethylen oder eine Gruppe der Formel -CO-, -NH-, -CO-NH- oder -NH-CO-.

Solche Reste B sind beispielsweise insbesondere 1,3-Phenylen, 1,4-Phenylen, 4-Methyl-1,3-phenylen, 2-Methyl-1,3-phenylen, 2,5-Disulfo-1,3-phenylen, 2,5-Disulfo-1,4-phenylen, 4-Sulfo-1,3-phenylen, Biphenylmethan-4,4'-ylen, 4,4'-Biphenylen, 1,3-Propylen, 1,6-Hexamethylen, 3,3'-Dimethoxy-4,4'-biphenylen, 3,3'-Dimethyl-4,4'-biphenylen, 3,3'-Dichlor-4,4'-biphenylen und 3,3'-Disulfo-4,4'-biphenylen.

Azofarbstoffreste Fb sind beispielsweise Reste entsprechend den allgemeinen Formeln (12A) bis (12W) 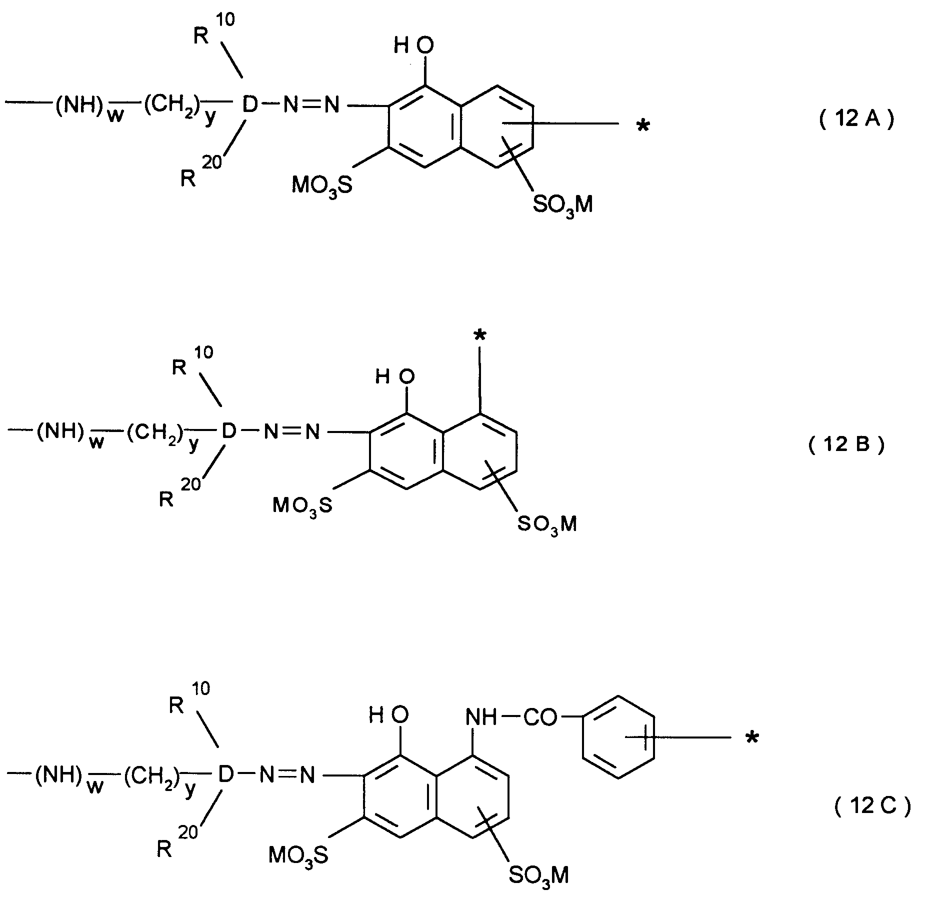 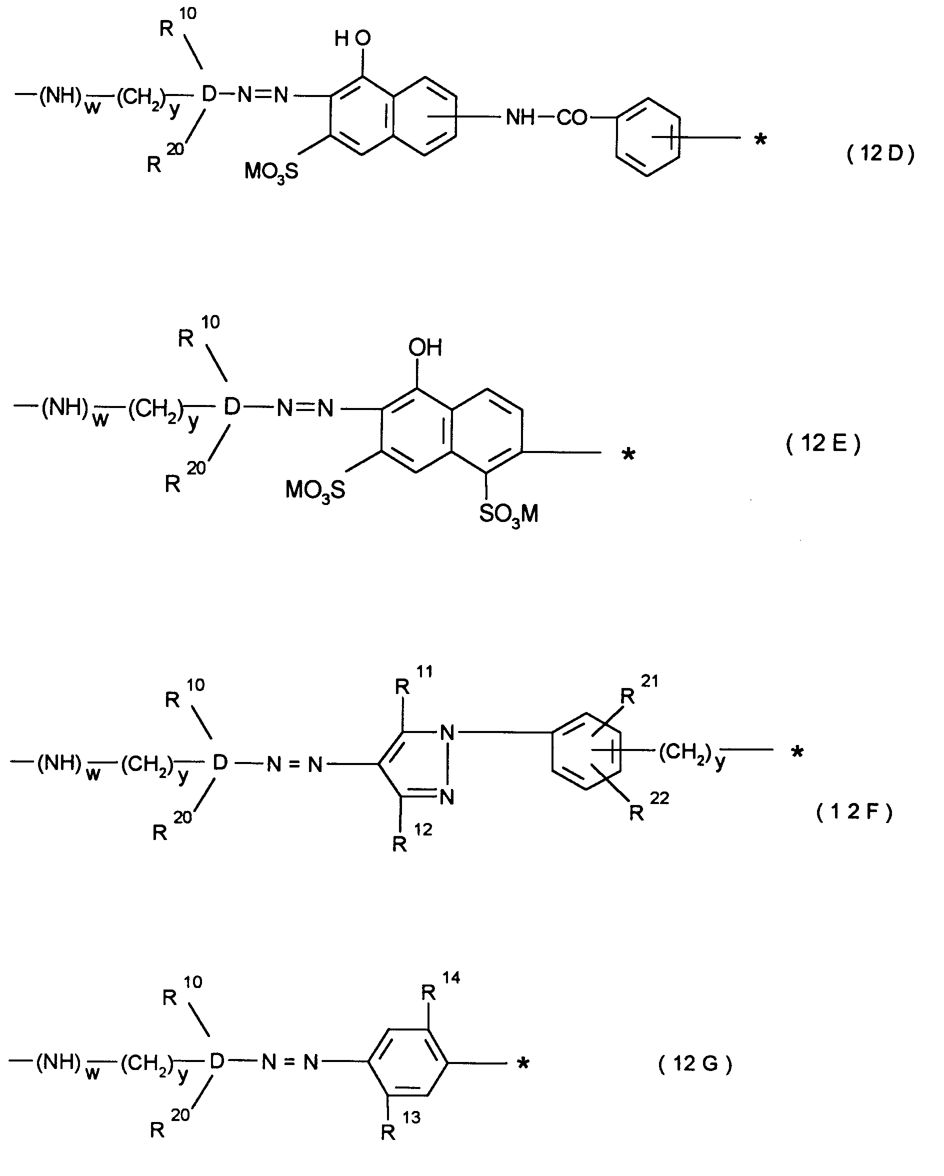 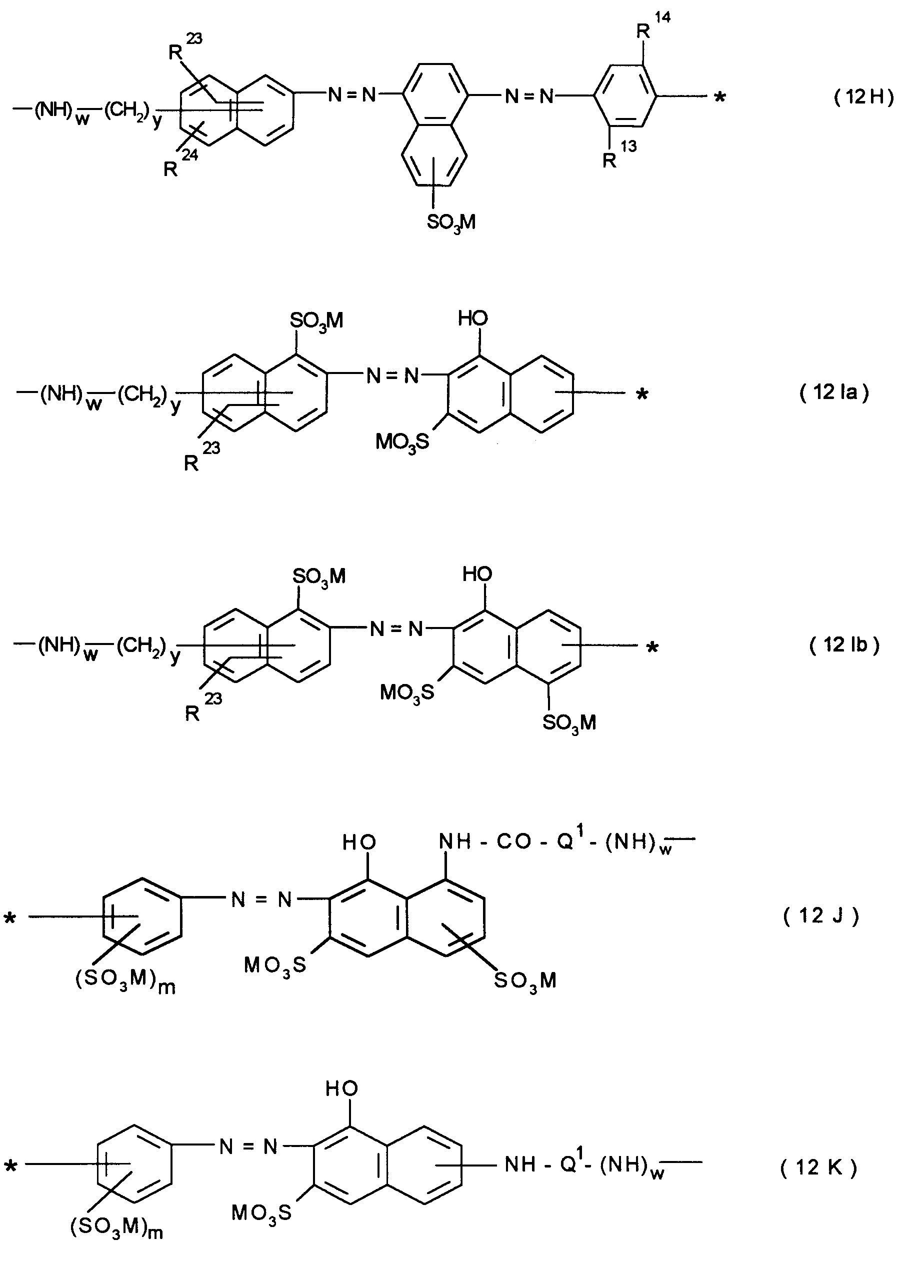 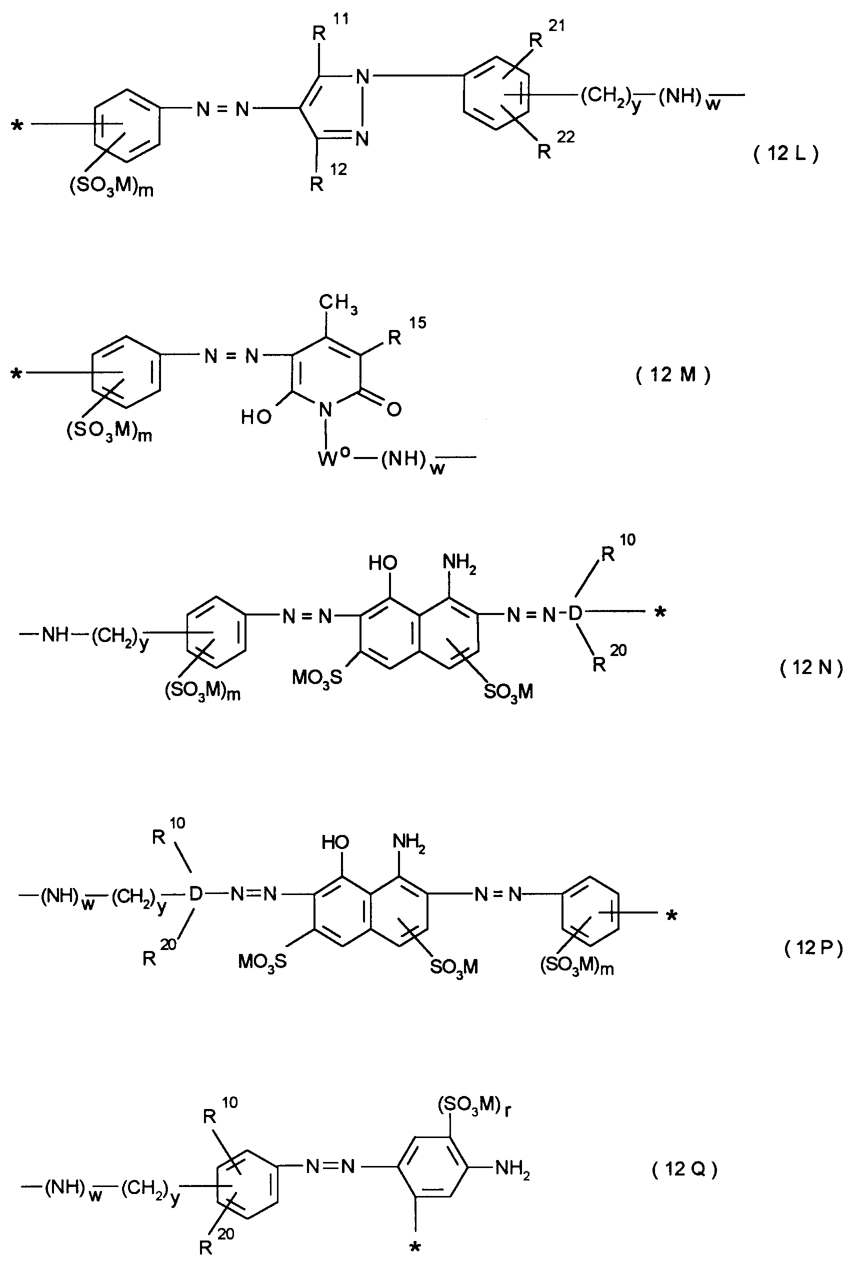 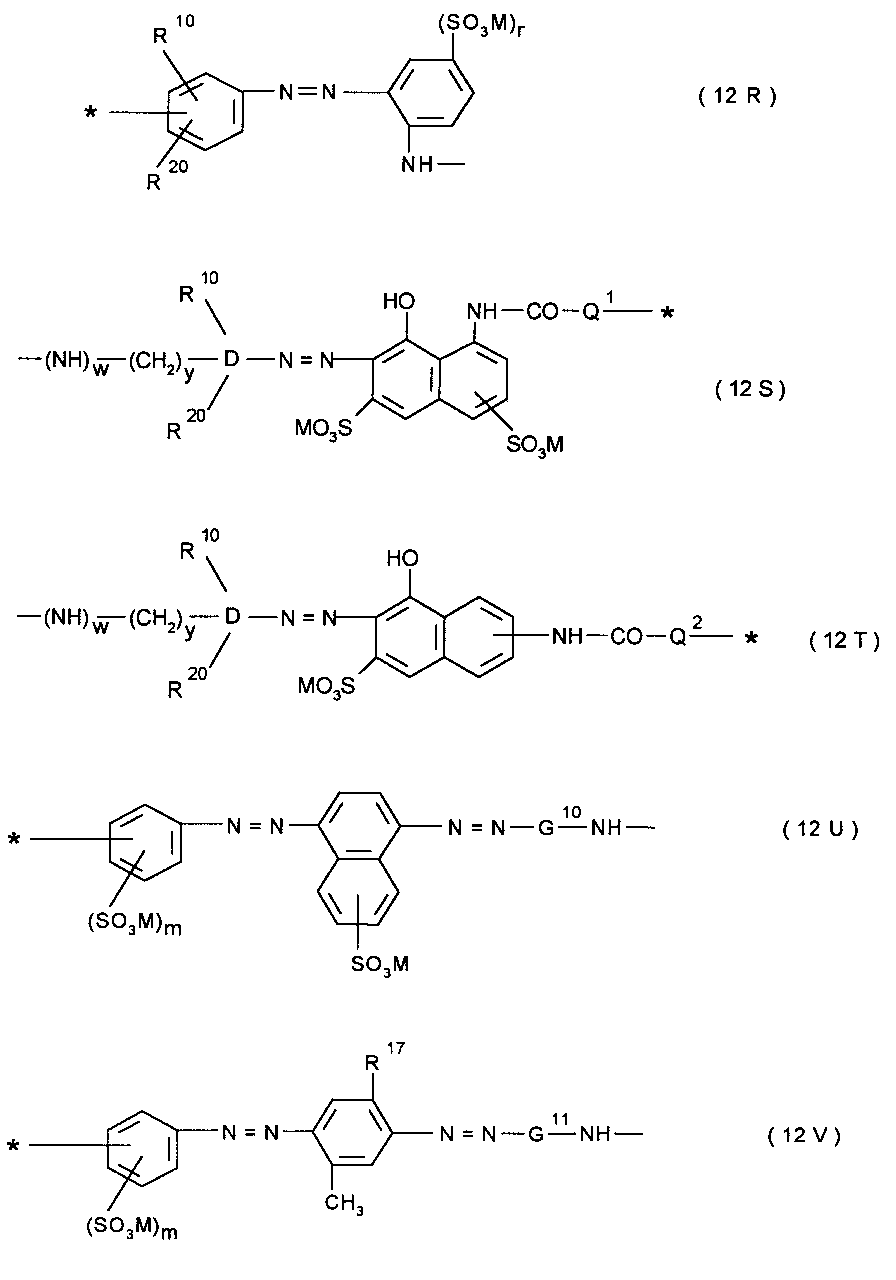 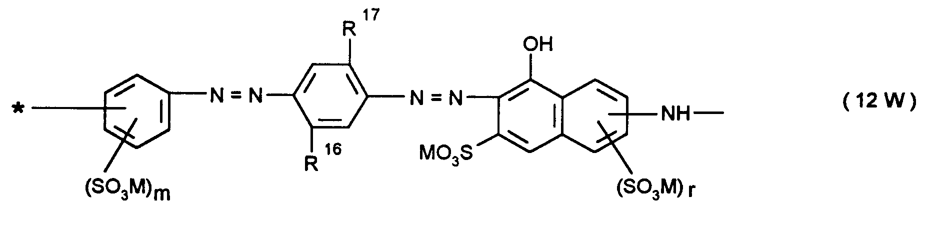 in welchen bedeuten:
- M, W^{o} und y: haben eine der obengenannten Bedeutungen;
- r: ist die Zahl Null oder 1;
- w: ist die Zahl Null oder 1;
- D: ist ein Benzolring oder ist ein Naphthalinring, wobei die Azogruppe an den Naphthalinring bevorzugt in β-Stellung gebunden ist und wobei im Falle, daß D den Naphthalinring bedeutet, R¹⁰ und R²⁰ bevorzugt jedes, unabhängig voneinander, ein Wasserstoffatom oder eine Sulfogruppe bedeuten;
- R¹⁰: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo und ist bevorzugt Wasserstoff, Methyl, Methoxy, Brom, Chlor, Sulfo oder Carboxy und insbesondere bevorzugt Wasserstoff, Methoxy oder Sulfo;
- R²⁰: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Nitro, Carboxy oder Sulfo, bevorzugt Wasserstoff, Methyl, Methoxy, Chlor, Carboxy, Sulfo oder Acetylamino und insbesondere bevorzugt Wasserstoff, Methoxy oder Sulfo;
- R¹¹: ist Hydroxy oder Amino, bevorzugt Hydroxy;
- R¹²: ist Methyl, Carboxy, Carbomethoxy oder Carbethoxy, bevorzugt Methyl oder Carboxy;
- R¹³: ist Wasserstoff oder Alkyl von 1 bis 4 C-Atomen, wie Methyl und Ethyl, Alkoxy von 1 bis 4 C-Atomen, wie Methoxy und Ethoxy, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;
- R¹⁴: ist Wasserstoff, Alkyl von 1 bis 4 C-Atomen, wie Methyl und Ethyl, Alkoxy von 1 bis 4 C-Atomen, wie Methoxy und Ethoxy, Sulfo und Halogen, wie Brom und insbesondere Chlor, vorzugsweise Wasserstoff, Methyl, Ethyl, Methoxy, Ethoxy oder Sulfo;
- R¹⁵: ist Wasserstoff, Cyano, Carbamoyl, Sulfamoyl oder Sulfomethyl, bevorzugt Wasserstoff oder Carbamoyl;
- R¹⁶: ist Acetylamino, Propionylamino, Ureido, Methoxy oder Methyl;
- R¹⁷: ist Wasserstoff, Methoxy oder Sulfo;
- R²¹: hat eine der Bedeutungen von R¹⁰;
- R²²: hat eine der Bedeutungen von R²⁰;
- R²³: ist Wasserstoff oder Sulfo;
- R²⁴: ist Wasserstoff oder Sulfo;
- Q¹: ist Alkylen von 1 bis 4 C-Atomen, wie Ethylen und Propylen, oder ist Phenylen oder durch Sulfo, Carboxy und/oder Alkyl von 1 bis 4 C-Atomen, wie Methyl, substituiertes Phenylen;
- Q²: ist eine Gruppe der Formel -NH-phen- oder -alk- , in welchen alk für Alkylen von 2 bis 4 C-Atomen steht und phen Sulfo-phenylen oder Phenylen bedeutet;
- m: ist die Zahl Null, 1 oder 2 (wobei im Falle von m gleich Null diese Gruppe Wasserstoff ist);
- G¹⁰: ist ein Rest der Formel (13a) 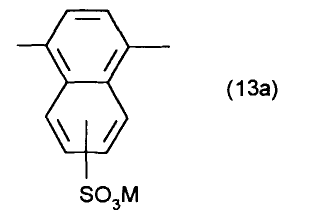 mit M der obengenannten Bedeutung;
- G¹¹: ist ein Rest der Formel (13b) 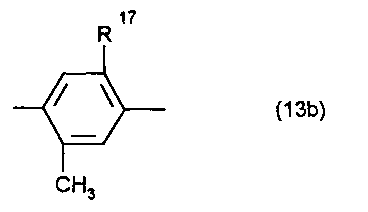 mit R¹⁷ der obengenannten Bedeutung;
in den Verbindungen der Formeln (12A), (12-Ia), (12K) und (12T) steht die Amino- bzw. Amidogruppierung am Naphtholrest in 2- oder 3-Stellung an den 8-Naphthol-Rest gebunden und in den Verbindungen der Formeln (12B), (12C), (12J), und (12S) steht die eine Gruppe -SO₃M im Naphtholrest in meta- oder para-Stellung zur Amino- bzw. Acylaminogruppe gebunden;
die freistehende, mit einem ∗ gekennzeichnete Bindung ist mit dem N-Atom einer Harnstoffgruppe gemäß Formel (1) verbunden.

Farbstoffreste Z¹ -Fb- bzw. Z²-Fb- sind insbesondere Reste entsprechend den allgemeinen Formeln (12 AA) bis (12 AP) 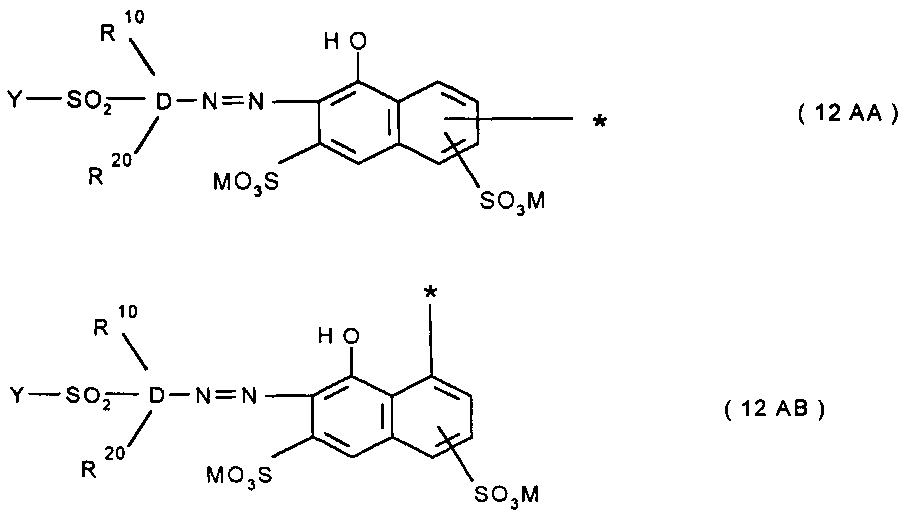 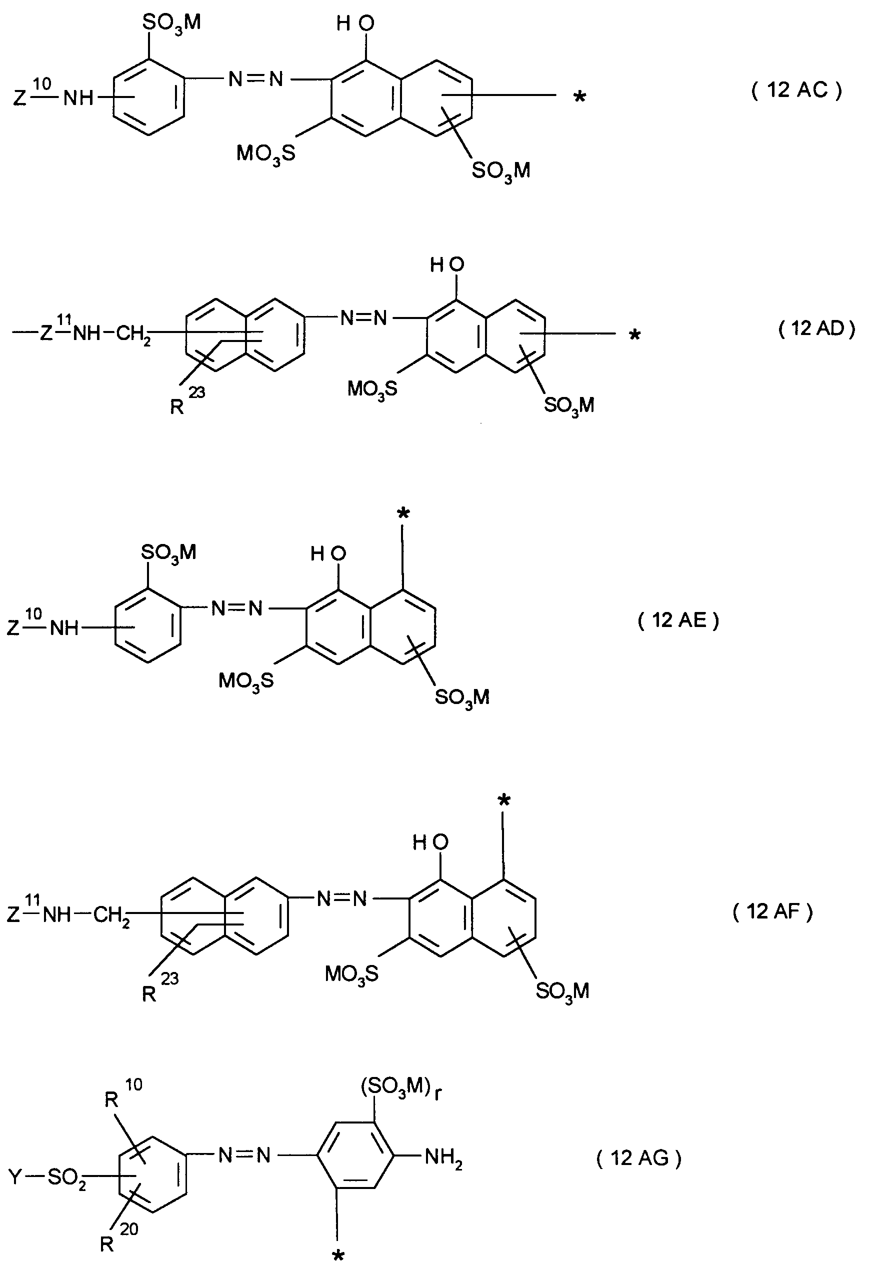 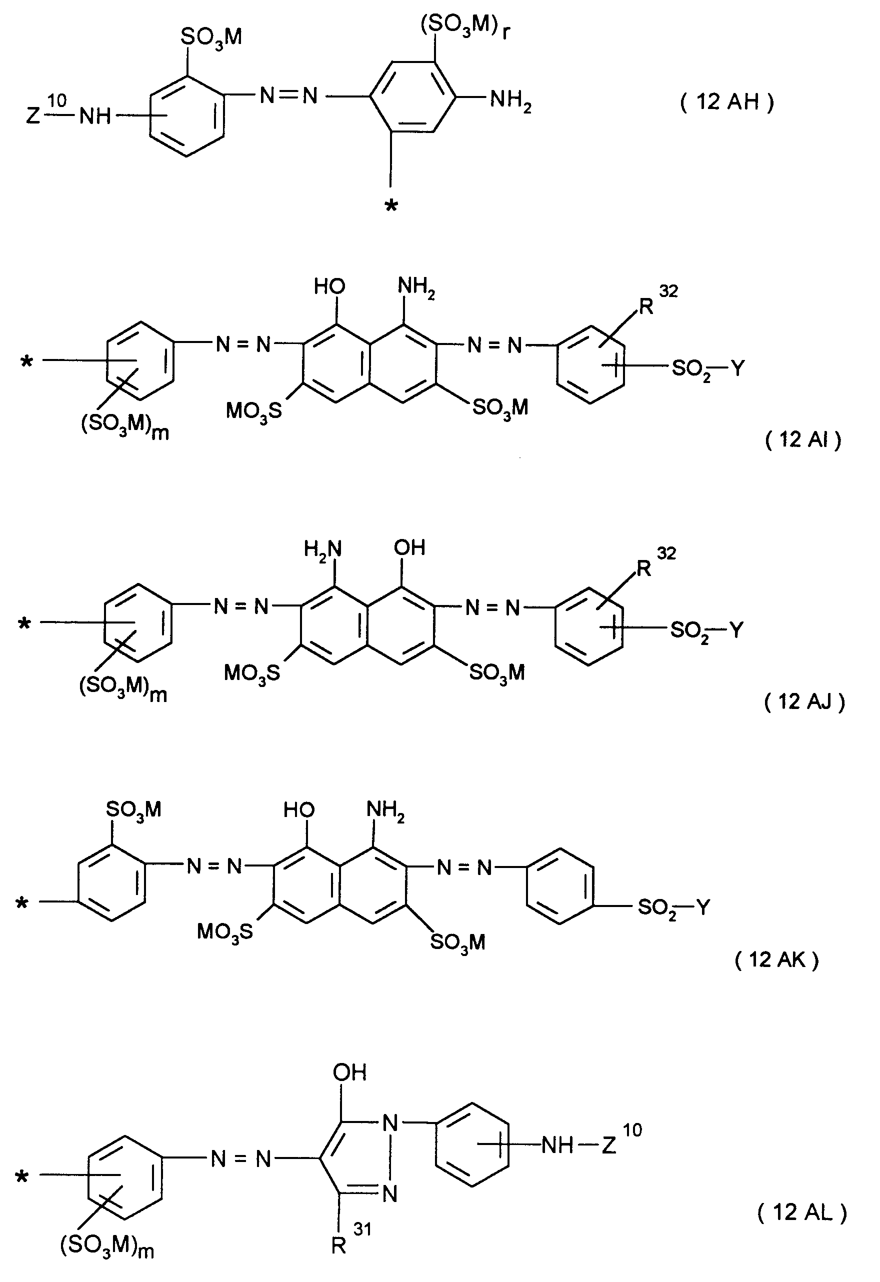 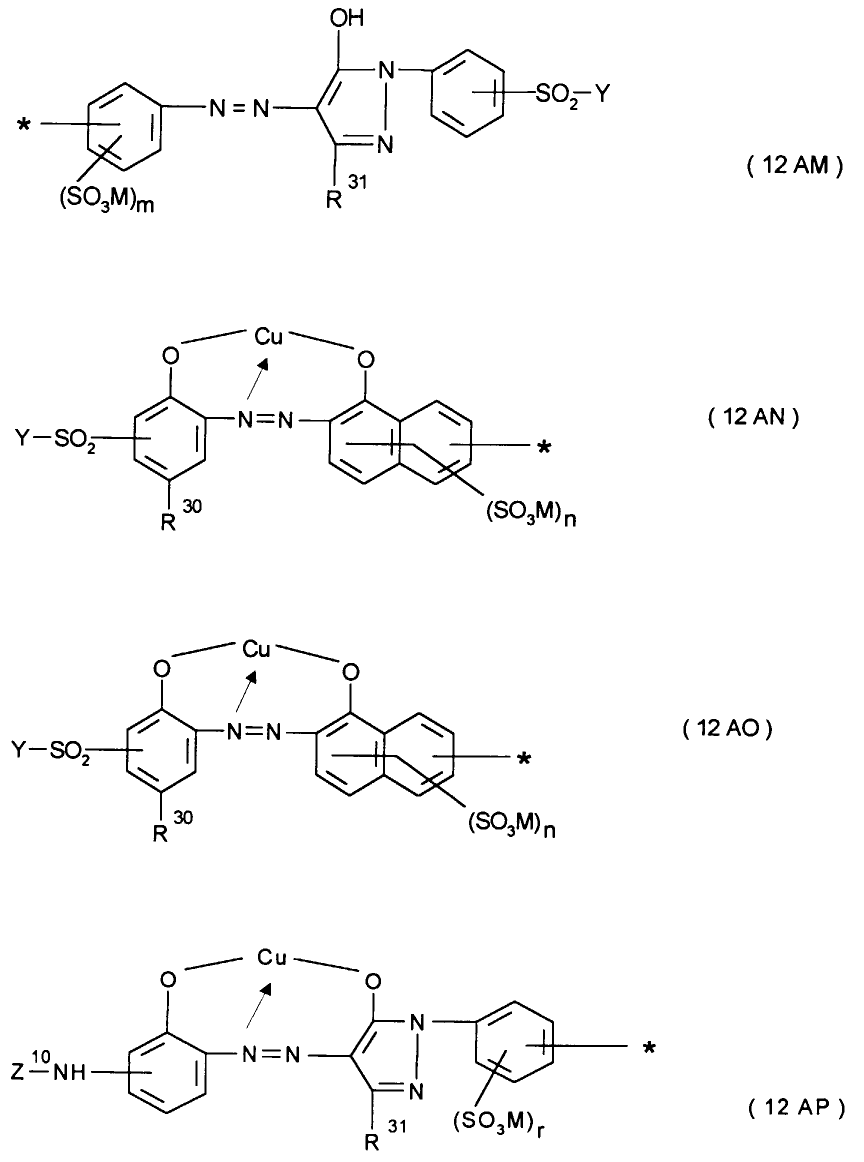 in welchen bedeuten:
- M, R¹⁰, R²⁰, R²³ und r: haben eine der obengenannten Bedeutungen;
- Y: hat eine der obengenannten, insbesondere bevorzugten Bedeutungen;
- n: ist die Zahl 1 oder 2;
- R³⁰: ist Wasserstoff, Methyl oder Methoxy;
- R³¹: ist Methyl oder Carboxy;
- R³²: ist Wasserstoff, Methoxy oder Sulfo;
- Z¹⁰: ist eine der obengenannten Gruppen der allgemeinen Formeln (11a) bis (11h);
- Z¹¹: ist eine Gruppe der obengenannten und definierten allgemeinen Formel (11h);
die freistehende, mit einem ∗ gekennzeichnete Bindung ist mit dem N-Atom einer Harnstoffgruppe gemäß Formel (1) verbunden.

Die vorliegende Erfindung betrifft weiterhin Verfahren zur Herstellung der obengenannten und definierten Farbstoffe der allgemeinen Formel (1). Diese sind dadruch gekennzeichnet, daß man ein Diisocyanat der allgemeinen Formel (20)

OCN - B - NCO (20)

in welcher B die obengenannte Bedeutung besitzt, mit der zweifach molaren Menge einer oder zweier Verbindungen der allgemeinen Formel (21)

Z - Fb - N(R)H (21)

in welcher Z eine der obengenannten Bedeutungen von Z¹ oder Z² besitzt und Fb und R die obengenannten Bedeutungen haben, umsetzt, wobei beim Einsatz von zwei verschiedenen Verbindungen (21) die Reste Z, Fb und R jeweils unterschiedliche Bedeutungen haben können,
oder daß man ein Diisocyanat der obengenannten und definierten allgemeinen Formel (20) mit der zweifach molaren Menge einer oder zweier Verbindungen der allgemeinen Formel (22)

H - Fb - N(R)H (22)

in welcher Fb und R die obengenannten Bedeutungen haben, umsetzt, wobei beim Einsatz von zwei verschiedenen Verbindungen (22) die Reste Fb und R zueinander gleiche oder voneinander verschiedene Bedeutungen besitzen können, und die so gebildete Verbindung der allgemeinen Formel (23) 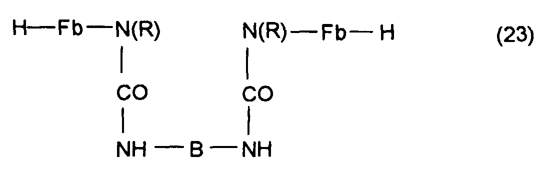 in welcher Fb, R und B die obengenannten Bedeutungen haben, mit der zweifach molaren Menge einer oder zweier Verbindungen der allgemeinen Formel (24)

Hal - Z (24)

in welcher Hal für Halogen, wie Brom oder bevorzugt Chlor oder Fluor, steht und Z eine der Bedeutungen von Z¹ oder Z² hat und bevorzugt der Rest einer heterocyclischen faserreaktiven Gruppe ist, umsetzt, wobei beim Einsatz von zwei verschiedenen Verbindungen (24) die Reste Hal und Z jeweils unterschiedliche Bedeutungen haben können,
oder daß man eine Verbindung der allgemeinen Formel (25) 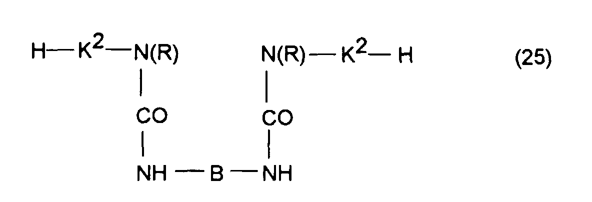 in welcher B und R eine der obengenannten Bedeutungen haben und K² der Rest einer Kupplungskomponente der Anilin-, Aminonaphthalin-, Diaminobenzol-, Acetessigsäure(aminoaryl)-amid-, 1-(Aminophenyl)-pyrazolon- oder 1-(Aminonaphthyl)-pyrazolon-Reihe ist, wobei R und K² jeweils zueinander gleiche oder verschiedene Bedeutungen haben können, mit der zweifach molaren Menge einer oder zweier Diazokomponenten, die aus den Verbindungen der allgemeinen Formeln Z¹-D¹-NH₂ und Z²-(NR)-D²-NH₂ ausgewählt sind, worin R, Z¹, Z², D¹ und D² die obengenannten Bedeutungen haben und im Falle des Einsatzes zweier Diazokomponenten diese jeweils zueinander gleiche oder verschiedene Bedeutungen besitzen können, kuppelt,
oder daß man eine durch Kupplung einer Verbindung der obengenannten und definierten allgemeinen Formel (25) mit der zweifach molaren Menge einer oder zweier Verbindungen der allgemeinen Formel H(R)N-D²-NH₂ erhältliche Verbindung der allgemeinen Formel (26) 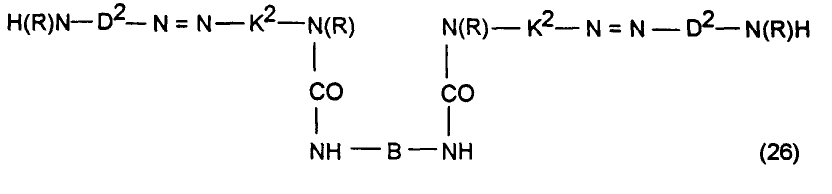 in welcher K², R, B und D² die obengenannten Bedeutungen haben, mit der zweifach molaren Menge einer oder zweier Verbindungen der obengenannten und definierten allgemeinen Formel (24) umsetzt,
oder daß man eine aus der Umsetzung einer Diisocyanat-Verbindung der allgemeinen Formel (20) mit der zweifach molaren Menge einer oder zweier Verbindungen der allgemeinen Formel H₂N-D²-N(R²)H erhältliche Verbindung der allgemeinen Formel (27) 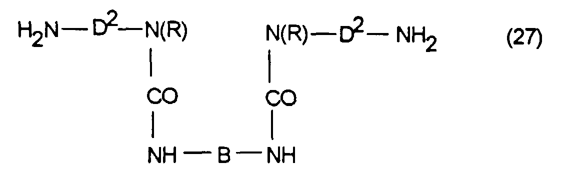 in welcher B, R und D² die obengenannten Bedeutungen haben, wobei D² und R jeweils eine gleiche oder verschiedene Bedeutung haben können, diazotiert und mit der zweifach molaren Menge einer oder zweier Kupplungskomponenten, die aus den Verbindungen der allgemeinen Formeln Z¹-K¹-H und Z²-N(R)-K²-K-H ausgewählt sind, worin R, Z¹, Z², K¹ und K² die obengenannten Bedeutungen haben und im Falle des Einsatzes zweier solcher Kupplungskomponenten jeweils zueinander gleiche oder verschiedene Bedeutungen besitzen können, kuppelt,
oder daß man eine durch Kupplung einer diazotierten Verbindung der obengennanten definierten allgemeinen Formel (27) mit der zweifach molaren Menge einer oder zweier Kupplungskomponenten der allgemeinen Formel H-K²-N(R)H erhältliche Verbindung der allgemeinen Formel (28) 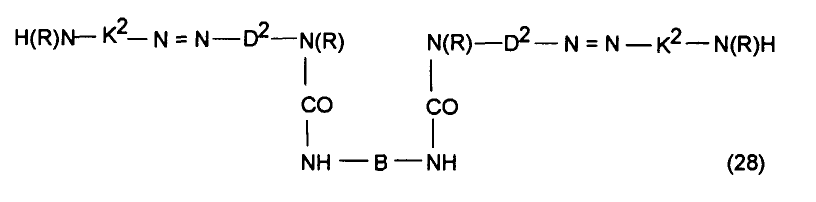 mit B, R, D² und K² der obengenannten Bedeutungen mit der zweifach molaren Menge einer oder zweier Verbindungen der allgemeinen Formel (24), in welcher Hal und Z die obengenannten Bedeutungen haben und Z bevorzugt der Rest einer heterocyclischen faserreaktiven Gruppe ist, umsetzt.

Die Umsetzung der Diisocyanate der allgemeinen Formel (20) mit den Verbindungen der allgemeinen Formeln (21), (22) und (25) erfolgt in an und für sich bekannter Verfahrensweise, so beispielsweise im wäßrigen oder wäßrigorganischen Medium in Suspension oder Lösung bei einem pH-Wert zwischen 3 und 10, bevorzugt zwischen 5 und 7, und einer Temperatur zwischen 0 und 80°C, bevorzugt zwischen 20 und 50°C. Führt man die Umsetzungen in einem wäßrig-organischen Medium durch, so ist das organische Medium ein gegenüber einem Isocyanat inertes Lösemittel, wie beispielsweise Dimethylacetamid, Dimethylsulfoxid und N-Methyl-pyrrolidon.

Entsprechendes gilt für die Umsetzungen von aminogruppenhaltigen Verbindungen mit einer Verbindung der allgemeinen Formel (24), die ebenso im wäßrigen oder im wäßrig-organischen Medium erfolgen können und unter üblichen Verfahrensbedingungen, wie beispielsweise bei einer Temperatur zwischen -5°C und +95°C und einem pH-Wert zwischen 2 und 10, durchgeführt werden, wobei man in der Regel im Falle von Hal gleich Chlor die Umsetzung bei einer Temperatur zwischen 0 und 95°C, bevorzugt zwischen 15 und 60°C, und bei einem pH-Wert zwischen 2 und 10, bevorzugt zwischen 4 und 7, und im Falle von Hal gleich Fluor die Umsetzung bei einer Temperatur zwischen 0 und 40°C, bevorzugt zwischen 5 und 25°C, und bei einem pH-Wert zwischen 3 und 9, bevorzugt zwischen 4 und 7, durchführt.

Erfolgt die erfindungsgemäße Herstellung der Farbstoffe der allgemeinen Formel (1) mittels eines Diazotierungs- und Kupplungsschrittes, so erfolgt dieser ebenso in an und für sich bekannter Verfahrensweise, so die Diazotierung in der Regel mittels salpetriger Säure bei einem pH-Wert unterhalb von 2 und einer Temperatur zwischen -10°C und + 10°C und die Kupplungsreaktion bei einer Temperatur zwischen 0 und 40°C, bevorzugt zwischen 10 und 25°C, und, abhängig von der Kupplungskomponente, im sauren, schwachsauren oder neutralen bis schwachalkalischen Bereich, wie bei einem pH-Wert zwischen 1 und 10, so im Falle einer aminogruppenhaltigen Kupplungskomponente bei einem pH-Wert zwischen 1 und 4 und im Falle einer hydroxygruppenhaltigen Kupplungskomponente bei einem pH-Wert zwischen 4 und 8.

Die Abscheidung der erfindungsgemäß hergestellten Farbstoffe der allgemeinen Formel (1) - im nachfolgenden Farbstoffe (1) genannt - aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Syntheselösung eine Puffersubstanz zugeführt werden kann.

Die Farbstoffe (1) besitzen sehr gute Farbstoffeigenschaften. Sie können deshalb zum Färben (einschließlich Bedrucken) von hydroxy- und/oder carbonamidgruppenhaltigem Material, insbesondere Fasermaterial, verwendet werden. Insbesondere sind die erfindungsgemäßen Farbstoffe sehr gut im Textildruck geeignet. Auch die bei der Synthese der erfindungsgemäßen Farbstoffe (1) anfallenden Lösungen können, gegebenenfalls nach Zusatz einer Puffersubstanz und gegebenenfalls nach Konzentrierung, direkt als Flüssigpräparation der färberischen Verwendung zugeführt werden. Die Farbstoffe (1) zeichnen sich durch eine hohe Faserreaktivität aus, und die mit ihnen erhaltenen Färbungen besitzen gute Naß- und Lichtechtheiten. Besonders hervorzuheben ist ihr hoher Fixierungsgrad auf dem zu färbenden Material.

Gegenstand der vorliegenden Erfindung ist deshalb auch die Verwendung der Farbstoffe (1) zum Färben von hydroxy- und carbonamidgruppenhaltigen Materialien bzw. Verfahren zu deren Anwendung auf diesen Substraten. Eingeschlossen sind hierbei die Massefärbung, beispielsweise Folien aus Polyamid, und das Färben durch Bedrucken. Bevorzugt kommen die Materialien in Form von Fasermaterialien zur Anwendung, insbesondere als Textilfasermaterialien, wie in Form von Geweben oder als Garne, wie in Form von Strängen und Wickelkörpern. Die Anwendung der Farbstoffe (1) erfolgt dabei in der Regel nach bekannten Färbe- und Druckmethoden, die insbesondere für faserreaktive Farbstoffe eingesetzt werden, wobei die Fixierung der Farbstoffe unter Einwirkung von Wärme oder mittels eines alkalisch wirkenden Agenz oder mittels beider Maßnahmen erfolgt.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4 und andere Superpolyamide.

Die Farbstoffe (1) lassen sich, wie bereits erwähnt, auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man nach den üblichen Druckverfahren für Cellulosefasern, die entweder einphasig durchgeführt werden können, beispielsweise durch Bedrucken mit einer Natriumcarbonat oder ein anderes säurebindendes Mittel und den Farbstoff (1) enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektkrolythaltiges alkalisches Bad oder durch Überklotzen mit einer alkalischen elektkrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig. Die mit den Farbstoffen (1) erhaltenen Fixiergrade sind sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe (1) auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalilmetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der Farbstoffe (1) mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Anteilen der Farbstoffe (1) ausgezeichnete Naßechtheiten, zumal sich solche nicht fixierten Anteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammonmiumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifachen molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material in das etwa 20 bis 40°C Färbebad eingebracht, einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den Farbstoffen (1) hergestellten Färbungen und Drucke zeichnen sich durch klare Nuancen aus. Insbesondere die Färbungen und Drucke auf Cellulosefasermaterialien besitzen, wie bereits erwähnt, darüber hinaus eine hohe Farbstärke, eine gute Lichtechtheit und sehr gute Naßechtheiten, wie Wasch-, Walk-, Wasser-, Seewasser-, Überfärbe- und Schweißechtheiten, des weiteren eine gute Plissierechtheit, Bügelechtheit und Reibechtheit. Die Farbstoffe (1) sind leicht ätzbar, und die erfindungsgemäßen Färbungen können deshalb als leicht ätzbarer Fond im Ätzdruck, wie bspw. unter den Bedingungen der alkalischen oder reduktiven Ätze im Kupenätzdruck, dienen.

Besonders hervorzuheben sind die mit den erfindungsgemäßen Farbstoffen auf Cellulosefasermaterialien erzielbaren hohen Fixierausbeuten. Ein weiterer Vorteil der Farbstoffe (1) besteht in der leichten Auswaschbarkeit der beim Druck- oder Färbevorgang nicht fixierten Anteile, wodurch der Waschvorgang der bedruckten oder gefärbten Cellulosefasermaterialien mit geringen Waschflottenmengen und gegebenenfalls einer energiesparenden Temperaturführung während des Waschvorganges bewerkstelligt werden kann. Des weiteren sind die Farbstoffe (1) sehr gut in Färbeprozesse einsetzbar, die mit geringen Salzmengen, wie Natriumsulfat und Natriumchlorid, bspw. von weniger als 40 g pro Liter Färbeflotte, durchgeführt werden. Auch hier werden farbstarke Färbungen hoher Qualität erhalten.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

a) 0,5 Mol Toluylen-2,4-diisocyanat werden langsam in eine Lösung von 1 Mol 1-Amino-8-hydroxy-naphthalin-3,6-disulfonsäure in 3000 ml Wasser unter Einhaltung eines pH-Wertes von 6 bis 7 und einer Temperatur von 22 bis 30°C gegeben. Man rührt noch einige Zeit bis zur Beendigung der Umsetzung nach, kühlt den Ansatz auf 10 bis 15°C ab, rührt noch etwa eine Stunde nach und isoliert das ausgefallene kristalline Produkt der Formel 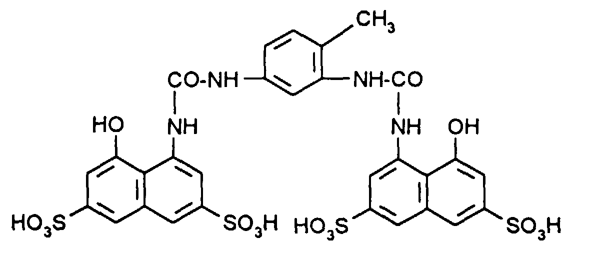 als Alkalimetallsalz (Natriumsalz).
b) Man diazotiert in üblicher Weise 0,1 Mol 4-(β-Sulfatoethylsulfonyl)-anilin in 500 ml Wasser und 0,25 Mol Salzsäure mittels 0,11 Mol Natriumnitrit bei 0 bis 5°C, rührt die erhaltene Diazoniumsalzsuspension unter Einhaltung eines pH-Wertes von 5 bis 6 und einer Temperatur von 15 bis 20°C in 1000 ml einer wäßrigen Lösung von 0,05 Mol der gemäß Abschnitt a) hergestellten Verbindung und führt die Kupplungsreaktion bei etwa 22°C und einem pH-Wert von 6 bis 6,5 zu Ende.
   Der erfindungsgemäße Farbstoff der Formel (in Form der freien Säure geschrieben) 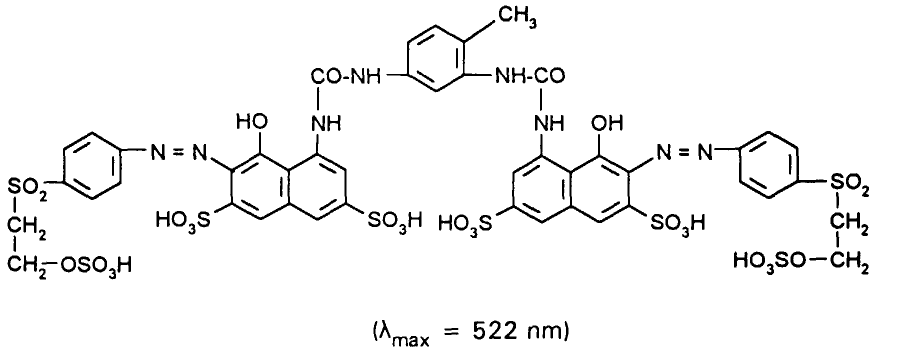 wird in üblicher Weise als Alkalimetallsalz, wie Natrium- oder Kaliumsalz, beispielsweise durch Aussalzen mit Kaliumchlorid oder durch Sprühtrocknung, isoliert. Er färbt nach den in der Technik für faserreaktive Farbstoffe üblichen Anwendungsverfahren die in der Beschreibung genannten Fasermaterialien, wie beispielsweise Baumwolle, in farbstarken, roten, echten Farbtönen. Die mit ihm hergestellten Färbungen sind vorteilhaft besonders leicht durch Alkalien oder reduktiv ätzbar; die mit ihm erhältlichen Färbungen eignen sich deshalb hervorragend als Ätzfonds, beispielsweise in der Verwendung des Küpenätzdrucks. Der Farbstoff ist ebenfalls gut einsetzbar in Klotz-Kaltverweil-Färbeverfahren sowie in den ökologisch vorteilhaften Ausziehverfahren, die nur mit einem niedrigen Elektrolytsalzgehalt arbeiten ( 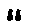 Low-Salt 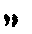 -Ausziehfärbeverfahren).

### Beispiel 2

a) Zu einer Lösung von 1 Mol 1-Amino-8-hydroxy-naphthalin-3,6-disulfonsäure in 4500 ml Wasser gibt man langsam unter Einhaltung eine pH-Wertes von 5 bis 6 und einer Temperatur von 30 bis 35°C 0,5 Mol Diphenylmethan-4,4'-diisocyanat und rührt den Ansatz noch einige Zeit bis zur beendeten Umsetzung bei dieser Temperatur nach, kühlt ihn sodann auf 15 bis 20°C ab, rührt nochmals etwa eine Stunde nach und isoliert das auskristallisierte Produkt der Formel 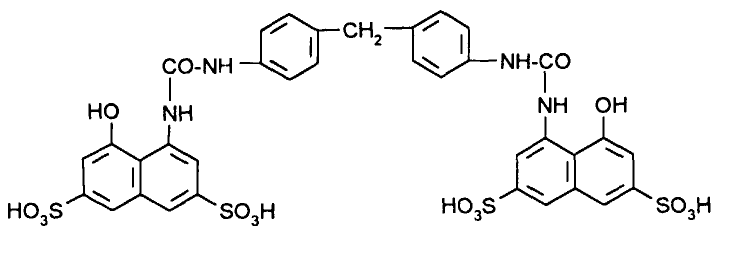 als Alkalimetallsalz.
b) Man rührt eine gemäß Beispiel 1a) hergestellte Diazoniumsalzsuspension unter Einhaltung eines pH-Wertes zwischen 5,5 und 6,5 und einer Temperatur von 15 bis 20°C in 1200 ml einer wäßrigen Lösung von 0,05 Mol der gemäß Abschnitt b) hergestellten Ausgangsverbindung und führt die Kupplungsreaktion bei dieser Temperatur und einem pH-Wert zwischen 5 und 6 zu Ende.
   Man isoliert den erfindungsgemäßen Farbstoff der Formel (in Form der freien Säure geschrieben) 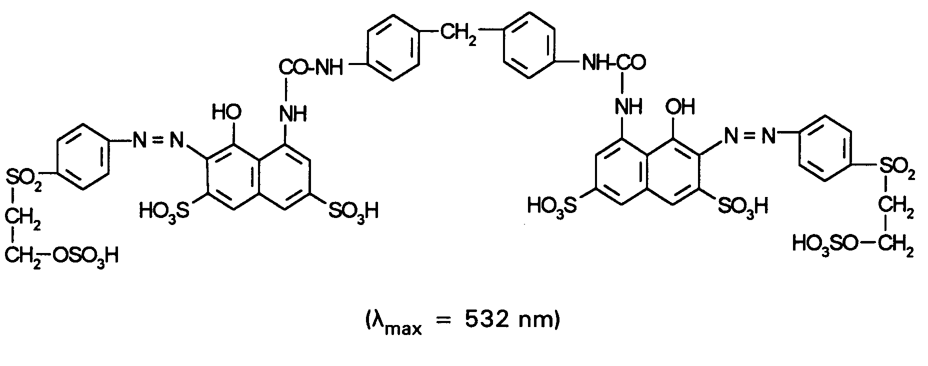 aus der Syntheselösung in üblicher Weise, beispielsweise durch Aussalzen mit Natriumchlorid oder durch Sprühtrocknung, als Alkalimetallsalz (Natriumsalz). Er färbt nach den für faserreaktive Farbstoffe üblichen Anwendungsverfahren beispielsweise Baumwolle in farbstarken, roten Tönen mit guten Echtheitseigenschaften; die mit ihm hergestellten Färbungen lassen sich sehr leicht durch Alkalien oder reduktiv ätzen, die sich somit hervorragend als Fonds im Küpenätzdruck eignen. Desweiteren ist der erfindungsgemäße Farbstoff sehr gut im Klotz-Kaltverweil-Färbeverfahren und im 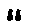 Low-Salt 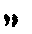 -Ausziehfärbeverfahren geeignet.

### Beispiel 3

0,1 Mol der bekannten Verbindung 3-(2',4'-Difluor-pyrimidin-6'-yl)-amino-6-sulfo-anilin werden in üblicher Weise bei 0 bis 5°C in 400 ml Wasser und 0,22 Mol Salzsäure mittels 0,11 Mol Natriumnitrit diazotiert. Die erhaltene Diazoniumsalzsuspension gibt man unter Einhaltung eines pH-Wertes von 5,5 bis 6,5 und einer Temperatur von 15 bis 20°C in 850 ml einer wäßrigen Lösung von 0,05 Mol der gemäß Beispiel 1a) erhaltenen Ausgangsverbindung und führt die Kupplungsreaktion noch einige Zeit unter langsamer Erwärmung auf 20 bis 25°C und bei einem pH-Wert von 5 bis 6 zur Beendigung der Kupplungsreaktion zu Ende.
Man isoliert den erfindungsgemäßen Farbstoff (in Form der freien Säure geschrieben) 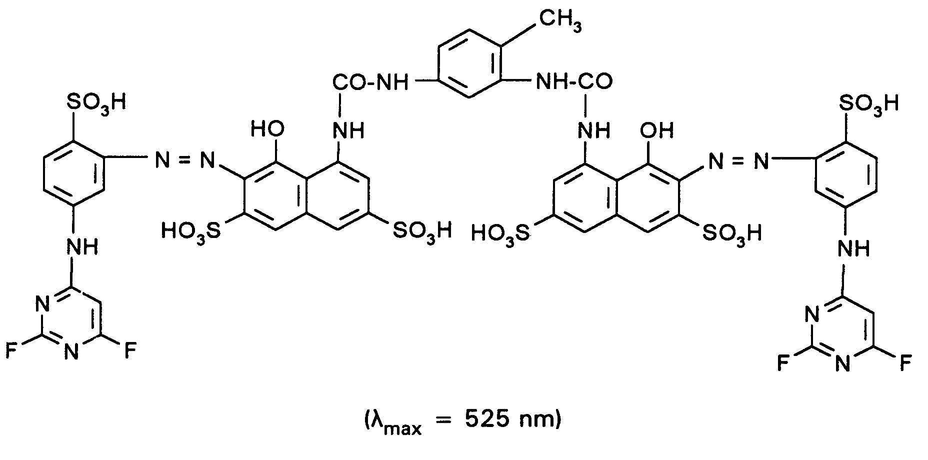 in üblicher Weise. Er färbt nach den üblichen Färbe- und Druckverfahren die in der Beschreibung genannten Fasermaterialien, wie beispielsweise Baumwolle, in farbstarken, roten und echten Tönen und eignet sich insbesondere gut für das 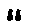 Low-Salt 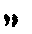 -Ausziehfärbeverfahren und das Klotz-Kaltverweil-Färbeverfahren.

### Beispiel 4

a) Eine Lösung von 0,1 Mol des Natriumsalzes von 2-Sulfo-anilin und 0,1 Mol Natriumfluorid in 300 ml Wasser versetzt man unter gutem Rühren bei 0 bis 3°C mit 0,11 Mol Cyanurfluorid und rührt unter Einhaltung eines pH-Wertes von 3 bis 4 den Ansatz noch etwa 15 Minuten nach, gibt sodann eine Lösung von 0,1 Mol 2,4-Diaminobenzol-sulfonsäure in 400 ml eines Gemisches aus Wasser und Eis unter Einhaltung eines pH-Wertes von 6 hinzu und rührt unter diesen Reaktionsbedingungen den Ansatz bis zur Umsetzung zur Monofluortriazin-Verbindung nach. Diese wird in üblicher Weise nach Zugabe von Salzsäure mittels 0,11 Mol Natriumnitrit bei einer Temperatur von 0 bis 5°C und einem pH-Wert von 1,5 bis 2 diazotiert.
b) Die gemäß a) hergestellte Diazoniumsalzsuspension gibt man langsam unter Rühren und Einhaltung eines pH-Wertes von 5,5 bis 6,5 und einer Temperatur von 15 bis 20°C zu 850 ml einer wäßrigen Lösung von 0,05 Mol der gemäß Beispiel 1a) hergestellten Ausgangsverbindung und führt die Kupplungsreaktion bei 20 bis 25°C und einem pH-Wert von 5 bis 6 zu Ende.

Der erfindungsgemäße Farbstoff (in Form der freien Säure geschrieben) 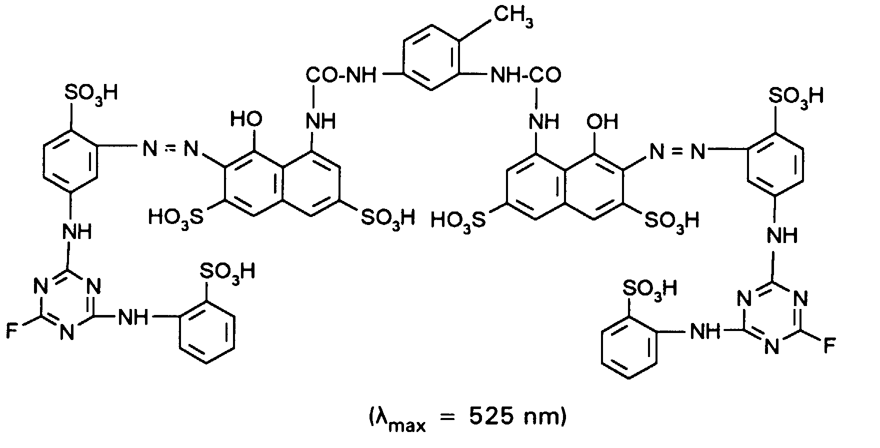 wird in üblicher Weise isoliert, beispielsweise durch Aussalzen mit Kaliumchlorid oder Sprühtrocknung, und färbt beispielsweise Baumwolle in kräftigen, roten, echten Tönen, insbesondere vorteilhaft in 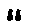 Low-Salt 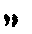 -Ausziehfärbeverfahren und Klotz-Kaltverweil-Färbeverfahren.

### Beispiel 5

a) Man rührt langsam 0,5 Mol Toluylen-2,4-diisocyanat zu einer Lösung von 1 Mol 2,4-Diamino-benzolsulfonsäure in 4000 ml Wasser bei Einhaltung eines pH-Wertes von etwa 6 und einer Temperatur von 25 bis 30°C, rührt den Ansatz bis zur vollständigen Umsetzung nach, kühlt ihn auf 15 bis 20°C ab, rührt noch eine Stunde nach und isoliert die Verbindung der Formel (in Form der freien Säure geschrieben) 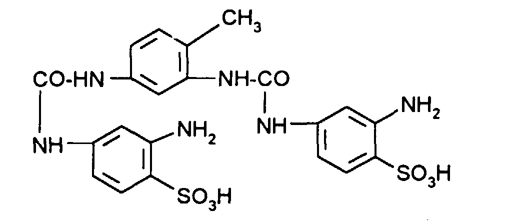 als Alkalimetallsalz (Natriumsalz) durch Aussalzen mit Natriumchlorid.
b) 0,1 Mol der gemäß a) hergestellten harnstoffgruppenhaltigen Ausgangsverbindung wird in üblicher Weise bei 0 bis 5°C mittels 0,22 Mol Natriumnitrit in einem Gemisch aus 500 ml Wasser und 0,5 Mol Salzsäure diazotiert, und die erhaltene Diazoniumsalzsuspension wird unter Einhaltung eines pH-Wertes von 5,5 bis 6,5 und einer Temperatur von 15 bis 20°C in eine Lösung von 0,2 Mol 1-(4'-Morpholino-2'-fluor-1',3',5'-triazin-6'-yl)-amino-8-hydroxy-3,6-disulfonsäure (erhältlich gemäß EP-A-0 542 082) in 1200 ml Wasser eingerührt. Man rührt noch einige Zeit zur Beendigung der Kupplungsreaktion bei 22 bis 25°C und einem pH-Wert von 5 bis 6 nach.

Der synthetisierte erfindungsgemäße Farbstoff besitzt, in Form der freien Säure geschrieben, die Formel 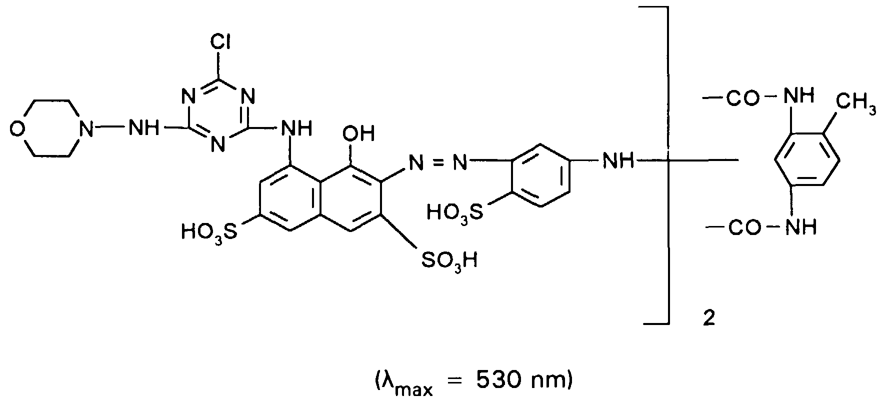 und färbt beispielsweise die in der Beschreibung genannten Fasermaterialien, wie Cellulosefasermaterialien, beispielsweise Baumwolle, in farbstarken, roten Tönen mit guten Echtheitseigenschaften und hoher Fixierquote selbst in tiefen Tönen. Er ist sehr gut im 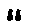 Low-Salt 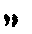 -Ausziehfärbeverfahren und im Klotz-Kaltverweil-Färbeverfahren einsetzbar.

### Beispiel 6

Zur Herstellung eines erfindungsgemäßen Disazofarbstoffes verfährt man gemäß der Verfahrensweise des Beispiels 5, setzt jedoch anstelle der dort verwendeten Kupplungskomponente die äquivalente Menge an 1-[4'-(4''-Sulfophenyl)-amino-2'-chlor-s-triazin-6'-yl]-amino-8-hydroxy-3,6-disulfonsäure ein. Der erfindungsgemäße Farbstoff besitzt, in Form der freien Säure geschrieben, die Formel 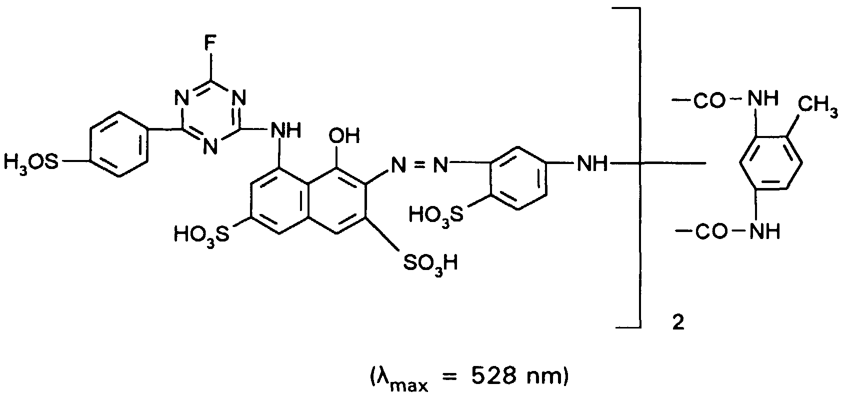 und färbt beispielsweise Baumwolle in farbstarken, roten Tönen bei hohen Fixierquoten selbst noch in tiefen Tönen. Er ist sehr gut in 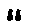 Low-Salt 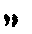 -Ausziehfärbeverfahren und in den Klotz-Kaltverweil-Färbeverfahren geeignet.

### Beispiel 7

Man setzt gemäß den Angaben des Beispieles 5a) Toluylen-2,4-diisocyanat mit 2,4-Diamino-benzol-sulfonsäure um, diazotiert 0,1 Mol der erhaltenen Verbindung und rührt die erhaltene Diazoniumsuspension langsam in 1200 ml einer wäßrigen Lösung von 0,2 Mol der Verbindung 1-[4'-(3''-Sulfophenyl)-amino-2'-chlor-s-triazin-6'-yl]-amino-8-hydroxy-4,6-disulfonsäure (erhältlich in üblicher Weise durch Umsetzung von Cyanurchlorid mit dem Aminonaphtol und anschließend mit dem Anilin) unter Einhaltung eines pH-Wertes von 5,5 bis 6,5 und einer Temperatur von 15 bis 20°C ein. Man führt die Kupplungsreaktion anschließend unter weiterem Rühren bei 22 bis 25°C und einem pH-Wert von 5 bis 6 zu Ende.

Der erhaltene erfindungsgemäße Farbstoff besitzt, in Form der freien Säure geschrieben, die Formel 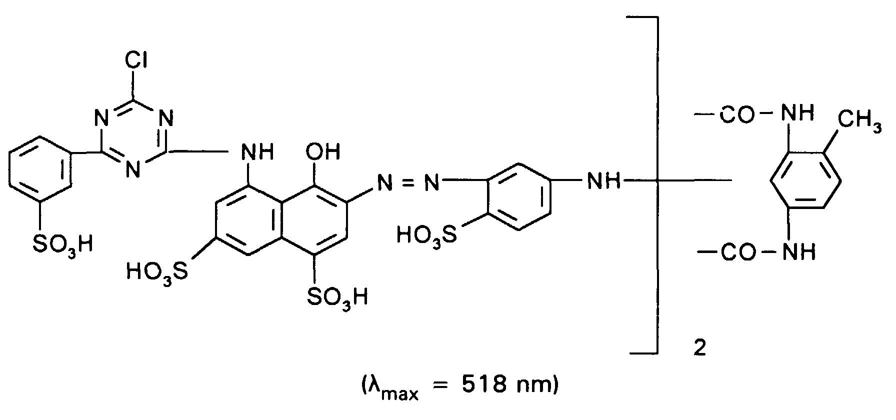 und liefert nach den in der Technik für faserreaktive Farbstoffe üblichen Färbe- und Druckverfahren farbstarke, rote Färbungen und Drucke mit guten Echtheitseigenschaften. Er eignet sich sehr gut in 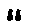 Low-Salt 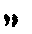 -Ausziehfärbeverfahren und Klotz-Kaltverweil-Färbeverfahren und weist selbst bei Färbungen mit tiefen Tönen eine hohe Fixierquote auf.

### Beispiel 8

Man verfährt gemäß der Verfahrensweise des Beispieles 5b), setzt jedoch anstelle der dort verwendeten Kupplungskomponente 0,2 Mol der in bekannter Weise erhältlichen Verbindung 1-[4'-(2'',4''-Difluor-5''-chlor-pyrimidin-6''-yl)-amino-benzoyl]-amino-8-hydroxy-3,6-disulfo-naphthalin ein. Man erhält den erfindungsgemäßen Farbstoff der Formel (in Form der freien Säure geschrieben) 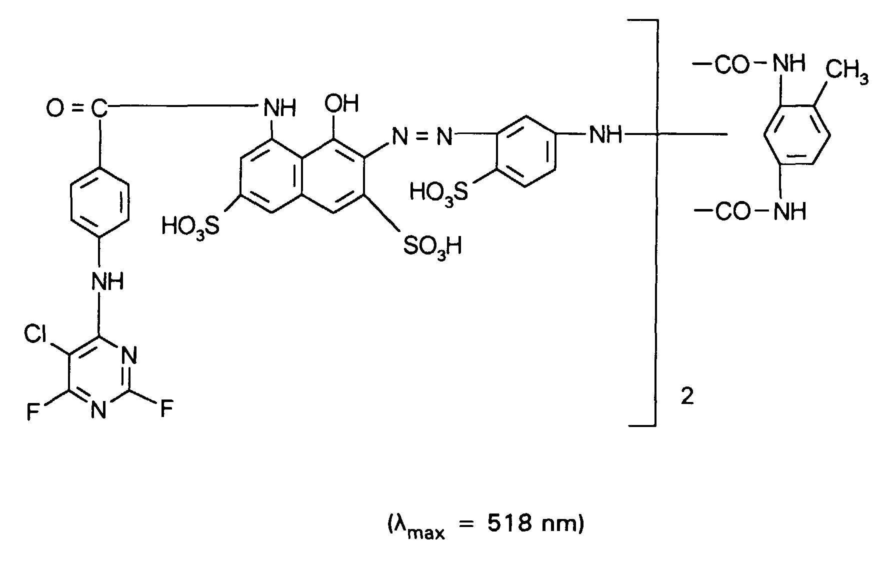 in üblicher Weise aus der Syntheselösung durch Aussalzen mit Natriumchlorid oder durch Sprühtrocknung. Beispielsweise auf cellulosefaserhaltigen Materialien, wie Baumwolle, liefert er farbstarke, rote Färbungen mit guten Echtheitseigenschaften bei hoher Fixierquote selbst in noch tiefen Tönen. Er ist insbesondere sehr gut für das 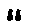 Low-Salt 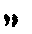 -Ausziehfärbeverfahren und für das Klotz-Kaltverweil-Färbeverfahren geeignet.

### Beispiel 9

Man setzt gemäß der Verfahrensweise des Beispieles 5a) 0,5 Mol Benzol-1,3-diisocyanat mit 1 Mol 1,4-Diamino-2,6-disulfo-benzol um und diazotiert sodann 0,1 Mol der so erhaltenen Ausgangsverbindung in üblicher Weise zum Bis-Diazoniumsalz. Die erhaltene Bis-Diazoniumsalz-Suspension wird unter gutem Rühren in eine Lösung von 0,2 Mol 1-{4'-[3''-(β-Sulfatoethylsulfonyl)-phenyl]-amino-2'-chlor-1',3',5'-triazin-6'-yl}-amino-8-hydroxy-3,6-disulfo-naphthalin in 2000 ml Wasser unter Einhaltung eines pH-Wertes zwischen 5,5 bis 6,5 und einer Temperatur von 15 bis 20°C eingerührt und die Kupplungsreaktion bei einem pH-Wert von 5 bis 6 und einer Temperatur von 22 bis 25°C zu Ende geführt.

Der erfindungsgemäße Disazofarbstoff besitzt (in Form der freien Säure geschrieben) die Formel 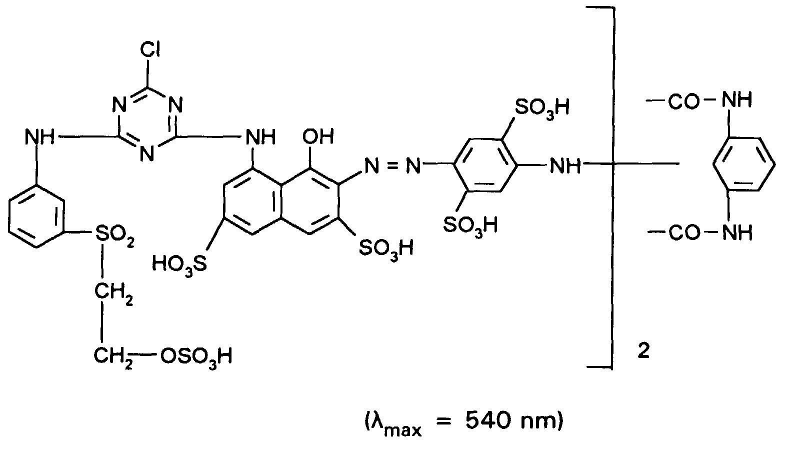 und färbt beispielsweise Baumwolle in farbstarken, kräftigen Tönen mit guten Echtheitseigenschaften bei hoher Fixierquote selbst noch in tiefen Tönen. Er eignet sich insbesondere gut im 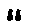 Low-Salt 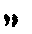 -Ausziehfärbeverfahren und in einem Klotz-Kaltverweil-Färbeverfahren.

### Beispiel 10

Man setzt gemäß der Verfahrensweise des Beispieles 5a) 0,5 Mol Benzol-1,3-diisocyanat mit 1 Mol 1,3-Diaminobenzol-6-sulfonsäure um und diazotiert 0,1 Mol der erhaltenen harnstoffgruppenhaltigen Verbindung in der dort angegeben Weise zum Bis-Diazoniumsalz.
Die hergestellte Bis-Diazoniumsalz-Suspension wird sodann unter Einhaltung eines pH-Wertes zwischen 5,5 und 6,5 und einer Temperatur von 15 bis 20°C unter gutem Rühren in eine Lösung von 0,2 Mol 1-{4'-[N-Phenyl-N-β-(β*'*-sulfatoethylsulfonyl)-ethyl]-amino-4'-fluor-1',3',5'-triazin-6'-yl}-amino-8-hydroxy-3,6-disulfo-naphthalin (erhältlich gemäß Beispiel 1 der EP-A-0 568 876) in 2000 ml Wasser eingerührt; man führt die Kupplungsreaktion unter Weiterrühren bei 22 bis 25°C und einem pH-Wert von 5 bis 6 zu Ende.

Der so synthetisierte erfindungsgemäße Farbstoff besitzt die Formel (in Form der freien Säure geschrieben) 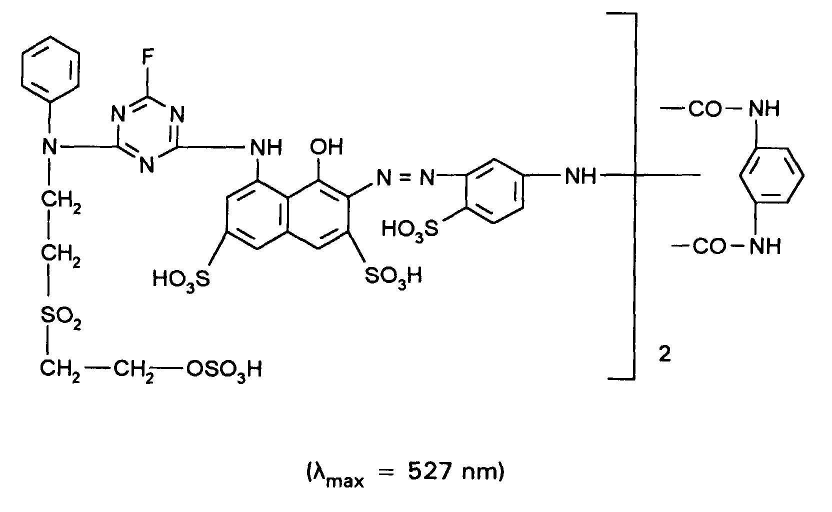 und färbt beispielsweise Baumwolle in farbstarken, kräftigen, roten Tönen mit guten Echtheitseigenschaften bei hohen Fixierquoten selbst noch in tiefen Tönen. Insbesondere eignet er sich für das 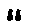 Low-Salt 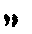 -Ausziehfärbeverfahren und für Klotz-Kaltverweil-Färbeverfahren.

### Beispiel 11

Zur Herstellung eines erfindungsgemäßen Tetrakisazofarbstoffes verfährt man gemäß der Verfahrensweise des Beispiels 10, setzt jedoch anstelle der dort verwendeten Kupplungskomponente in die Kupplungsreaktion 0,2 Mol der in bekannterweise erhältlichen Monoazoverbindung 2-[4'-(β-Sulfatoethysulfonyl)phenyl]-azo-1-amino-8-hydroxy-3,6-disulfonaphthalin ein.
Der synthetisierte erfindungsgemäße Farbstoff besitzt (in Form der freien Säure geschrieben) die Formel 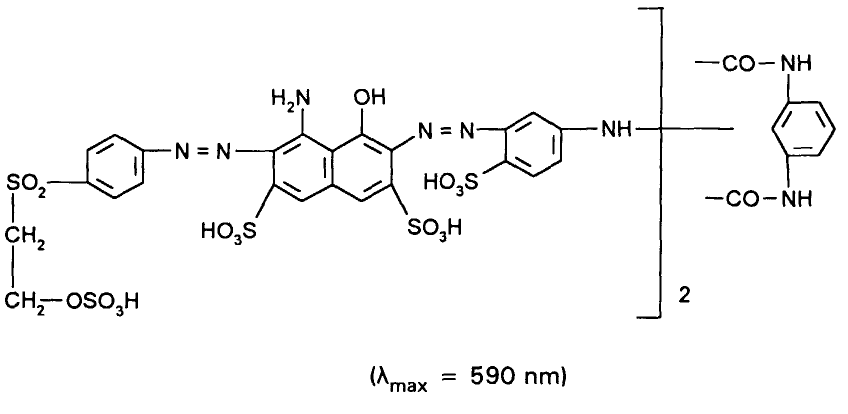 und läßt sich aus der Syntheselösung in üblicher Weise, beispielsweise durch Aussalzen mit Natriumchlorid oder durch Sprühtrocknung, isolieren. Er färbt die in der Beschreibung genannten Fasermaterialien, wie insbesondere Baumwolle, in marineblauen bis schwarzen Tönen mit guten Echtheitseigenschaften in hoher Fixierquote selbst noch bei sehr tiefen Farbtönen. Er ist weiterhin besonders gut in 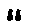 Low-Salt 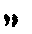 -Ausziehfärbeverfahren geeignet.

### Beispiel 12

Zur Herstellung einer erfindungsgemäßen Disazoverbindung diazotiert man 0,1 Mol der in Beispiel 5a) beschriebenen harnstoffgruppenhaltigen Ausgangsverbindung, rührt die erhaltene Bis-Diazoniumsalz-Suspension unter Einhaltung eines pH-Wertes von 4 bis 5 und einer Temperatur von 15 bis 20°C langsam in eine Lösung von 0,2 Mol 1-[4'-(β-Sulfatoethysulfonyl)-phenyl]-3-methyl-pyrazol-5-on in 2000 ml Wasser ein und führt die Kupplungsreaktion bei 20 bis 25°C und in dem angegebenen pH-Bereich zu Ende.
Der erhaltene erfindungsgemäße Disazofarbstoff besitzt, in Form der freien Säure geschrieben, die Formel 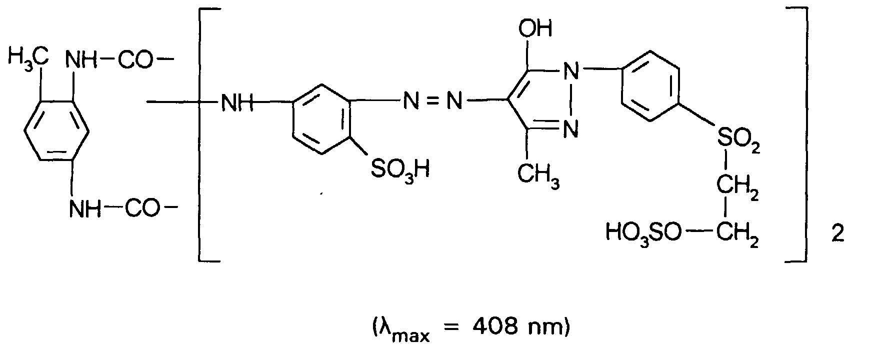 und kann in üblicher Weise durch Aussalzung oder Sprühtrocknung isoliert werden. Er färbt die in der Beschreibung genannten Fasermaterialien, wie beispielsweise Baumwolle, in brillanten grünstichig gelben, echten Tönen in hoher Fixierquote. Der Farbstoff eignet sich zudem auch sehr gut für 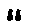 Low-Salt 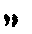 -Ausziehfärbeverfahren.

### Beispiel 13

Man setzt gemäß der Verfahrensweise des Beispieles 2a) 0,5 Mol Diphenylmethan-4,4'-diisocyanat mit 1 Mol 1,3-Diamino-benzol-6-sulfonsäure um und diazotiert 0,1 Mol der erhaltenen harnstoffgruppenhaltigen Ausgangsverbindung zum Bis-Diazoniumsalz. Man rührt die salzsaure wäßrige Suspension dieses Diazoniumsalzes langsam unter Einhaltung eines pH-Wertes von 5 bis 6 und einer Temperatur von 20 bis 25°C in eine Lösung von 0,2 Mol 1-[β-(2',4'-Difluor-5'-chlor-pyrimidin-6'-yl)-aminoethyl]-3-methyl-4-aminocarbonyl-2-hydroxy-pyrid-2-on in 2000 ml Wasser und führt die Kupplungsreaktion innerhalb dieses pH- und Temperatur-Bereiches unter Weiterrühren zu Ende.

Der erfindungsgemäße Farbstoff der Formel (in Form der freien Säure geschrieben) 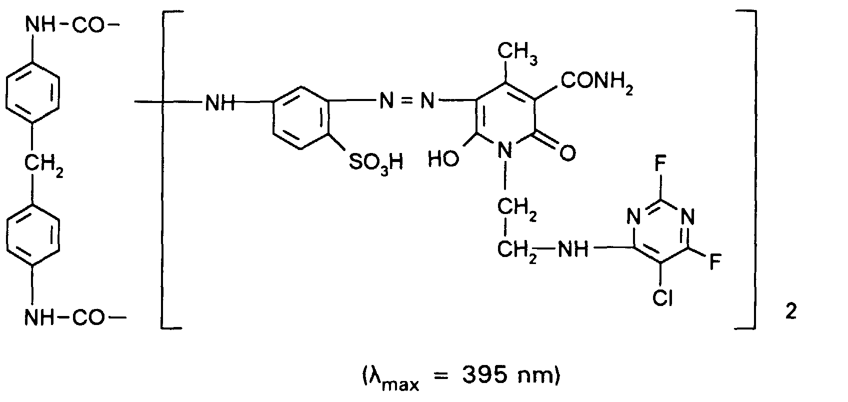 wird in üblicher Weise isoliert und färbt beispielsweise Baumwolle in brillanten grünstichig gelben Farbtönen in guten Echtheitseigenschaften mit hoher Fixierquote. Der Farbstoff eignet sich insbesondere auch sehr gut im 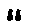 Low-Salt 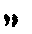 -Ausziehfärbeverfahren.

### Beispiel 14

Zu einer Lösung von 0,2 Mol Acetessigsäure-(3-aminophenyl)-amid in 2000 ml Wasser rührt man unter Einhaltung eines pH-Wertes von 5 bis 6 und einer Temperatur von 0 bis 5°C eine frisch zubereitete Lösung von 0,2 Mol 2,6-Difluor-4-(3'-sulfophenyl)-amino-1,3,5-triazin (erhältlich durch Umsetzung von Cyanurfluorid mit dem Lithiumsalz des 3-Sulfo-anilins bei etwa 0°C und einem pH-Wert zwischen 3 und 4) ein und führt die Umsetzung innerhalb dieses Temperatur- und pH-Bereiches zu Ende.
Zu der so hergestellten Kupplungskomponente gibt man langsam unter Rühren eine gemäß den Angaben des Beispieles 5a) hergestellte Diazoniumsalz-Suspension aus 0,1 Mol des Umsetzungsproduktes aus Toluylen-2,4-diisocyanat und 1,3 Diaminobenzol-4-sulfonsäure, wobei in üblicher Weise durch Zugabe eines säurebindenden Mittels, wie beispielsweise einer wäßrigen Natriumcarbonatlösung, ein pH-Wert zwischen 5 und 6 gehalten wird. Man rührt den Ansatz noch einige Zeit unterhalb 25°C und innerhalb dieses pH-Bereiches nach und isoliert den erfindungsgemäßen Disazofarbstoff in üblicher Weise. Er besitzt, in Form der freien Säure geschrieben, die Formel 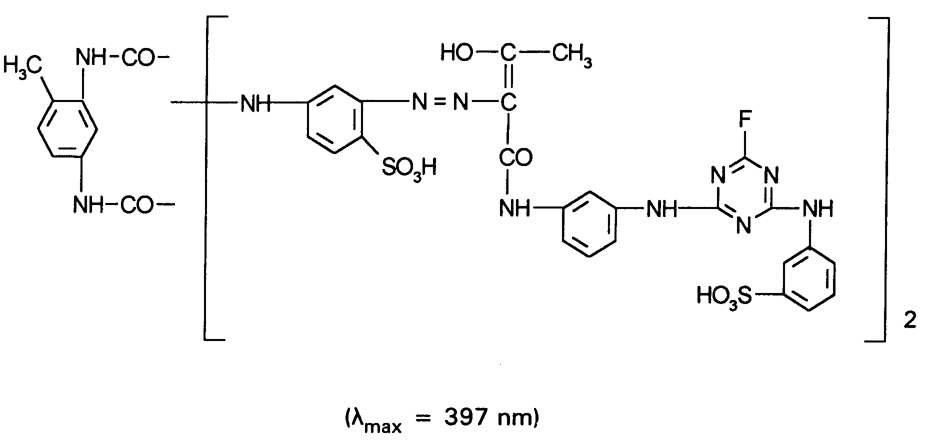 und liefert beispielsweise auf Baumwolle nach den in der Technik für faserreaktive Farbstoffe üblichen Färbe- und Druckverfahren brillante grünstichig gelbe Färbungen mit guten Echtheitseigenschaften.

### Beispiel 15

Zu einer Lösung von 0,2 Mol 3-Amino-phenylharnstoff in 2000 ml Wasser gibt man unter Einhaltung eines pH-Wertes von 5 bis 6 bei 0 bis 5°C eine frisch zubereitete, eiskalte wäßrige Lösung von 0,2 Mol 2',6'-Difluor-4'-[N-phenyl-N-β-(β*'*-sulfatoethylsulfonyl)-ethyl]-amino-1,3,5-triazin (erhältlich gemäß Beispiel 1 der EP-A-0 568 860) und setzt nach beendeter Umsetzung zur Monofluortriazin-Verbindung zu der so hergestellten Kupplungskomponente eine gemäß Beispiel 5 hergestellte Diazoniumsalzssuspension aus 0,1 Mol des Umsetzungsproduktes aus 1,3-Benzoldiisocyanat und 1,3-Diaminobenzol-4-sulfonsäure langsam und unter Einhaltung eines pH-Wertes von 5 bis 6 und einer Temperatur von 20 bis 25°C hinzu. Man rührt noch einige Zeit unter diesen Reaktionsbedingungen bis zur Beendigung der Kupplungsreaktion nach und isoliert den erfindungsgemäßen Disazofarbstoff in üblicher Weise. Er besitzt, in Form der freien Säure geschrieben, die Formel 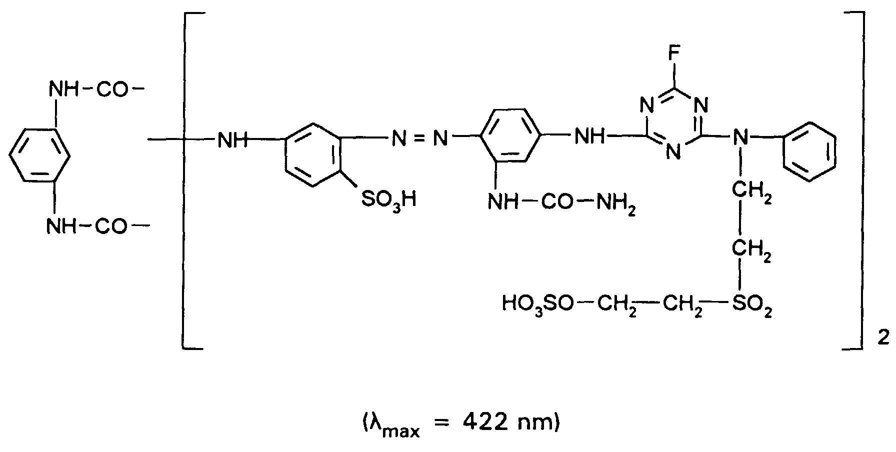 und färbt beispielsweise Baumwolle in rotstichig gelben Farbtönen mit guten Echtheitseigenschaften.

### Beispiel 16

Zur Herstellung einer erfindungsgemäßen Disazoverbindung setzt man zunächst analog den Angaben des Beispieles 15 0,2 Mol 3-Amino-acetylanilin bei einem pH-Wert von 5 bis 6 und einer Temperatur von 0 bis 5°C mit 2,6-Difluor-4-[4'-(β-sulfatoethylsulfonyl)-phenyl]-amino-1,3,5-triazin um, rührt anschließend zu der so hergestellten Kupplungskomponente langsam die eiskalte Diazoniumsalzlösung einer Diaminoverbindung, hergestellt durch Umsetzung von Benzol-1,3-diisocyanat mit 1,3-Diamino-benzol-4-sulfonsäure, bei Einhaltung eines pH-Wertes von 5 bis 6 und einer Temperatur von 15 bis 20°C ein und führt die Kupplungsreaktion unter Weiterrühren bei diesen Reaktionsbedingungen zu Ende.
Der erfindungsgemäße Farbstoff besitzt die Formel (in Form der freien Säure geschrieben) 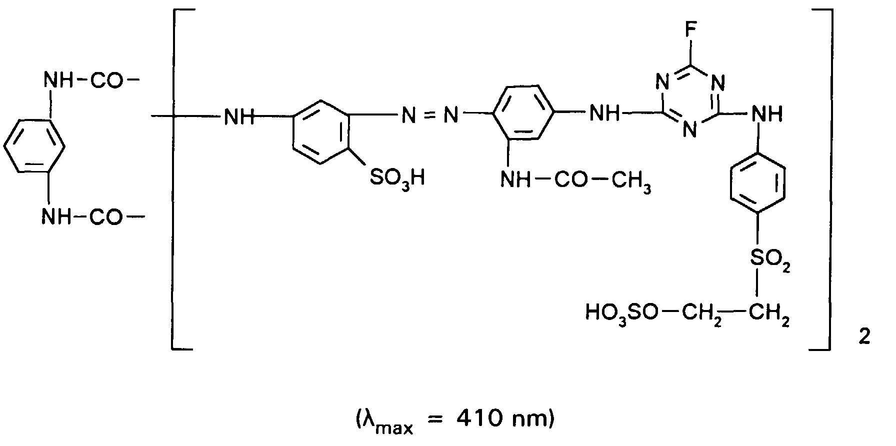 und färbt die in der Beschreibung genannten Fasermaterialien, wie beispielsweise Baumwolle, nach den in der Technik für faserreaktive Farbstoffe üblichen Färbe- und Druckverfahren in gelben Tönen mit guten Echtheiten.

### Beispiel 17

Man setzt gemäß den Angaben des Beispieles 5a) Benzol-1,3-diisocyanat mit 1,3-Diamino-benzol-4-sulfonsäure um, bis-diazotiert 0,1 Mol dieser harnstoffgruppenhaltigen Diamino-Ausgangsverbindung, rührt die erhaltene Diazoniumsalzlösung langsam zu einer Lösung von 0,2 Mol 1-Amino-8-sulfo-naphthalin in 1800 ml Wasser und führt die Kupplungsreaktion bei einem pH-Wert von 4 bis 5 und einer Temperatur von 15 bis 20°C durch. Die erhaltene Lösung der Azoverbindung versetzt man sodann unter gutem Rühren mit 0,32 Mol 3-(β-Chlorethylsulfonyl)-anilin in 250 ml Aceton und führt die Kondesationsreaktion unter Einhaltung eines pH-Wertes von 7 bis 8 und einer Temperatur von 40 bis 50°C durch, wobei unter diesen milden alkalischen Reaktionsbedingungen die β-Chlorethylsulfonyl-Gruppe in die Vinylsulfonyl-Gruppe übergeht.

Der erfindungsgemäße Farbstoff wird aus der Syntheselösung in üblicher Weise, beispielsweise durch Aussalzen, isoliert und besitzt, in Form der freien Säure geschrieben, die Formel

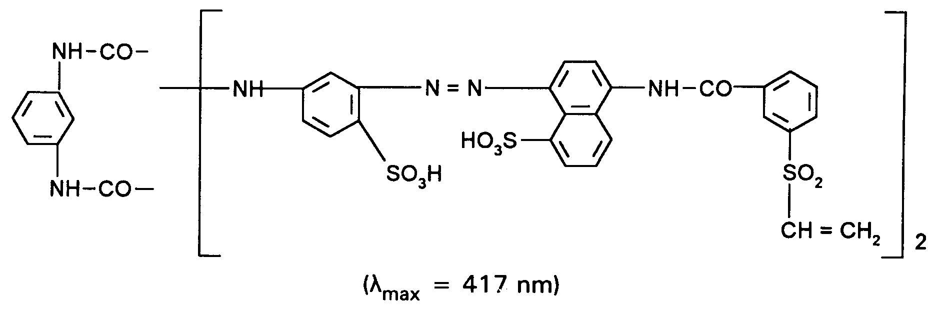

Er färbt beispielsweise cellulosefaserhaltige Materialien, wie Baumwolle, in rotstichig gelben Tönen mit guten Echtheitseigenschaften.

### Beispiel 18

Zur Herstellung eines erfindungsgemäßen Disazofarbstoffes verfährt man analog den Angaben des Beispieles 17, indem man das Bis-Diazoniumsalz der Verbindung 1,3-Bis-[(3'-amino-4'-sulfo-phenyl)-ureido]-benzol mit 2 Moläquivalenten 1-Amino-8-sulfo-naphthalin umsetzt und die so erhaltene Disazoverbindung mit 2 Moläquivalenten 2,3-Dichlor-chinoxazin-6-carbonsäurechlorid bei einer Temperatur von 60 bis 70°C und einem pH-Wert von 6 bis 7 umsetzt.
Der erfindungsgemäße Farbstoff besitzt die Formel (in Form der freien Säure geschrieben) 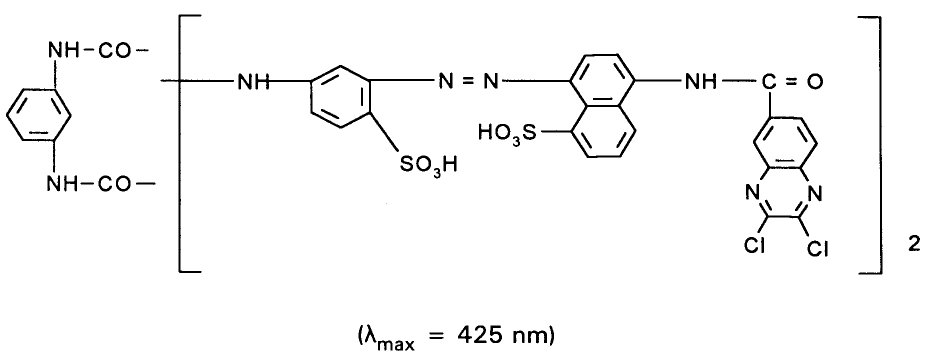 und färbt beispielsweise Baumwolle in rotstichig gelben Farbtönen mit guten Echtheitseigenschaften.

### Beispiel 19

Eine Lösung von 0,1 Mol der Verbindung 1,4-Bis-[(3'-amino-4'-sulfo-phenyl)-ureido]-benzol wird mit einer eiskalten salzsauren, auf üblichem Wege hergestellten Diazoniumsalzsuspension aus 0,2 Mol 4-(β-Sulfatoethylsulfonyl)-anilin versetzt; die Kupplungsreaktion erfolgt bei einem pH-Wert zwischen 4 und 5 und einer Temperatur von 10 bis 15°C. Man isoliert nach beendeter Umsetzung den erfindungsgemäßen Farbstoff der Formel (in Form der freien Säure geschrieben) 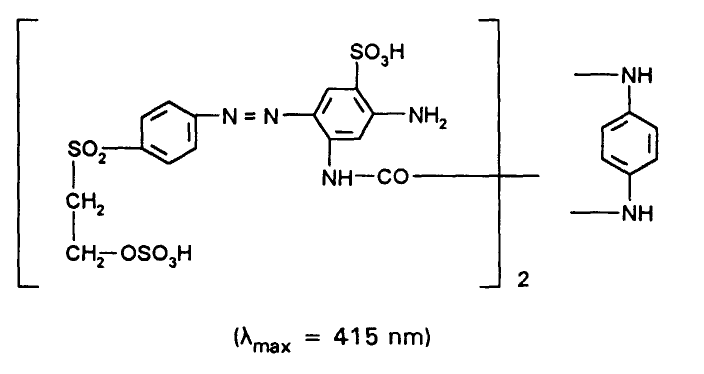 in üblicher Weise durch Aussalzen oder Sprühtrocknung. Er färbt die in der Beschreibung genannten Fasermaterialien, wie insbesondere Baumwolle, nach den für faserreaktive Farbstoffe üblichen Färbe- und Druckverfahren in rotstichig gelben Tönen mit guten Echtheitseigenschaften.

### Beispiel 20

Analog den Angaben des Beispieles 19 kuppelt man 0,1 Mol der Verbindung 1,3-Bis-[(3'-amino-4'-sulfo-phenyl)-ureido]-benzol mit der frisch hergestellten eiskalten Diazoniumsalzsuspension aus 0,2 Mol 4-(2',4'-Difluor-pyrimidin-6-yl)-2-sulfo-anilin und führt die Kupplungsreaktion bei einem pH-Wert zwischen 4 und 5 und einer Temperatur von 10 bis 15°C durch.

Der erfindungsgemäße Farbstoff besitzt, in Form der freien Säure geschrieben, die Formel 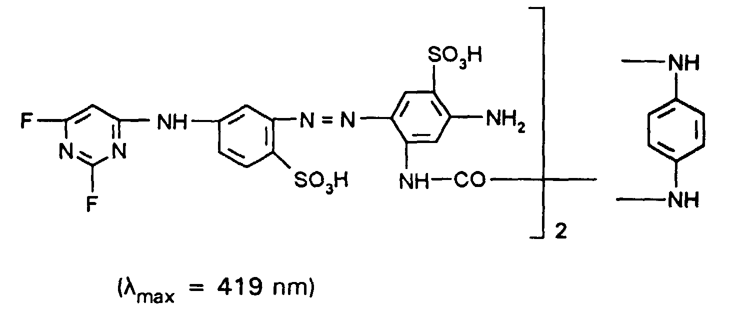 und färbt beispielsweise Baumwolle in rotstichig gelben Tönen mit guten Echtheitseigenschaften.

### Beispiel 21

Zu einer Lösung von 0,1 Mol der Verbindung 1,3-Bis-[(3'-amino-4'-sulfo-phenyl)-ureido]-4-methyl-benzol in 2000 ml Wasser gibt man unter gutem Rühren unter Einhaltung eines pH-Wertes zwischen 4 und 5 und einer Temperatur von 10 bis 15°C eine frisch hergestellte, eiskalte Diazoniumsalzsuspension aus 0,2 Mol 2-Sulfo-4-{2'-chlor-4'-[4''-(β-sulfatoethylsulfonyl)-phenyl]-amino-s-triazin-6'-yl}-amino-anilin und führt die Kupplungsreaktion innerhalb dieses pH- und Temperaturbereiches zu Ende. Man isoliert den erfindungsgemäßen Disazofarbstoff der Formel (in Form der freien Säure geschrieben) 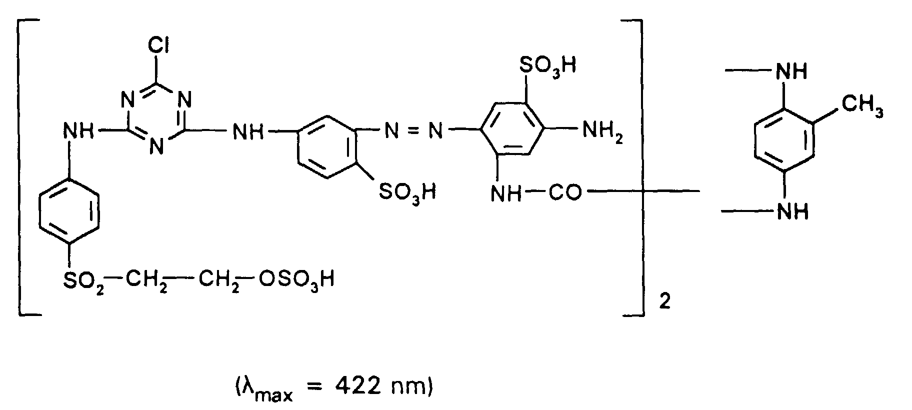 in üblicher Weise. Er färbt nach den in der Technik für faserreaktive Farbstoffe üblichen Färbeverfahren die in der Beschreibung genannten Fasermaterialien, wie beispielsweise Baumwolle, in farbstarken rotstichig gelben, echten Farbtönen.

### Beispiele 22 bis 46

In den nachfolgenden Tabellenbeispielen werden weitere erfindungsgemäße Farbstoffe entsprechend der allgemeinen Formel (A) 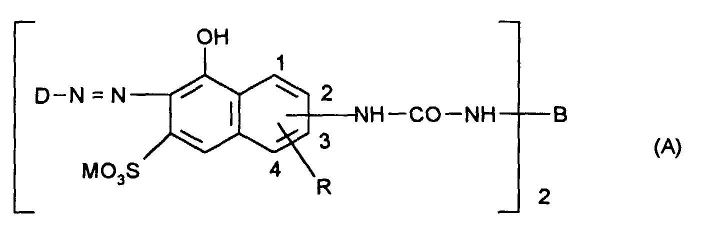 (worin M die in der Beschreibung genannte Bedeutung besitzt) anhand der Komponenten entsprechend den Formelresten von Formel (A) beschrieben. Sie lassen sich in erfindungsgemäßer Weise, beispielsweise analog einem der Beispiele 1 bis 5, aus den aus der allgemeinen Formel (A) ersichtlichen Ausgangsverbindungen (wie der Diazokomponente D-NH₂ , einem Sulfo-aminonaphthol, einem den Rest B enthaltenden Diisocyanat und gegebenenfalls einer einen Aminosubstituenten enthaltenden Halogentriazin- oder Halogenpyrimidin-Verbindung) herstellen. Sie besitzen sehr gute faserreaktive Farbstoffeigenschatten und färben die in der Beschreibung genannten Materialien, wie insbesondere Cellulosefasermaterialien, in dem in dem jeweiligen Tabellenbeispiel (hier für Baumwolle) angegebenen Farbton in hoher Farbstärke und guten Echtheiten.

| Bsp. | Rest D- | Rest R | Stellg. von -NH-CO- .... | Rest B | Farbton |
|---|---|---|---|---|---|
| 22 | 3-(β-Sulfatoethylsulfonyl)-phenyl | 3-Sulfo | 1- | 4-Methyl-1,3-phenylen | rot (525) |
| 23 | 6-Methoxy-3-(β-sulfatoethylsulfonyl)-phenyl | 3-Sulfo | 1- | dito | blaust. rot (550) |
| 24 | 2,5-Dimethoxy-4-(β-sulfatoethylsulfonyl-phenyl | 3-Sulfo | 1- | dito | blaust. rot (560) |
| 25 | 2-Methoxy-5-methyl-4-(β-sulfatoethylsulfonyl)-phenyl | 3-Sulfo | 1- | dito | blaust. rot (546) |
| 26 | 4-(β-Sulfatoethylsulfonyl)-phenyl | 4-Sulfo | 1- | dito | rot (517) |
| 27 | 1-Sulfo-6-(β-sulfatoethyl-sulfonyl)-naphth-2-yl | 4-Sulfo | 1- | dito | rot (528) |
| 28 | 6-(β-Sulfatoethylsulfonyl)-naphth-2-yl | 3-Sulfo | 1- | dito | rot (530) |
| 29 | 6-Sulfo-8-(β-Sulfato-ethylsulfonyl)-naphth-2-yl | 3-Sulfo | 1- | 2-Methyl-1,4-phenylen | rot (531) |
| 30 | 8-(β-Sulfatoethylsulfonyl)-naphth-2-yl | 3-Sulfo | 1- | Diphenyl-methan-4,4'-ylen | rot (529) |
| 31 | 1-Sulfo-6-(β-sulfatoethylsulfonyl)-naphth-2-yl | Wasserstoff | 2- | 4-Methyl-1,3-phenylen | orange (489) |
| 32 | 1-Sulfo-6-(β-sulfatoethylsulfonyl)-naphth-2-yl | Wasserstoff | 3- | dito | orange (492) |
| 33 | 4-(β-Sulfatoethylsulfonyl)-phenyl | 4-Sulfo | 3- | dito | orange (490) |
| 34 | 1-Sulfo-5-(2',4'-difluor-pyrimidin-6'-yl)-aminomethylen-naphth-2-yl | 3-Sulfo | 1- | dito | rot (524) |
| 35 | 1-Sulfo-5-(5'-chlor-2',4'-difluor-pyrimidin-6'-yl)-aminomethylen-naphth-2-yl | 4-Sulfo | 1- | dito | rot (516) |
| 36 | 6-Sulfo-3-(4'-chlor-2',4'-difluor-pyrimidin-6'-yl)-amino-phenyl | 3-Sulfo | 1- | dito | rot (522) |
| 37 | 2-Sulfo-3-(4'-chlor-2',4'-difluor-pyrimidin-6'-yl)-amino-phenyl | 3-Sulfo | 1- | dito | rot (526) |
| 38 | 6-Sulfo-3-(2',4',5'-trichlor-pyrimidin-6*'*-yl)-amino-phenyl | 4-Sulfo | 1- | 2-Methyl-1,3-phenylen | rot (530) |
| 39 | 6-Sulfo-3-(4'-chlor-2',4'-difluor-pyrimidin-6'-yl)-amino-phenyl | 3-Sulfo | 1- | Diphenyl-methan-4,4*'*-ylen | rot (531) |
| 40 | 6-Sulfo-3-(2',4'-difluor-pyrimidin-6'-yl)-amino-phenyl | Wasserstoff | 3- | 4-Methyl-1,3-phenylen | orange (493) |
| 41 | 6-Sulfo-3-(5'-chlor-2',4'-difluor-pyrimidin-6'-yl)-amino-phenyl | 4-Sulfo | 3- | Diphenyl-methan-4,4'-ylen | orange (491) |
| 42 | 6-Sulfo-3-(4'-chlor-2'-amino-s-triazin-6'-yl)-amino-phenyl | 3-Sulfo | 1- | Diphenyl-methan-4,4'-ylen | rot (520) |
| 43 | 6-Sulfo-3-(4'-chlor-2'-morpholino-s-triazin-6'-yl)-amino-phenyl | 3-Sulfo | 1- | dito | rot (523) |
| 44 | 6-Sulfo-3-[4'-fluor-2'-(2''-carboxy-phenyl)-amino-s-triazin-6'-yl]-amino-phenyl | 3-Sulfo | 1- | 2-Methyl-1,3-phenylen | rot (526) |
| 45 | 6-Sulfo-3-[4'-fluor-2'-(2''-sulfo-phenyl)-amino-s-triazin-6'-yl]-amino-phenyl | 3-Sulfo | 1- | 4-Methyl-1,3-phenylen | rot (521) |
| 46 | 6-Sulfo-3-[4'-fluor-2'-(1''-sulfo-naphth-2''-yl)-amino-s-triazin-6'-yl]-amino | 3-Sulfo | 1- | 4-Methyl-1,3-phenylen | rot (518) |

### Beispiele 47 bis 70

In den nachfolgenden Tabellenbeispielen werden weitere erfindungsgemäße Farbstoffe entsprechend der allgemeinen Formel (B) 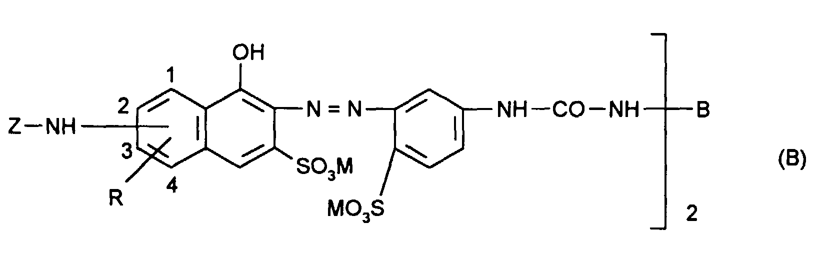 (worin M die in der Beschreibung genannte Bedeutung besitzt) anhand der Komponenten entsprechend den Formelresten von Formel (B) beschrieben. Sie lassen sich in erfindungsgemäßer Weise, beispielsweise analog einem der Beispiele 6 bis 10, aus den aus der allgemeinen Formel (B) ersichtlichen Ausgangsverbindungen (wie dem 4-Sulfo-1,3-diaminobenzol, einem Sulfo-aminonaphthol, einem den Rest B enthaltenden Diisocyanat und gegebenenfalls einer einen Aminosubstituenten enthaltenden Halogentriazin- oder Halogenpyrimidin-Verbindung) herstellen. Sie besitzen sehr gute faserreaktive Farbstoffeigenschaften und färben die in der Beschreibung genannten Materialien, wie insbesondere Cellulosefasermaterialien, in dem in dem jeweiligen Tabellenbeispiel (hier für Baumwolle) angegebenen Farbton in hoher Farbstärke und guten Echtheiten.

| Bsp. | Rest Z-NH- | Rest R | Rest B | Farbton |
|---|---|---|---|---|
| 47 | 3-(5'-Chlor-2',4'-difluor-pyrimidin-6'-yl)-amino | Wasserstoff | 4-Methyl-1,3-phenylen | orange (495) |
| 48 | 3-(2',4',5'-Trichlor-pyrimidin-6'-yl)-amino | 4-Sulfo | dito | orange (498) |
| 49 | 1-(5'-Chlor-2',4'-difluor-pyrimidin-6'-yl)-amino | 3-Sulfo | 2-Methyl-1,3-phenylen | rot (526) |
| 50 | 2-(2',4'-Difluor-pyrimidin-6'-yl)-amino | Wasserstoff | 4-Methyl-1,3-phenylen | orange (500) |
| 51 | 1-(2',4'-Dichlor-s-triazin-6'-yl)-amino | 3-Sulfo | dito | rot (526) |
| 52 | 1-(2'-Chlor-4'-morpholino-triazin-6'-yl)-amino | 3-Sulfo | dito | rot (530) |
| 53 | 1-(2'-Fluor-4'-phenyl-amino-s-triazin-6'-yl)-amino | 3-Sulfo | Diphenyl-methan-4,4'-ylen | rot (527) |
| 54 | 1-[2'-Fluor-4'-(3''-sulfophenyl)-amino-s-triazin-6'-yl]-amino | 3-Sulfo | dito | rot (525) |
| 55 | 1-[2'-Fluor-4'-(2''-sulfophenyl)-amino-s-triazin-6'-yl]-amino | 4-Sulfo | dito | rot (531) |
| 56 | dito | 3-Sulfo | 1,4-Phenylen | rot (535) |
| 57 | dito | 3-Sulfo | 1,6-Hexa-methylen | rot (528) |
| 58 | dito | 3-Sulfo | 1,3-Propylen | rot (526) |
| 59 | 1-{2'-Cyanoamino-4'-[4''-(β-sulfatoethylsulfonyl)-phenyl]-amino-s-triazin-6'-yl}-amino | 3-Sulfo | 4-Methyl-1,3-phenylen | rot (530) |
| 60 | 1-{2'-Cyanoamino-4'-[3''-(β-sulfatoethylsulfonyl)-phenyl]-amino-s-triazin-6'-yl}-amino | 3-Sulfo | dito | rot (528) |
| 61 | 1-{2'-Chlor-4'-[4''-(β-sulfatoethylsulfonyl)-phenyl]-amino-s-triazin-6'-yl}-amino | 3-Sulfo | dito | rot (526) |
| 62 | 1-{2'-Chlor-4'-[3''-(β-sulfatoethylsulfonyl)-phenyl]-amino-s-triazin-6'-yl}-amino | 3-Sulfo | dito | rot (526) |
| 63 | 1-{2'-Chlor-4'-[N-phenyl-N-β-(β*'*-sulfatoethylsulfonyl)-ethyl]-amino-s-triazin-6'-yl}-amino | 4-Sulfo | 1,3-Phenylen | rot (520) |
| 64 | 1-{2'-Cyanoamino-4'-[3''-(γ-sulfatopropylsulfonyl)-phenyl]-amino-s-triazin-6'-yl}-amino | 3-Sulfo | dito | rot (528) |
| 65 | 1-{2'-Fluor-4'-[3''-(γ-sulfatopropylsulfonyl)-phenyl]-amino-s-triazin-6'-yl}-amino | 3-Sulfo | dito | orange (530) |
| 66 | 3-[2'-Chlor-4'-(2'',5''-disulfophenyl)-amino-s-triazin-6'-yl]-amino | Wasserstoff | 1,3-Phenylen | orange (487) |
| 67 | 3-[2'-Fluor-4'-(2'',5''-disulfophenyl)-amino-s-triazin-6'-yl]-amino | Wasserstoff | 1,3-Phenylen | orange (489) |
| 68 | 3-[2'-Chlor-4'-(2'',4''-disulfophenyl)-amino-s-triazin-6'-yl]-amino | Wasserstoff | 1,3-Phenylen | orange (490) |
| 69 | 2-[2'-Fluor-4'-(2'',5''-disulfophenyl)-amino-s-triazin-6'-yl]-amino | 4-Sulfo | 1,3-Phenylen | orange (490) |
| 70 | 3-[2'-Fluor-4'-(5''-sulfophenyl)-amino-s-triazin-6'-yl]-amino | 4-Sulfo | 1,3-Phenylen | orange (491) |

### Beispiele 71 bis 87

In den nachfolgenden Tabellenbeispielen werden weitere erfindungsgemäße Farbstoffe entsprechend den allgemeinen Formeln (C) und (D) 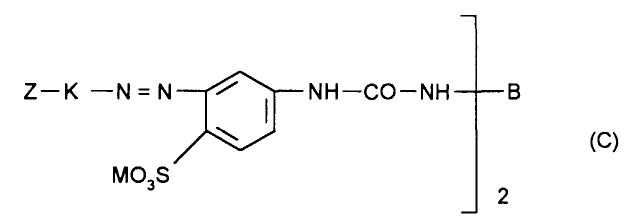 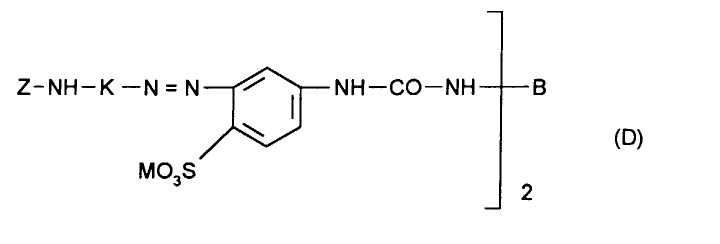 (worin M die in der Beschreibung genannte Bedeutung besitzt) anhand der Komponenten entsprechend den Formelresten von Formel (C) bzw. (D) beschrieben. Sie lassen sich in erfindungsgemäßer Weise, beispielsweise analog einem der Beispiele 12 bis 18, aus den aus der allgemeinen Formel (C) bzw. (D) ersichtlichen Ausgangsverbindungen (wie dem 4-Sulfo-1,3-diamino-benzol, einer gegebenenfalls aminogruppenhaltigen Kupplungskomponente der Formel H-K-H bzw. H₂N-K-H, einem den Rest B enthaltenden Diisocyanat und gegebenenfalls einer einen Aminosubstituenten enthaltenden Halogentriazin- oder Halogenpyrimidin-Verbindung) herstellen. Sie besitzen sehr gute faserreaktive Farbstoffeigenschaften und färben die in der Beschreibung genannten Materialien, wie insbesondere Cellulosefasermaterialien, in dem in dem jeweiligen Tabellenbeispiel (hier für Baumwolle) angegebenen Farbton in hoher Farbstärke und guten Echtheiten.

| Bsp. | Formel .. | Rest Z-K- bzw. Z-NH-K- | Rest B | Farbton |
|---|---|---|---|---|
| 71 | (C) | 1-(4'-Vinylsulfonyl-phenyl)-3-carboxy-pyrazol-5-on-6-yl | 4-Methyl-1,3-phenylen | brillantgelb (389) |
| 72 | (C) | 1-(4'-Vinylsulfonyl-phenyl)-3-methyl-pyrazol-5-on-6-yl | 1,3-Phenylen | brillantgelb (391) |
| 73 | (C) | 1-[4'-(β-Sulfatoethylsulfonyl)-phenyl]-3-methyl-pyrazol-5-on-6-yl | 1,4-Phenylen | brillantgelb (392) |
| 74 | (D) | 1-N-[β-(2',4'-Difluor-pyrimidin-6'-yl)-aminoethyl]-3-methyl-4-cyano-2-hydroxy-pyrid-2-on-5-yl | Diphenylmethan-4,4'-ylen | brillantgelb (405) |
| 75 | (D) | 1-N-[γ-(2',4'-Difluor-pyrimidin-6'-yl)-aminopropyl]-3-methyl-4-carbamoyl-2-hydroxy-pyrid-2-on-5-yl | 2-Methyl-1,3-phenylen | brillantgelb (404) |
| 76 | (D) | 4-[2'-Fluor-4'-(β-sulfoethyl-amino)-s-triazin-6'-yl]-amino-2-ureido-phenyl | Diphenylmethan-4,4'-ylen | goldgelb (418) |
| 77 | (D) | 4-(2'-Fluor-4'-phenylamino-s-triazin-6'-yl)-amino-2-ureido-phenyl | Biphen-4,4'-ylen | goldgelb (422) |
| 78 | (D) | 4-(2'-Chlor-4'-amino-s-triazin-6'-yl)-amino-2-acetylamino-phenyl | Phen-1,4-ylen | gelb (411) |
| 79 | (D) | 4-[2'-Fluor-4'-(2''-sulfophenyl)-amino-s-triazin-6'-yl]-amino-2-acetylamino-phenyl | Phen-1,3-ylen | goldgelb (417) |
| 80 | (D) | 4-[2'-Fluor-4'-(2''-sulfophenyl)-amino-s-triazin-6'-yl]-amino-2-acetylamino-5-sulfo-phenyl | 4-Methyl-phen-1,3-ylen | gelb (418) |
| 81 | (D) | 4-[2'-Fluor-4'-(3''-sulfophenyl)-amino-s-triazin-6'-yl]-amino-2-acetylamino-5-sulfo-phenyl | 4-Methyl-phen-1,3-ylen | gelb (415) |
| 82 | (D) | 4-[2'-Fluor-4'-(2''-sulfophenyl)-amino-s-triazin-6'-yl]-amino-2-acetylamino-5-methoxy-phenyl | 4-Methyl-phen-1,3-ylen | gelb (410) |
| 83 | (D) | 4-[2'-Fluor-4'-(3''-sulfophenyl)-amino-s-triazin-6'-yl]-amino-5-sulfo-naphth-1-yl | 2-Methyl-phen-1,3-ylen | goldgelb (418) |
| 84 | (D) | 4-[2'-Fluor-4'-(2''-sulfophenyl)-amino-s-triazin-6'-yl]-amino-7-sulfo-naphth-1-yl | Phen-1,3-ylen | goldgelb (419) |
| 85 | (D) | 4-[2'-Fluor-4'-(2''-carboxyphenyl)-amino-s-triazin-6'-yl]-amino-5-sulfo-naphth-1-yl | Phen-1,3-ylen | goldgelb (421) |
| 86 | (D) | 4-(2',4'-Difluor-pyrimidin-6'-yl)-amino-7-sulfo-naphth-1-yl | Phen-1,3-ylen | goldgelb (422) |
| 87 | (D) | 4-[3'-(β-Chlorethylsulfonyl)-phenyl]-amino-7-naphth-1-yl | Phen-1,3-ylen | goldgelb (420) |

### Beispiele 88 bis 95

In den nachfolgenden Tabellenbeispielen werden weitere erfindungsgemäße Farbstoffe entsprechend den allgemeinen Formeln (E) und (F) 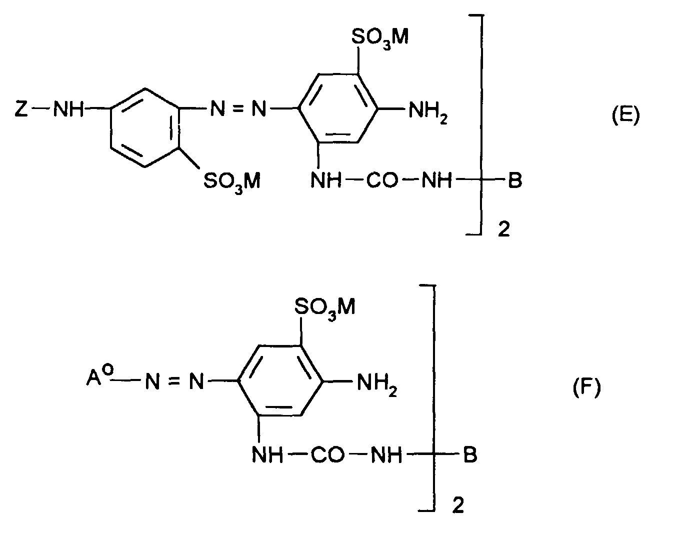 (worin M die in der Beschreibung genannte Bedeutung besitzt) anhand der Komponenten entsprechend den Formelresten von Formel (E) bzw. (F) beschrieben. Sie lassen sich in erfindungsgemäßer Weise, beispielsweise analog einem der Beispiele 19 bis 21, aus den aus der allgemeinen Formel (E) bzw. (F) ersichtlichen Ausgangsverbindungen (wie dem 4-Sulfo-1,3-diaminobenzol sowohl als Diazo- als auch als Kupplungskomponente bzw. der 2-Amino-naphthalin-Verbindung als Diazokomponente A^{o} -NH₂ , einem den Rest B enthaltenden Diisocyanat und gegebenenfalls einer einen Aminosubstituenten enthaltenden Halogentriazin- oder Halogenpyrimidin-Verbindung oder einer anderen einen faserreaktiven Rest enthaltendem Säurechloridverbindung) herstellen. Sie besitzen sehr gute faserreaktive Farbstoffeigenschaften und färben die in der Beschreibung genannten Materialien, wie insbesondere Cellulosefasermaterialien, in dem in dem jeweiligen Tabellenbeispiel (hier für Baumwolle) angegebenen Farbton in hoher Farbstärke und guten Echtheiten.

| Bsp. | Rest Z- | Rest B | Farbton |
|---|---|---|---|
| 88 | 5-Chlor-2,4-difluor-pyrimidin-6-yl | 4-Methyl-phen-1,3-ylen | goldgelb (418) |
| 89 | 5-Cyano-2,4-dichlor-pyrimidin-6-yl | Diphenylmethan-4,4'-ylen | goldgelb (419) |
| 90 | 3-Vinylsulfonyl-benzoyl | Phen-1,3-ylen | goldgelb (417) |
| 91 | 4-Fluor-2-phenylamino-s-triazin-6-yl | Phen-1,4-ylen | goldgelb (420) |
| 92 | 4-Fluor-2-[4'-(β-sulfato-ethylsulfonyl)-phenyl]-amino-s-triazin-6-yl | 1,6-Hexamethylen | goldgelb (420) |
| 93 | 4-Cyano-2-[3'-(β-sulfato-ethylsulfonyl)-phenyl]-amino-s-triazin-6-yl | Phen-1,4-ylen | goldgelb (418) |

| Bsp. | Rest A^{o}- | Rest B | Farbton |
|---|---|---|---|
| 94 | 6-Sulfo-8-(β-sulfato-ethylsulfonyl)-naphth-2-yl | 4-Methyl-phen-1,3-ylen | goldgelb (415) |
| 95 | 1-Sulfo-6-(β-sulfato-ethylsulfonyl)-naphth-2-yl | Diphenylmethan-4,4'-ylen | goldgelb (417) |

### Beispiele 96 bis 103

In den nachfolgenden Tabellenbeispielen werden weitere erfindungsgemäße Farbstoffe entsprechend der allgemeinen Formel (G) 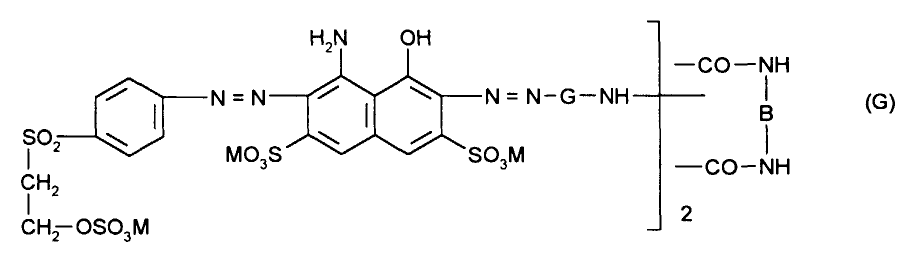 (worin M die in der Beschreibung genannte Bedeutung besitzt) anhand der Komponenten entsprechend den Formelresten von Formel (G) beschrieben. Sie lassen sich in erfindungsgemäßer Weise, beispielsweise analog dem Beispiel 11, aus den aus der allgemeinen Formel (G) ersichtlichen Ausgangsverbindungen (wie dem 4-(β-Sulfatoethylsulfonyl)-anilin als Diazokomponente, dem 3,6-Disulfo-1-amino-8-naphthol als bivalenter Kupplungskomponente, einer Diaminoaryl-Verbindung H₂N-G-NH₂ und einem den Rest B enthaltenden Diisocyanat) herstellen. Sie besitzen sehr gute faserreaktive Farbstoffeigenschaften und färben die in der Beschreibung genannten Materialien, wie insbesondere Cellulosefasermaterialien, in dem in dem jeweiligen Tabellenbeispiel (hier für Baumwolle) angegebenen Farbton in hoher Farbstärke und guten Echtheiten.

| Bsp. | Rest G *⁾ | Rest B | Farbton |
|---|---|---|---|
| 96 | 6-Sulfo-phenyl-1,3-ylen | 4-Methyl-phen-1,3-ylen | marineblau |
| 97 | dito | Phen-1,4-ylen | marineblau |
| 98 | dito | Phen-1,3-ylen | marineblau |
| 99 | dito | 4-Methyl-phen-1,3-ylen | marineblau |
| 100 | 2,4-Disulfo-phen-1,3-ylen | Phen-1,4-ylen | marineblau |
| 101 | 5-Sulfo-phenyl-1,3-ylen | Phen-1,4-ylen | marineblau |
| 102 | 2,5-Disulfo-phen-1,4-ylen | Diphenylmethan-4,4'-ylen | marineblau |
| 103 | dito | Biphen-4,4'-ylen | marineblau |

| | | | |
|---|---|---|---|
| *⁾ die 1-Position von G ist mit der Azogruppe verbunden. | | | |

## Patentansprüche

1. Azofarbstoff entsprechend der allgemeinen Formel (1) 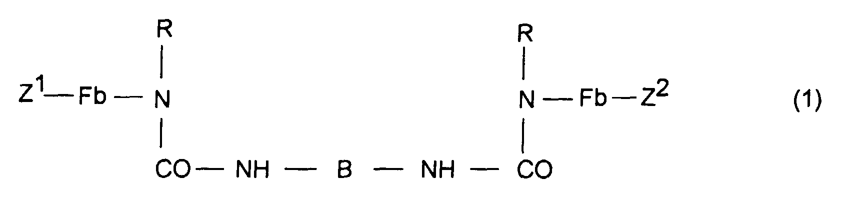 in welcher bedeuten:
Fb ist jedes, zueinander gleich oder voneinander verschieden, der Rest eines sulfogruppenhaltigen Monoazo-, Disazo- oder Trisazofarbstoffes oder der Rest eines sulfogruppenhaltigen Metallkomplex-Monoazo- oder -Disazofarbstoffes;
R ist jedes, zueinander gleich oder voneinander verschieden, Wasserstoff, Methyl oder Ethyl;
B ist ein aus einem gegebenenfalls eine oder zwei olefinische Bindungen enthaltenden aliphatischen und/oder aromatischen Kohlenwasserstoff bestehendes Brückenglied, das 1 oder 2 Heterogruppen enthalten kann;
Z¹ ist eine über eine Aminogruppe von Fb an Fb gebundene faserreaktive Gruppe aus der heterocyclischen Reihe oder ist eine faserreaktive Gruppe aus der Vinylsulfonreihe oder der Dihalogenacryloylamino-Reihe oder eine faserreaktive Gruppierung, die aus einer Kombination einer faserreaktiven Gruppe aus der heterocyclischen Reihe und der Vinylsulfonreihe besteht, oder einem substituierten Triazinrest mit einer faserreaktiven Gruppe der Vinylsulfonreihe besteht, oder ist eine Gruppierung mit einem β-Hydroxyethylsulfonyl-Rest und/oder einem hydroxy- oder cyanoaminogruppenhaltigen Triazin- oder einem hydroxygruppenhaltigen Pyrimidinrest, wobei der heterocyclische Rest jeweils über eine Aminogruppe von Fb an Fb gebunden ist;
Z² ist eine über eine Aminogruppe von Fb an Fb gebundene faserreaktive Gruppe aus der heterocyclischen Reihe oder ist eine faserreaktive Gruppe aus der Vinylsulfonreihe oder der Dihalogenacryloylamino-Reihe oder eine faserreaktive Gruppierung, die aus einer Kombination von faserreaktiven Gruppen aus der heterocyclischen Reihe und der Vinylsulfonreihe oder einem substituierten Triazinrest mit einer faserreaktiven Gruppe der Vinylsulfonreihe besteht, wobei der heterocyclische Rest jeweils über eine Aminogruppe von Fb an Fb gebunden ist.

2. Farbstoff nach Anspruch 1 der allgemeinen Formel (1A) 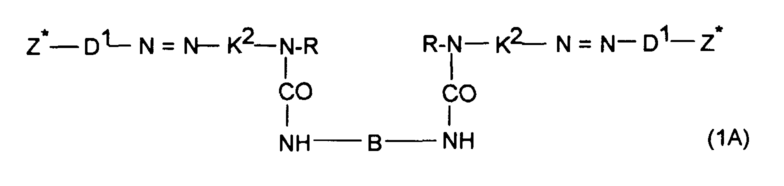 in welcher
B eine der in Anspruch 1 genannte Bedeutungen hat,
R jedes, zueinander gleich oder voneinander verschieden, eine der in Anspruch 1 genannten Bedeutungen hat,
Z* jedes, zueinander gleich oder voneinander verschieden, eine nichtheterocyclische faserreaktive Gruppe gemäß Z¹ oder Z² ist,
D¹ der Rest einer Diazokomponente der Benzol- oder Naphthalin-Reihe ist und
K² jedes, zueinander gleich oder voneinander verschieden, der Rest einer Kupplungskomponente der Anilin-, Diaminobenzol-, Aminonaphthalin-, Acetessigsaure(aminoaryl)-amid-, 1-(Aminophenyl)-pyrazolon- oder 1-(Aminonaphthyl)-pyrazolon-Reihe ist.

3. Farbstoff nach Anspruch 1 der allgemeinen Formel (1B) 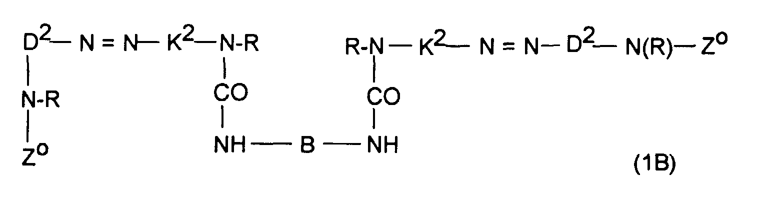 in welcher
B eine der in Anspruch 1 genannte Bedeutungen hat,
R jedes, zueinander gleich oder voneinander verschieden, eine der in Anspruch 1 genannten Bedeutungen hat,
Z^{o} eine heterocyclische faserreaktive Gruppe oder eine andere heterocyclische Gruppierung gemäß Z¹ ist,
D² jedes, zueinander gleich oder voneinander verschieden, der Rest einer Diazokomponente der Diaminobenzol- oder Diaminonaphthalin-Reihe ist und
K² jedes, zueinander gleich oder voneinander verschieden, der Rest einer Kupplungskomponente der Anilin-, Aminonaphthalin-, Diaminobenzol-, Acetessigsäure(aminoaryl)-amid-, 1-(Aminophenyl)-pyrazolon- oder 1-(Aminonaphthyl)-pyrazolon-Reihe ist.

4. Farbstoff nach Anspruch 1 der allgemeinen Formel (1C) 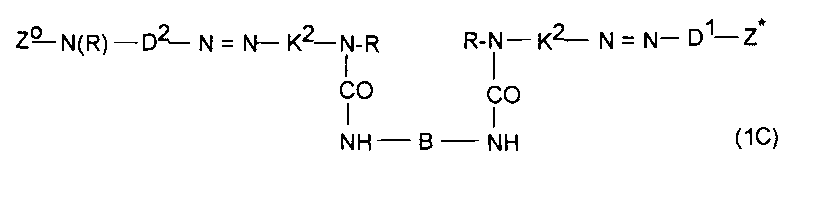 in welcher
B eine der in Anspruch 1 genannte Bedeutungen hat,
R jedes, zueinander gleich oder voneinander verschieden, eine der in Anspruch 1 genannten Bedeutungen hat,
Z* eine nicht-heterocyclische faserreaktive Gruppe gemäß Z¹ oder Z² ist,
Z^{o} eine heterocyclische faserreaktive Gruppe oder eine andere heterocyclische Gruppierung gemäß Z¹ ist,
D¹ der Rest einer Diazokomponente der Benzol- oder Naphthalin-Reihe ist,
D² der Rest einer Diazokomponente der Diaminobenzol- oder Diaminonaphthalin-Reihe und
K² jedes, zueinander gleich oder voneinander verschieden, der Rest einer Kupplungskomponente der Anilin-, Aminonaphthalin-, Diaminobenzol-, Acetessigsäure(aminoaryl)-amid-, 1-(Aminophenyl)-pyrazolon- oder 1-(Aminonaphthyl)-pyrazolon-Reihe ist.

5. Farbstoff nach Anspruch 1 der allgemeinen Formel (1D) 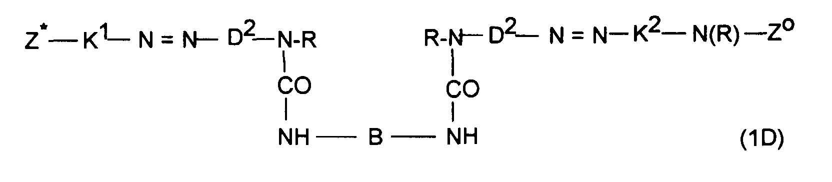 in welcher
B eine der in Anspruch 1 genannte Bedeutungen hat,
R jedes, zueinander gleich oder voneinander verschieden, eine der in Anspruch 1 genannten Bedeutungen hat,
Z* eine nicht-heterocyclische faserreaktive Gruppe gemäß Z¹ oder Z² ist,
Z^{o} eine heterocyclische faserreaktive Gruppe oder eine andere heterocyclische Gruppierung gemäß Z¹ ist,
D² jedes, zueinander gleich oder voneinander verschieden, der Rest einer Diazokomponente der Diaminobenzol- oder Diaminonaphthalin-Reihe ist,
K¹ der Rest einer Kupplungskomponente der Benzol- oder Naphthalin-Reihe oder aus der heterocyclischen Reihe ist und
K² der Rest einer Kupplungskomponente der Anilin-, Diaminobenzol-, Aminonaphthalin-, Acetessigsäure(aminoaryl)-amid-, 1-(Aminophenyl)-pyrazolon- oder 1-(Aminonaphthyl)-pyrazolon-Reihe ist.

6. Farbstoff nach Anspruch 1 der allgemeinen Formel (1E) 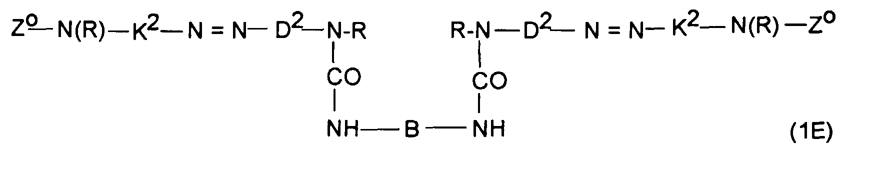 in welcher
B eine der in Anspruch 1 genannte Bedeutungen hat,
R jedes, zueinander gleich oder voneinander verschieden, eine der in Anspruch 1 genannten Bedeutungen hat,
Z^{o} jedes, zueinander gleich oder voneinander verschieden, eine heterocyclische faserreaktive Gruppe oder eine andere heterocyclische Gruppierung gemaß Z¹ ist,
D² jedes, zueinander gleich oder voneinander verschieden, der Rest einer Diazokomponente der Diaminobenzol- oder Diaminonaphthalin-Reihe ist, und
K² jedes, zueinander gleich oder voneinander verschieden, der Rest einer Kupplungskomponente der Anilin-, Aminonaphthalin-, Diaminobenzol-, Acetessigsäure(aminoaryl)-amid-, 1-(Aminophenyl]-pyrazolon- oder 1-(Aminonaphthyl)-pyrazolon-Reihe ist.

7. Farbstoff nach Anspruch 1 der allgemeinen Formel (1F) oder (1G) 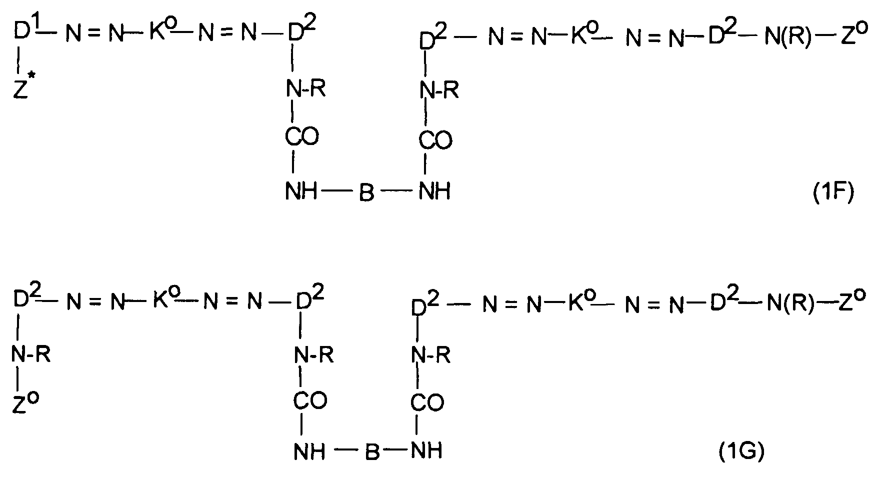 in welchen
B die in Anspruch 1 genannten Bedeutungen hat,
R jedes, zueinander gleich oder voneinander verschieden, eine der in Anspruch 1 genannten Bedeutungen hat,
Z* eine nicht-heterocyclische faserreaktive Gruppe gemäß Z¹ oder Z² ist,
Z^{o} jedes, zueinander gleich oder voneinander verschieden, eine heterocyclische faserreaktive Gruppe oder eine andere heterocyclische Gruppierung gemäß Z¹ ist,
D¹ der Rest einer Diazokomponente der Benzol- oder Naphthalin-Reihe ist,
D² jedes, zueinander gleich oder voneinander verschieden, der Rest einer Diazokomponente der Diaminobenzol- oder Diaminonaphthalin-Reihe ist, und
K^{o} jedes, zueinander gleich oder voneinander verschieden, der Rest des 3,6-Disulfo- oder 4,6-Disulfo-1-amino-8-hydroxy-naphth-2,7-ylen-Rest ist.

8. Farbstoff nach mindestens einem der Ansprüche 2, 4 und 7, dadurch gekennzeichnet, daß Z∗-D¹ - , zueinander gleich oder voneinander verschieden, jedes ein Rest der Formel (4a) oder (4b) 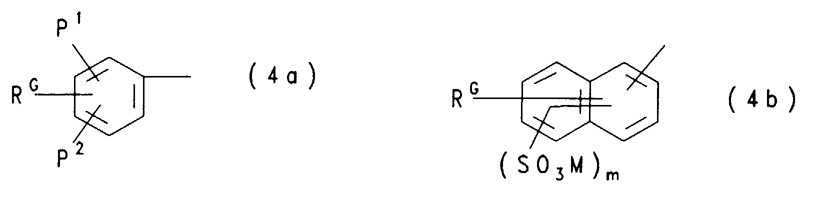 ist, in welchen
R^{G} eine faserreaktive Gruppe der allgemeinen Formel (a)
Y - SO₂ - W - (a)
ist, in welcher
Y Vinyl ist oder Ethyl ist, das in β-Stellung durch einen alkalisch eliminierbaren Substituenten substituiert ist, und
W eine direkte kovalente Bindung ist oder Alkylen von 1 bis 4 C-Atomen ist oder eine Aminogruppe der allgemeinen Formel (b) 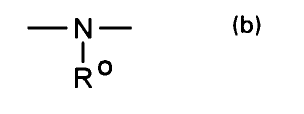 ist, in welcher
R^{o} Wasserstoff, Alkyl von 1 bis 4 C-Atomen oder Phenyl oder durch 1 oder 2 Substituenten aus der Gruppe Sulfo, Methyl, Methoxy, Ethyl, Ethoxy, Carboxy und Chlor substituiertes Phenyl ist,
P¹ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-(C₁-C₄-Alkyl)-carbamoyl, Fluor, Chlor, Brom oder Trifluormethyl ist,
P² Wasserstoff, Methyl, Ethyl, Methoxy, Ethoxy, Cyano, Nitro, Carboxy, Sulfo, Chlor, Alkanoylamino von 2 bis 5 C-Atomen, Alkoxycarbonyl von 2 bis 5 C-Atomen, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,
wobei der Benzolkern in Formeln (4a) und (4b) zusätzlich in ortho-Stellung zur freien Bindung, die an die Azogruppe führt, eine Hydroxygruppe enthalten kann,
m die Zahl Null, 1 oder 2 bedeutet (wobei diese Gruppe im Falle von m gleich Null ein Wasserstoffatom bedeutet) und
M die obengenannte Bedeutung hat.

9. Farbstoff nach mindestens einem der Ansprüche 3, 4, 5, 6 und 7, dadurch gekennzeichnet, daß der Rest Z^{o}-N(R)-D²- , zueinander gleich oder voneinander verschieden, jedes ein Rest der Formel (6a) oder (6b) 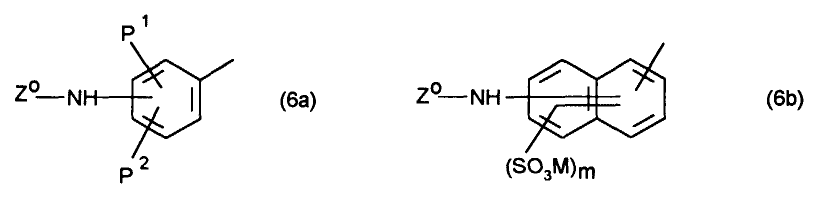 ist, in welchen
Z^{o} eine heterocyclische faserreaktive Gruppe oder eine andere heterocyclische Gruppierung gemäß Z¹ ist,
P¹ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-(C₁-C₄-Alkyl)-carbamoyl, Fluor, Chlor, Brom oder Trifluormethyl ist und
P² Wasserstoff, Methyl, Ethyl, Methoxy, Ethoxy, Cyano, Nitro, Carboxy, Sulfo, Chlor, Alkanoylamino von 2 bis 5 C-Atomen, Alkoxycarbonyl von 2 bis 5 C-Atomen, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist.

10. Farbstoff nach Anspruch 5 oder 6, dadurch gekennzeichnet, daß -K²-N(R)-Z^{o} jedes, zueinander gleich oder voneinander verschieden, ein Rest der allgemeinen Formel (9a), (9b), (9c), (9d), (9e), (9f), (9g), (9h) oder (9i) 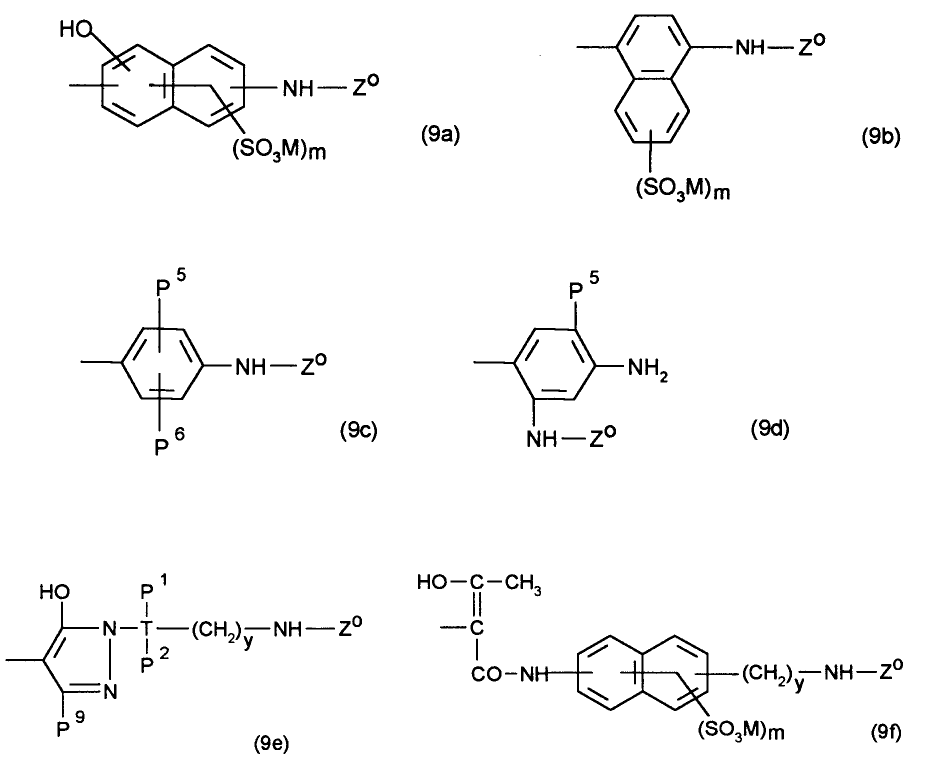 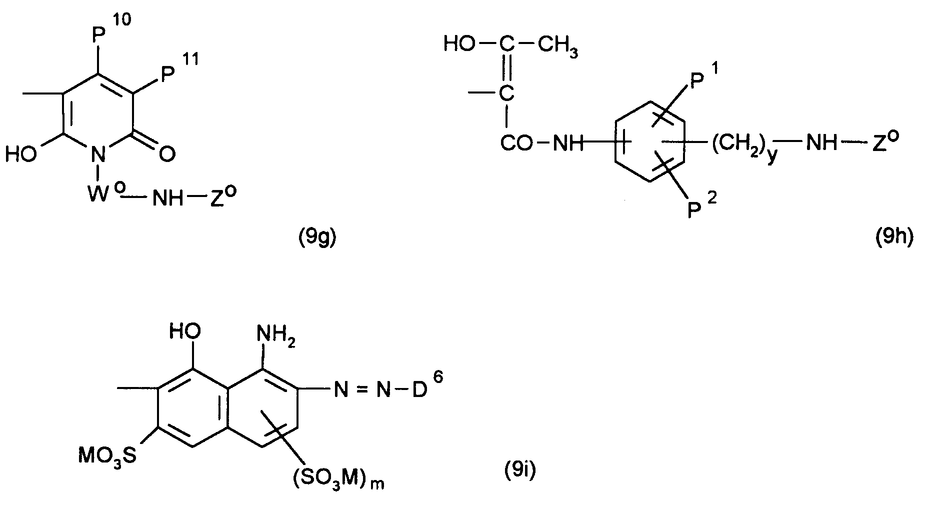 ist, in welchen
M Wasserstoff oder ein Alkalimetall ist,
P¹ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-(C₁-C₄-Alkyl)-carbamoyl, Fluor, Chlor, Brom oder Trifluormethyl ist,
P² Wasserstoff, Methyl, Ethyl, Methoxy, Ethoxy, Cyano, Nitro, Carboxy, Sulfo, Chlor, Alkanoylamino von 2 bis 5 C-Atomen, Alkoxycarbonyl von 2 bis 5 C-Atomen, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,
P⁹ Wasserstoff, Alkyl von 1 bis 4 C-Atomen, Cyano, Carboxy, Carbalkoxy von 2 bis 5 C-Atomen, Carbamoyl oder Phenyl ist,
P¹⁰ Wasserstoff oder Alkyl von 1 bis 4 C-Atomen oder durch Alkoxy von 1 bis 4 C-Atomen oder Cyano substituiertes Alkyl von 1 bis 4 C-Atomen oder Phenyl ist,
P¹¹ Wasserstoff, Chlor, Brom, Sulfo, Carbamoyl, Methylsulfonyl, Phenylsulfonyl, Cyano oder Sulfoalkyl von 1 bis 4 C-Atomen bedeutet,
W^{o} Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist,
T für einen Benzol- oder Naphthalinring steht,
m die Zahl Null, 1 oder 2 ist,
Z^{o} eine heterocyclische faserreaktive Gruppe oder eine andere heterocyclische Gruppierung gemäß Z¹ ist,
y die Zahl Null, 1 oder 2 ist,
P⁵ Wasserstoff, Alkyl von 1 bis 4 C-Atomen, Alkoxy von 1 bis 4 C-Atomen, Brom, Chlor oder Sulfo ist,
P⁶ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist und
D⁶ ein Rest der allgemeinen Formel (6a) oder (6b) 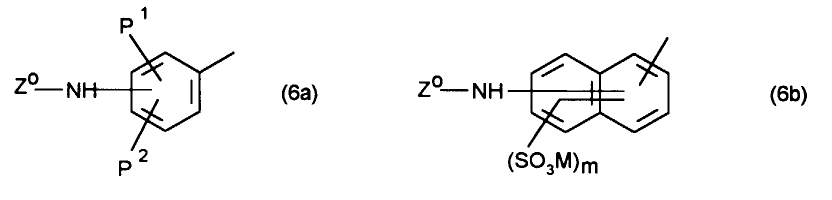 in welchen P¹, P², m, M und Z^{o} eine der obengenannten Bedeutungen haben.

11. Farbstoff nach Anspruch 5, dadurch gekennzeichnet, daß Z*-K¹- ein Rest der allgemeinen Formel (8a), (8b), (8c), (8d), (8e), (8f) oder (8g) 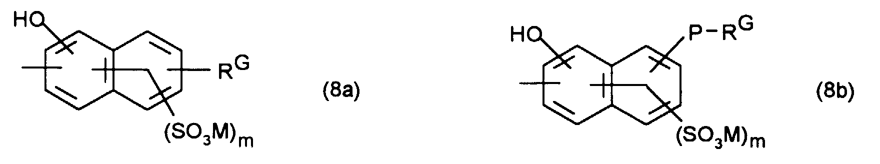 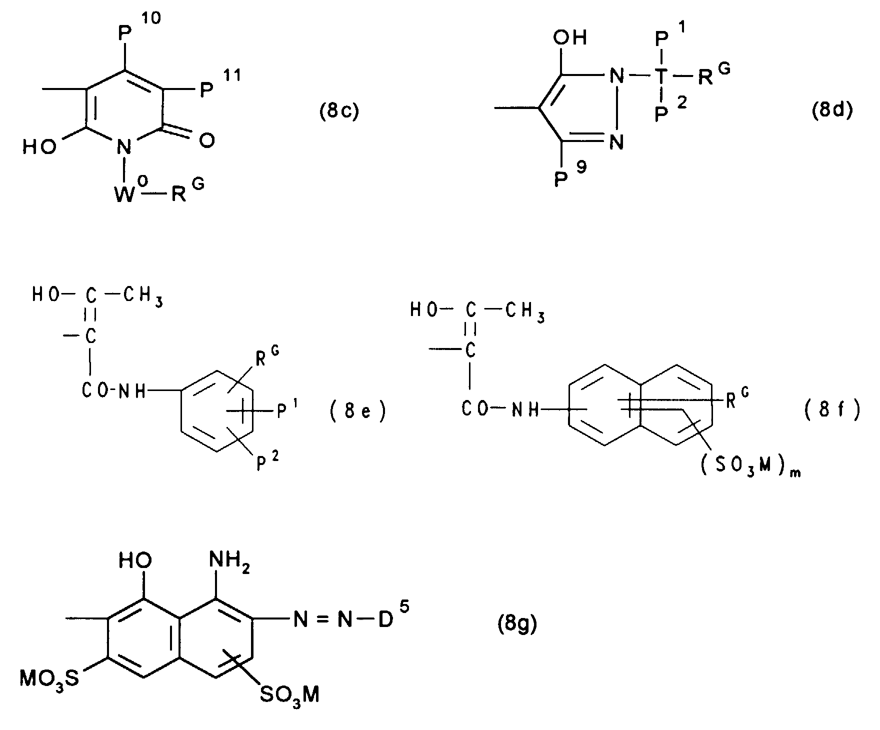 ist, in welchen
M Wasserstoff oder ein Alkalimetall ist,
R^{G} eine faserreaktive Gruppe der allgemeinen Formel (a)
Y - SO₂ - W - (a)
ist, in welcher
Y Vinyl ist oder Ethyl ist, das in β-Stellung durch einen alkalisch eliminierbaren Substituenten substituiert ist, und
W eine direkte kovalente Bindung ist oder Alkylen von 1 bis 4 C-Atomen ist oder eine Aminogruppe der allgemeinen Formel (b) 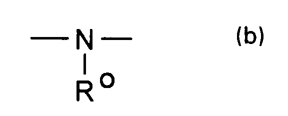 ist, in welcher
R^{o} Wasserstoff, Alkyl von 1 bis 4 C-Atomen oder Phenyl oder durch 1 oder 2 Substituenten aus der Gruppe Sulfo, Methyl, Methoxy, Ethyl, Ethoxy, Carboxy und Chlor substituiertes Phenyl ist,
P¹ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-(C₁-C₄-Alkyl)-carbamoyl, Fluor, Chlor, Brom oder Trifluormethyl ist,
P² Wasserstoff, Methyl, Ethyl, Methoxy, Ethoxy, Cyano, Nitro, Carboxy, Sulfo, Chlor, Alkanoylamino von 2 bis 5 C-Atomen, Alkoxycarbonyl von 2 bis 5 C-Atomen, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,
P⁹ Wasserstoff, Alkyl von 1 bis 4 C-Atomen, Cyano, Carboxy, Carbalkoxy von 2 bis 5 C-Atomen ist, Carbamoyl oder Phenyl ist,
T für einen Benzol- oder Naphthalinring steht,
P¹⁰ Wasserstoff oder Alkyl von 1 bis 4 C-Atomen oder durch Alkoxy von 1 bis 4 C-Atomen oder Cyano substituiertes Alkyl von 1 bis 4 C-Atomen oder Phenyl ist,
P¹¹ Wasserstoff, Chlor, Brom, Sulfo, Carbamoyl, Methylsulfonyl, Phenylsulfonyl, Cyano oder Sulfoalkyl von 1 bis 4 C-Atomen bedeutet,
W^{o} Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und
D⁵ ein Rest der allgemeinen Formel (4a) oder (4b) 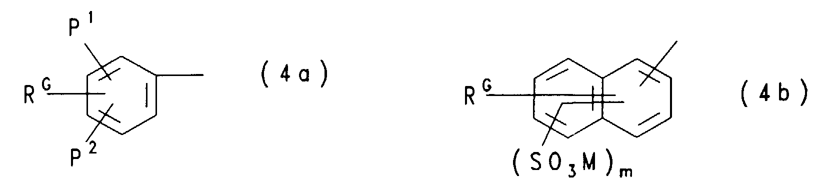 ist, in welchen
R^{G}, B¹, P², M und m die obengenannten Bedeutungen haben.

12. Farbstoff nach mindestens einem der Ansprüche 1 bis 11, dadurch gekennzeichnet, daß B Alkylen von 1 bis 8 C-Atomen ist oder Alkylen von 2 bis 8 C-Atomen ist, das durch eine oder zwei Heterogruppen unterbrochen ist, oder ein Rest der allgemeinen Formel (2a), (2b), (2c), (2d) oder (2e) 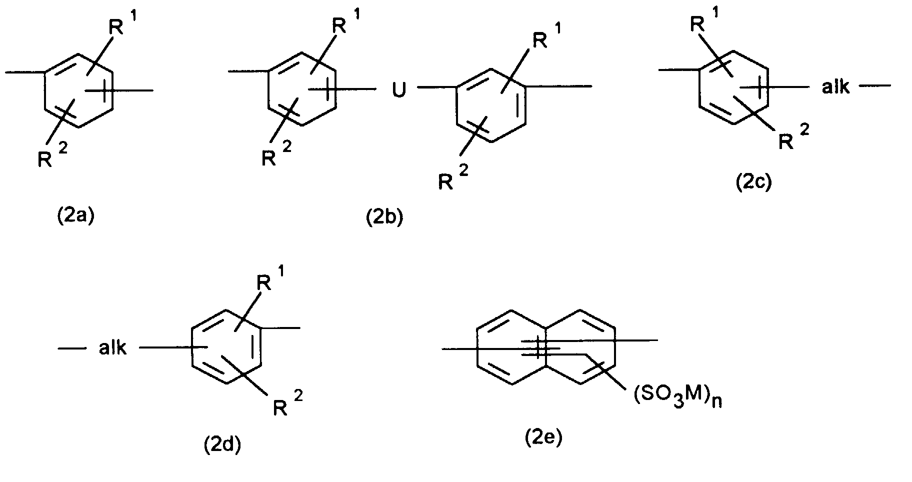 ist, in welchen
R¹ Wasserstoff, Alkyl von 1 bis 4 C-Atomen, Alkoxy von 1 bis 4 C-Atomen, Hydroxy, Sulfo, Carboxy, Cyano, Nitro, Aminocarbonyl, Alkanoylamino von 2 bis 5 C-Atomen, Benzoylamino, Ureido, Alkylcarbonyl von 2 bis 5 C-Atomen oder Halogen ist,
R² Wasserstoff, Alkyl von 1 bis 4 C-Atomen, Alkoxy von 1 bis 4 C-Atomen, Sulfo, Carboxy, Aminocarbonyl oder Halogen ist,
U eine direkte kovalente Bindung ist oder Methylen, Ethylen, Vinyliden oder eine Gruppe der Formel -NH- , -NH-CH₂- , -CO-, -CH₂-NH-, -NH-CH₂-CH₂-, -CH₂-CH₂-NH-, -O-, -O-CH₂-, -O-CH₂-CH₂-, -CH₂-O-, -CH₂-CH₂-O-, -NH-CO-NH-, -NH-CO-, -NH-CO-O-, -CO-NH- oder -O-CO-NH- ist,
alk Alkylen von 1 bis 8 C-Atomen oder Alkylen von 2 bis 8 C-Atomen ist, das durch 1 oder 2 Heterogruppen unterbrochen ist,
M Wasserstoff oder ein Alkalimetall ist und
n die Zahl Null, 1 oder 2 ist (wobei im Falle von n gleich Null diese Gruppe für Wasserstoff steht).

13. Farbstoff nach mindestens einem der Ansprüche 1 bis 12, dadurch gekennzeichnet, daß R Wasserstoff ist.

14. Farbstoff nach mindestens einem der Ansprüche 2 bis 6 und 8 bis 13, dadurch gekennzeichnet, daß K² ein Rest der Formel 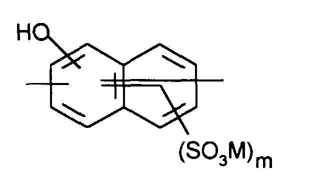 ist, in welcher M Wasserstoff oder ein Alkalimetall ist und m die Zahl Null, 1 oder 2 bedeutet und die Hydroxygruppe bevorzugt in α-Stellung des Naphthalinringes gebunden ist.

15. Farbstoff nach mindestens einem der Ansprüche 1 bis 14, dadurch gekennzeichnet, daß Z¹, Z² oder Z^{o} ein Rest der allgemeinen Formel (11a) 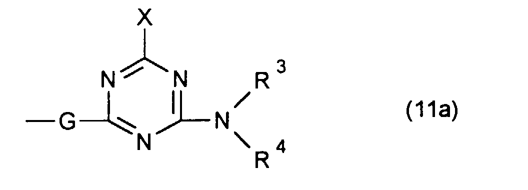 ist, in welcher bedeuten:
X ist Chlor oder Fluor;
R³ ist Wasserstoff, Alkyl von 1 bis 4 C-Atomen, das durch Chlor, Sulfo, Carboxy, Sulfato, Phosphato, Hydroxy, Alkanoyloxy von 2 bis 5 C-Atomen, Cyano und Alkoxy von 1 bis 4 C-Atomen substituiert sein kann, oder ist Cycloalkyl mit 5 bis 8 C-Atomen;
R⁴ ist Wasserstoff, Alkyl von 1 bis 4 C-Atomen, das durch Chlor, Sulfo, Carboxy, Sulfato, Phosphato, Hydroxy, Alkanoyloxy von 2 bis 5 C-Atomen, Cyano und Alkoxy von 1 bis 4 C-Atomen substituiert sein kann, oder ist Cycloalkyl mit 5 bis 8 C-Atomen oder Cyano oder ist Phenyl, das durch 1 oder 2 Substituenten aus der Gruppe Sulfo, Carboxy, Methyl, Ethyl, Methoxy, Ethoxy, Chlor, Carbamoyl, Sulfamoyl und Cyano substituiert sein kann, oder ist durch 1, 2 oder 3 Sulfogruppen substituiertes Naphthyl;
G ist eine kovalente Bindung oder eine Gruppe der allgemeinen Formel (12) 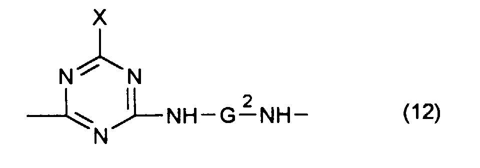 in welcher X die obengenannte Bedeutung besitzt und Alkylen von 1 bis 6 C-Atomen oder Phenylen ist, das durch 1 oder 2 Sulfo-Gruppen substituiert sein kann.

16. Farbstoff nach mindestens einem der Ansprüche 1 bis 15, dadurch gekennzeichnet, daß Z¹, Z² oder Z^{o} ein Rest der allgemeinen Formel (11b), (11c), (11f) oder (11g) 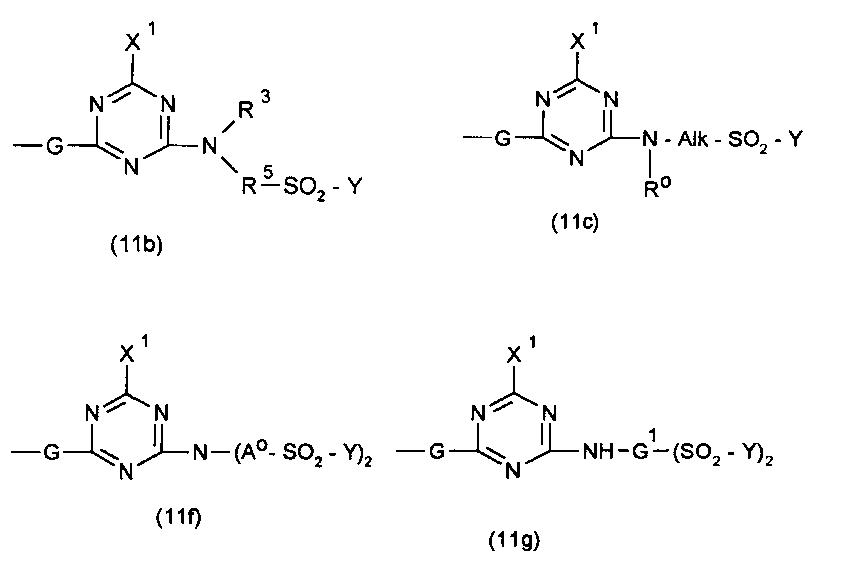 ist, in welchen bedeuten:
R^{o} ist Wasserstoff, Alkyl von 1 bis 4 C-Atomen, Phenyl oder durch 1 oder 2 Substituenten aus der Gruppe Sulfo, Methyl, Methoxy, Ethyl, Ethoxy, Carboxy und Chlor substituiertes Phenyl;
Alk ist Alkylen von 2 bis 4 C-Atomen;
A^{o} ist Alkylen von 1 bis 3 C-Atomen;
X¹ ist Chlor, Fluor, Cyanoamino oder Methoxy;
R³ ist Wasserstoff, Alkyl von 1 bis 4 C-Atomen, das durch Chlor, Sulfo, Carboxy, Sulfato, Phosphato, Hydroxy, Alkanoyloxy von 2 bis 5 C-Atomen, Cyano und Alkoxy von 1 bis 4 C-Atomen substituiert sein kann, oder ist Cycloalkyl mit 5 bis 8 C-Atomen;
R⁵ ist Phenylen, das durch 1 oder 2 Substituenten aus der Gruppe Chlor, Sulfo, Methyl, Ethyl, Methoxy, Ethoxy und Carboxy substituiert sein kann, oder ist Alkylen von 2 bis 6 C-Atomen oder eine Gruppe der allgemeinen Formel ALK-O-ALK , ALK-NH-ALK, Phen-O-ALK, ALK-O-Phen, Phen-NH-ALK, ALK-NH-Phen, Phen-ALK oder ALK-Phen, worin ALK Alkylen von 1 bis 4 C-Atomen bedeutet und gegebenenfalls durch Sulfo, Hydroxy, Sulfato oder Acetyloxy substituiert ist, und Phen Phenylen bedeutet, das durch 1 oder 2 Substituenten aus der Gruppe Methyl, Methoxy, Chlor und Sulfo substituiert sein kann;
Y hat eine der in Anspruch 1 genannten Bedeutungen;
Y¹ hat eine der Bedeutungen von Y oder ist β-Hydroxyethyl;
G¹ ist ein Benzolring, der neben den beiden Gruppen -SO₂-Y mit Y der obengenannten Bedeutung durch 1 oder 2 Substituenten der Gruppe Methyl, Methoxy, Chlor und Sulfo substituiert sein kann, oder ist ein Alkanrest von 2 bis 6 C-Atomen oder ein Benzolrest, der 1 oder 2 Methylengruppen besitzt, an die eine bzw. zwei der Gruppen -SO₂-Y gebunden sind;
G ist eine kovalente Bindung oder eine Gruppe der allgemeinen Formel (12) 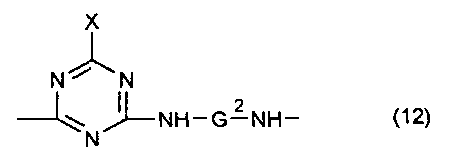 in welcher X die obengenannte Bedeutung besitzt und G² Alkylen von 1 bis 6 C-Atomen oder Phenylen ist, das durch 1 oder 2 Sulfo-Gruppen substituiert sein kann.

17. Farbstoff nach mindestens einem der Ansprüche 1 bis 16, dadurch gekennzeichnet, daß Z¹, Z² oder Z^{o} ein Rest der allgemeinen Formel (11h) 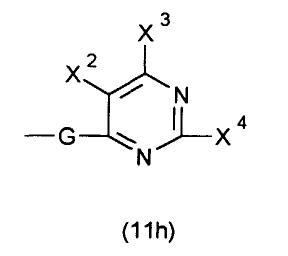 ist, in welchen bedeuten:
X² ist Wasserstoff, Halogen oder Cyano;
X³ ist Wasserstoff, Halogen, Methylsulfonyl oder Hydroxy und
X⁴ ist Wasserstoff, Halogen, Methyl, Methylsulfonyl oder Hydroxy,
wobei mindestens X³ oder X⁴ Halogen oder Methylsulfonyl ist;
G ist eine kovalente Bindung oder eine Gruppe der allgemeinen Formel (12) 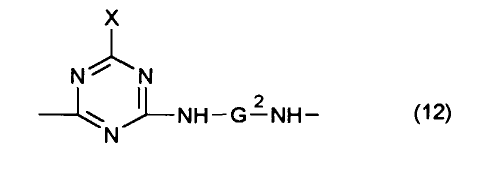 in welcher X die obengenannte Bedeutung besitzt und G² Alkylen von 1 bis 6 C-Atomen oder Phenylen ist, das durch 1 oder 2 Sulfo-Gruppen substituiert sein kann.

18. Verfahren zur Herstellung eines Farbstoffes der in Anspruch 1 genannten und definierten allgemeinen Formel (1), dadurch gekennzeichnet, daß man ein Diisocyanat der allgemeinen Formel (20)
OCN - B - NCO (20)
in welcher B die in Anspruch 1 genannte Bedeutung besitzt, mit der zweifach molaren Menge einer oder zweier Verbindungen der allgemeinen Formel (21)
Z - Fb - N(R)H (21)
in welcher Z eine der in Anspruch 1 genannten Bedeutungen von Z¹ oder Z² besitzt und Fb und R die in Anspruch 1 genannten Bedeutungen haben, umsetzt, wobei beim Einsatz von zwei verschiedenen Verbindungen (21) die Reste Z, Fb und R jeweils unterschiedliche Bedeutungen haben können,
oder daß man ein Diisocyanat der obengenannten und definierten allgemeinen Formel (20) mit der zweifach molaren Menge einer oder zweier Verbindungen der allgemeinen Formel (22)
H - Fb - N(R)H (22)
in welcher Fb und R die in Anspruch 1 genannten Bedeutungen haben, umsetzt, wobei beim Einsatz von zwei verschiedenen Verbindungen (22) die Reste Fb und R zueinander gleiche oder voneinander verschiedene Bedeutungen besitzen können, und die so gebildete Verbindung der allgemeinen Formel (23) 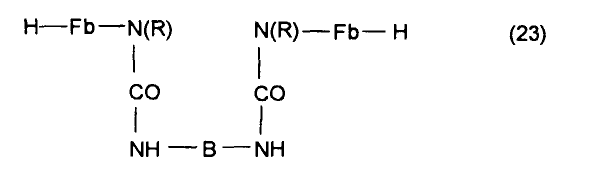 in welcher Fb, R und B die in Anspruch 1 genannten Bedeutungen haben, mit der zweifach molaren Menge einer oder zweier Verbindungen der allgemeinen Formel (24)
Hal - Z (24)
in welcher Hal für Halogen steht und Z eine der in Anspruch 1 genannten Bedeutungen von Z¹ oder Z² hat und bevorzugt der Rest einer heterocyclischen faserreaktiven Gruppe ist, umsetzt, wobei beim Einsatz von zwei verschiedenen Verbindungen (24) die Reste Hal und Z jeweils unterschiedliche Bedeutungen haben können,
oder daß man eine Verbindung der allgemeinen Formel (25) 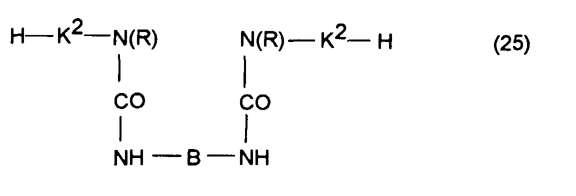 in welcher B und R eine der in Anspruch 1 genannten Bedeutungen haben und K² der Rest einer Kupplungskomponente der Anilin-, Aminonaphthalin-, Diaminobenzol-, Acetessigsäure(aminoaryl)-amid-, 1-(Aminophenyl)-pyrazolon- oder 1-(Aminonaphthyl)-pyrazolon-Reihe ist, wobei R und K² jeweils zueinander gleiche oder verschiedene Bedeutungen haben können, mit der zweifach molaren Menge einer oder zweier Diazokomponenten, die aus den Verbindungen der allgemeinen Formeln Z¹-D¹-NH₂ und Z²-(NR)-D²-NH₂ mit R, Z¹, Z², D¹ und D² der in Anspruch 1 genannten Bedeutungen ausgewählt sind, kuppelt, wobei im Falle des Einsatzes zweier Diazokomponenten diese jeweils zueinander gleiche oder verschiedene Bedeutungen besitzen können,
oder daß man eine Verbindung der allgemeinen Formel (26) 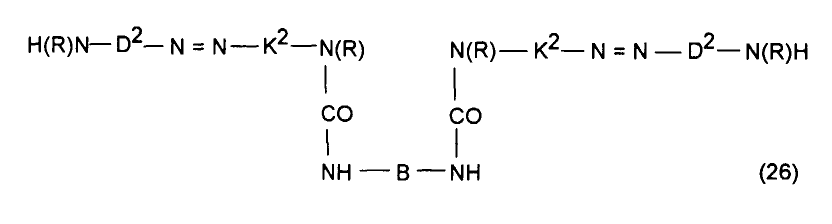 in welcher K², R, B und D² die in Anspruch 1 genannten Bedeutungen haben, mit der zweifach molaren Menge einer oder zweier Verbindungen der obengenannten und definierten allgemeinen Formel (24) umsetzt, oder daß man eine Verbindung der allgemeinen Formel (27) 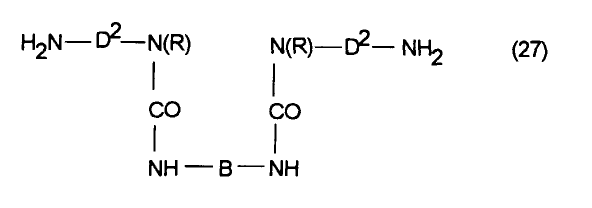 in welcher B, R und D² die in Anspruch 1 genannten Bedeutungen haben, wobei D² und R jeweils eine gleiche oder verschiedene Bedeutung haben können, diazotiert und mit der zweifach molaren Menge einer oder zweier Kupplungskomponenten, die aus den Verbindungen der allgemeinen Formeln Z¹-K¹-H und Z²-N(R)-K²-K-H ausgewählt sind, worin R, Z¹, Z², K¹ und K² die in Anspruch 1 genannten Bedeutungen haben und im Falle des Einsatzes zweier solcher Kupplungskomponenten jeweils zueinander gleiche oder verschiedene Bedeutungen besitzen können, kuppelt,
oder daß man eine Verbindung der allgemeinen Formel (28) 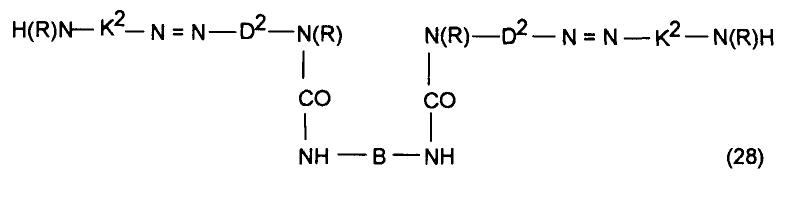 mit B, R, D² und K² der in Anspruch 1 genannten Bedeutungen mit der zweifach molaren Menge einer oder zweier Verbindungen der oben genannten und definierten allgemeinen Formel (24) umsetzt.

19. Verwendung einer Monoazoverbindung von Anspruch 1 zum Färben (einschließlich Bedrucken) von hydroxy- und/oder carbonamidgruppenhaltigem Material, insbesondere Fasermaterial.

20. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff eine Monoazoverbindung von Anspruch 1 einsetzt.
